(19) **Europäisches Patentamt / European Patent Office / Office européen des brevets**

(11) **EP 4 072 862 B1**

(12) **EUROPEAN PATENT SPECIFICATION**

(45) Date of publication and mention
of the grant of the patent:
**13.08.2025 Bulletin 2025/33**

(21) Application number: **20841788.1**

(22) Date of filing: **11.12.2020**

(51) International Patent Classification (IPC):
*B41M 5/24* (2006.01)    *B41M 5/26* (2006.01)
*B65D 1/02* (2006.01)

(52) Cooperative Patent Classification (CPC):
**B41M 5/24; B41M 5/262; B41M 5/267;**
**B65D 1/0261;** B65D 2203/00; Y02W 90/10

(86) International application number:
**PCT/JP2020/046425**

(87) International publication number:
**WO 2021/117899 (17.06.2021 Gazette 2021/24)**

(54) **SUBSTRATE, CONTAINER, PRODUCT, AND PRODUCTION METHOD**

SUBSTRAT, BEHÄLTER, PRODUKT UND HERSTELLUNGSVERFAHREN

SUBSTRAT, RÉCIPIENT, PRODUIT ET PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2019  JP 2019225898
01.05.2020  JP 2020081469
09.07.2020  JP 2020118779
28.09.2020  JP 2020162355**

(43) Date of publication of application:
**19.10.2022  Bulletin 2022/42**

(73) Proprietor: **Ricoh Company, Ltd.**
**Tokyo 143-8555 (JP)**

(72) Inventors:
• **HIRAYAMA, Rie**
**Tokyo 143-8555 (JP)**
• **IMAI, Shigeaki**
**Tokyo 143-8555 (JP)**
• **TACHIBANA, Hiroto**
**Tokyo 143-8555 (JP)**
• **ARAI, Nobuyuki**
**Tokyo 143-8555 (JP)**

• **ICHIKAWA, Yoichi**
**Tokyo 143-8555 (JP)**
• **NAKAYAMA, Hirotoshi**
**Tokyo 143-8555 (JP)**
• **KOBASHIGAWA, Shohta**
**Tokyo 143-8555 (JP)**
• **TAMURA, Asato**
**Tokyo 143-8555 (JP)**
• **NISHIO, Takuei**
**Tokyo 143-8555 (JP)**
• **FUJITA, Kazuhiro**
**Tokyo 143-8555 (JP)**
• **IWATA, Muneaki**
**Tokyo 143-8555 (JP)**

(74) Representative: **Marks & Clerk LLP**
**15 Fetter Lane**
**London EC4A 1BW (GB)**

(56) References cited:
WO-A1-2013/002987    WO-A1-2013/045077
US-A1- 2013 001 237    US-A1- 2013 140 746
US-A1- 2015 352 772    US-A1- 2019 056 322

**Description**

[Technical Field]

The present disclosure relates to a substrate, a container, a product, a production method, and a production apparatus.

[Background Art]

Conventionally, containers such as polyethylene terephthalate (PET) bottles are attached with a label indicating a name, ingredients, the expiration date, a barcode, a QR code (registered trademark), a recycling mark, a logomark, and the like. Also, attempts have also been made to enhance the individuality and competitiveness of products by displaying designs and pictures that appeal to consumers on labels.

In recent years, marine pollution caused by plastic waste has been reported, and the movement to eliminate pollution caused by plastic waste is becoming active worldwide, and the demand for circular recycling of containers is increasing. In this case, circular recycling of containers means that recycling service companies process used containers, collected by separate collection, into flakes, which are used as raw material for containers, and then reproduce containers from the flakes.

In order to smoothly promote such circular recycling, it is preferable to strictly separate containers from labels in separate collection, but it takes too much time and effort to remove the labels from the containers for separate collection, and such a burden in removal of labels has been one of the obstacles in stringently carrying out separate collection.

For example, PTL 1 discloses a technique for providing a labelless container by directly forming a pattern for displaying information such as a name, ingredients, and the like on the surface of the container with a carbon dioxide gas laser.

[Citation List]

[Patent Literature]

[PTL 1] Japanese Unexamined Patent Application Publication No. 2011-011819

WO 2013/002987 A1 discloses a glass container that has a multiplicity of three-dimensional discernible glass fracture patterns disposed between the inside and outside surfaces of the container wall.

US 2015/352772 A1 discloses a method for producing a marked container, including the following steps: a first step of heating, beyond a glass transition temperature, at least one shape-changing portion of a thermoplastic material wall of a perform; and a second step of forming the container by injecting a pressurized fluid into the body of the preform such as to change the shape of the heated portion of the wall by stretching it; and a step for marking the preform during which the mark is provided on the shape-changing portion of the wall such that the mark is stretched at the same time as the wall, during the second step after forming. WO 2013/045077 A1 discloses a method for producing at least one structure by way of laser action on at least one wall part of a container wall of a product, preferably a plastics container product.

US 2019/056322 A1 discloses a method for the transformation of material (e.g. plastic material) into an optically modulating state via laser radiation.

[Summary of Invention]

[Technical Problem]

However, in the technique of PTL 1, when an image, a figure, and the like are formed on the container, the visibility of the image, the figure, and the like may decrease.

It is an object of the present invention to provide a substrate on which images, figures, and the like are formed with a high visibility.

[Solution to Problem]

The invention is set out in the appended set of claims. According to the present invention, provided is a substrate having a first pattern formed on a surface or in an inside of the substrate, or on the surface and in the inside of the substrate, wherein the first pattern is constituted by an aggregate of second patterns.

[Advantageous Effects of Invention]

According to the present invention, a substrate on which images, figures, and the like are formed with a high visibility can be provided.

[Brief Description of Drawings]

[Fig. 1]

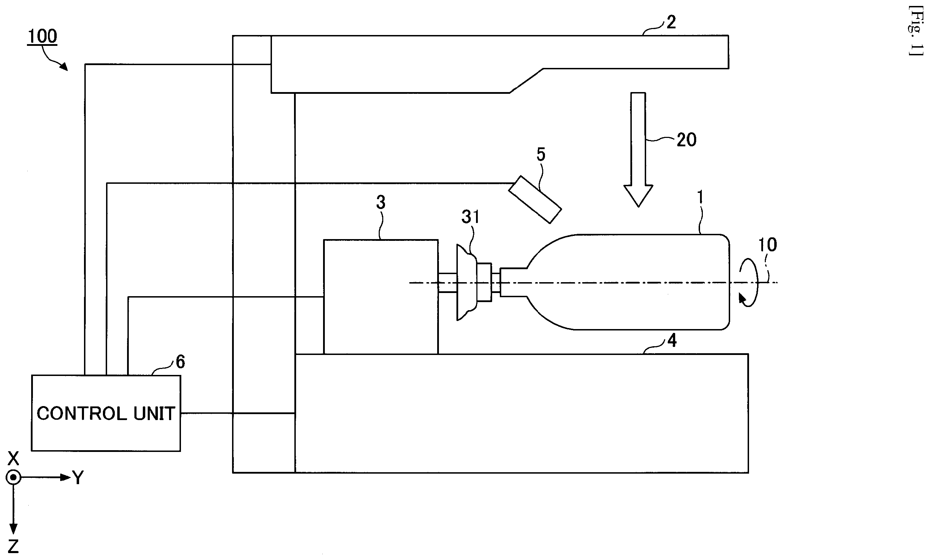

Fig. 1 is a drawing illustrating a configuration example of a production apparatus for producing a container according to an embodiment.
[Fig. 2A]

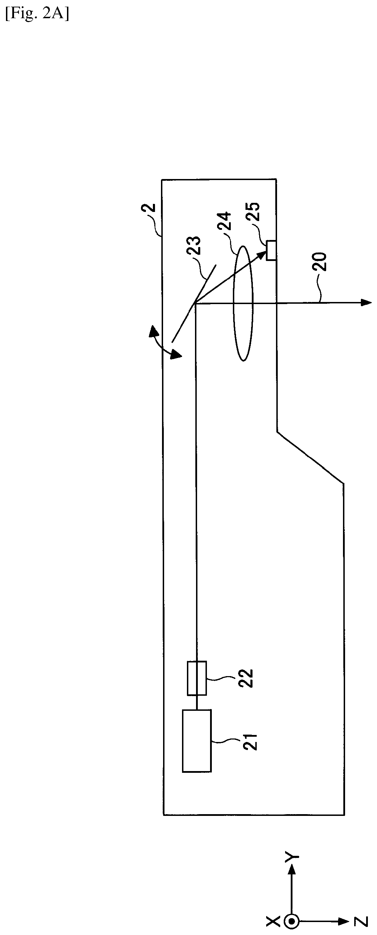

Fig. 2A is a drawing illustrating a configuration example of a laser emission unit according to the embodiment.
[Fig. 2B]

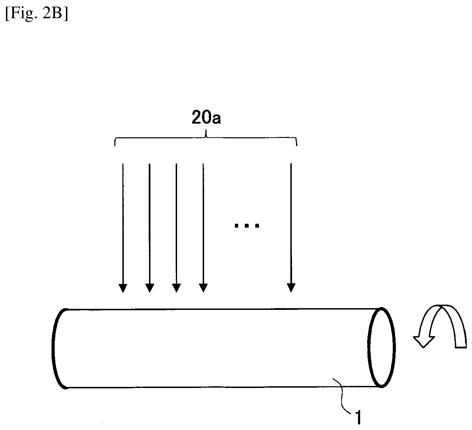

Fig. 2B is a drawing for explaining emission of laser beams from a processing laser beam array.
[Fig. 3]

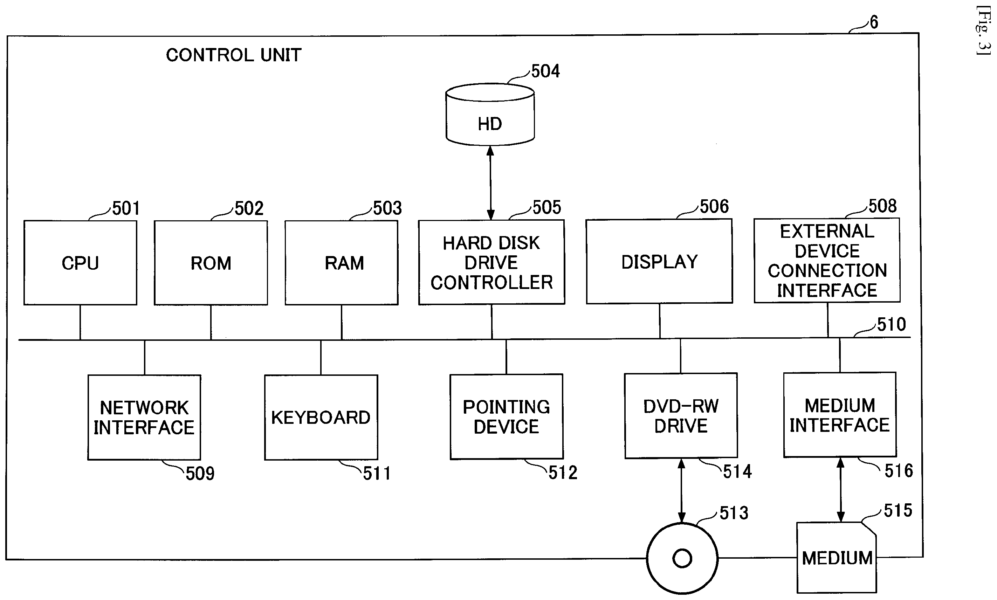

Fig. 3 is a block diagram illustrating a hardware configuration example of a control unit according to the embodiment.
[Fig. 4]

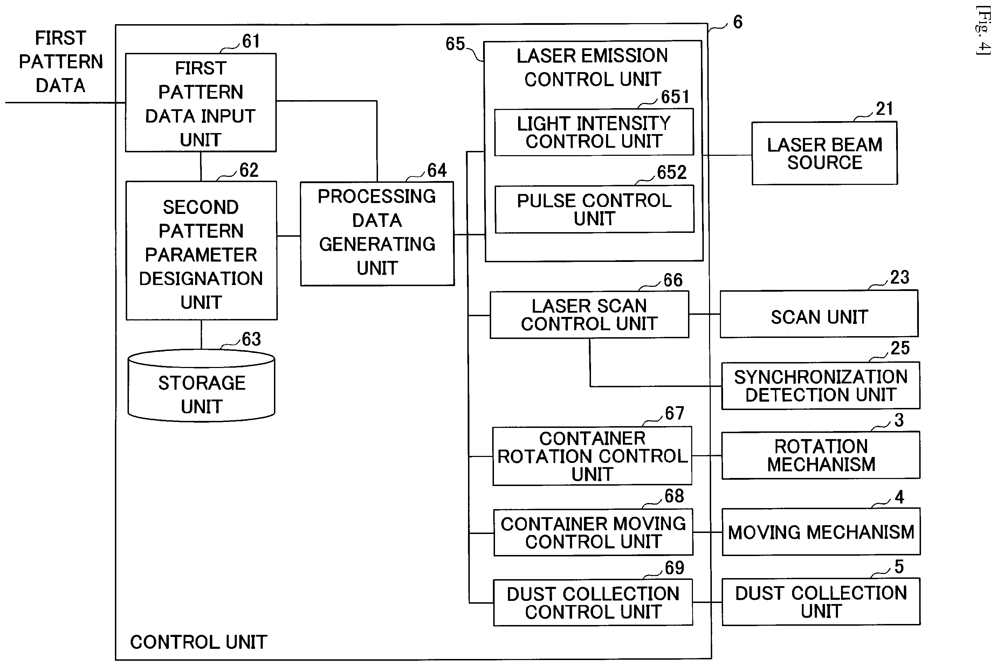

Fig. 4 is a block diagram illustrating a functional configuration example of the control unit according to the embodiment.
[Fig. 5]

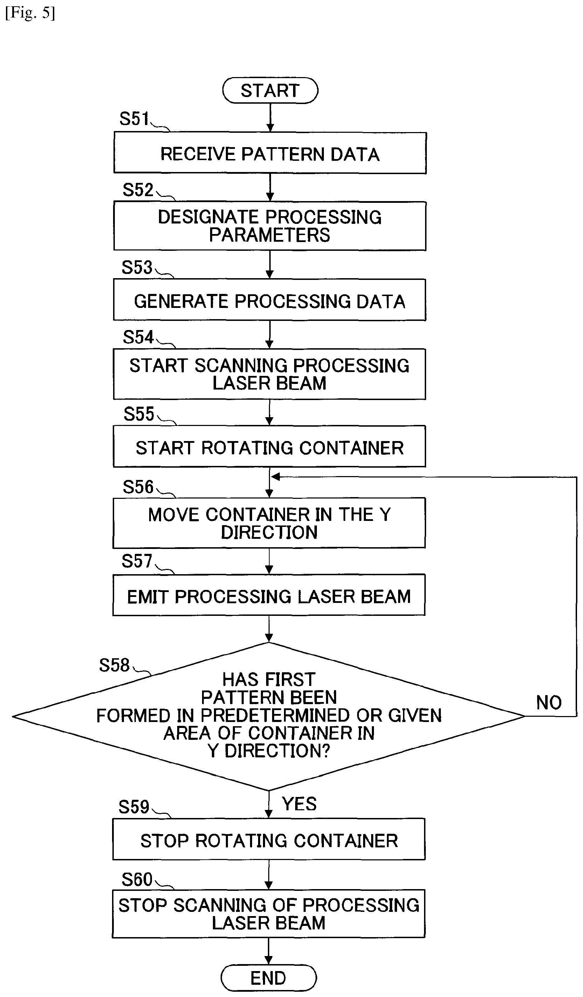

Fig. 5 is a flowchart of an example of a production method according to the embodiment.
[Fig. 6]

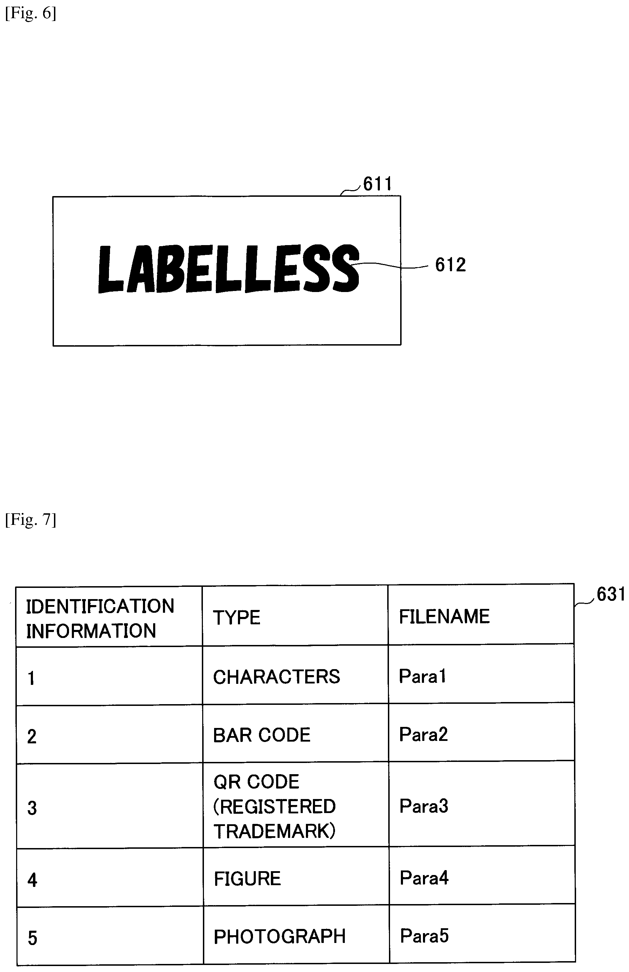

Fig. 6 is a drawing illustrating an example of pattern data.
[Fig. 7]
Fig. 7 is a table of a correspondence between types of first patterns and processing parameters.
[Fig. 8]

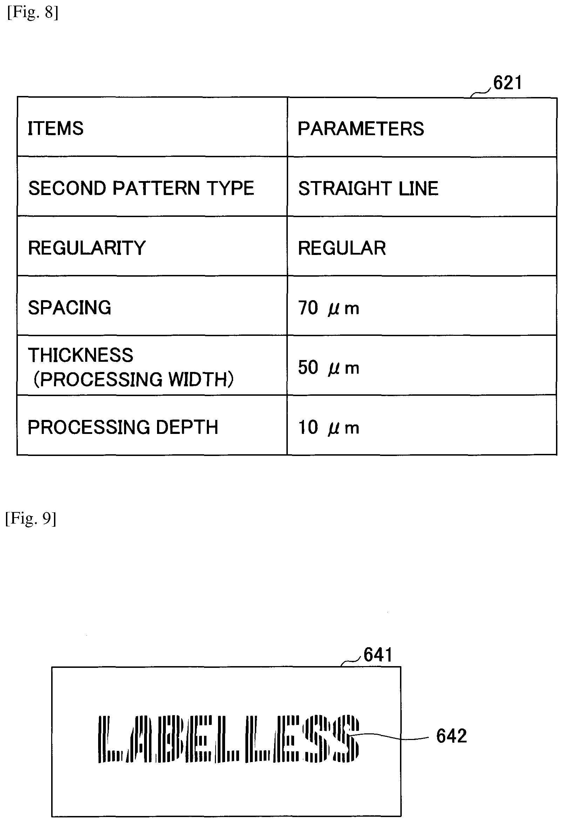

Fig. 8 is a table showing an example of processing parameters.
[Fig. 9]
Fig. 9 is a drawing illustrating an example of processing data.
[Fig. 10A]

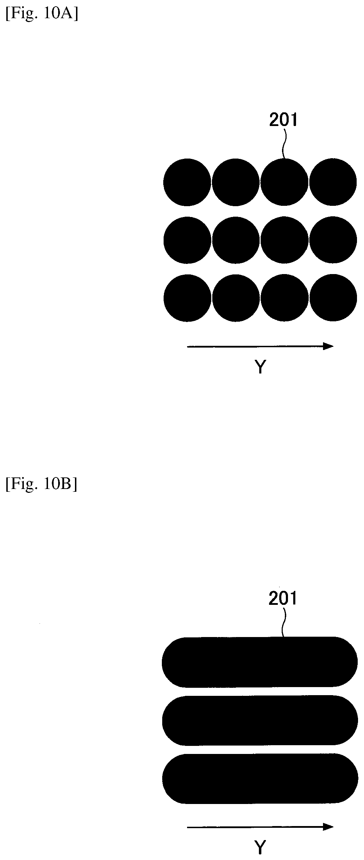

Fig. 10A is a drawing illustrating an example of emission of processing laser beams, where there are gaps between beam spots in a direction perpendicular to the Y direction.
[Fig. 10B]
Fig. 10B is a drawing illustrating an example of emission of processing laser beams, where there are gaps between beams in the direction perpendicular to the Y direction, and where fast scanning is performed.
[Fig. 10C]

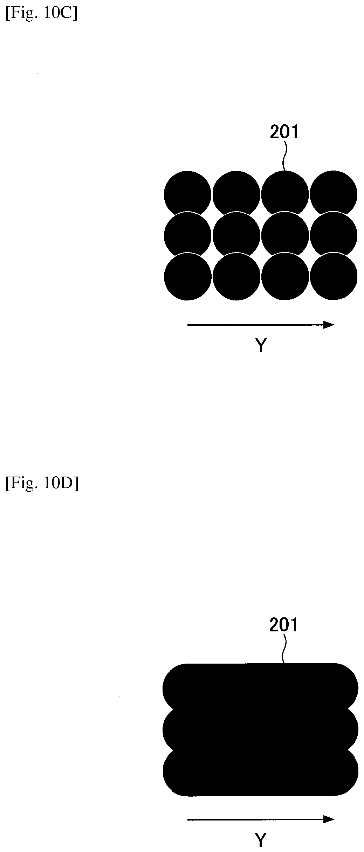

Fig. 10C is a drawing illustrating an example of emission of processing laser beams, where beams overlap with each other in the direction perpendicular to the Y direction.
[Fig. 10D]
Fig. 10D is a drawing illustrating an example of emission of processing laser beams, where beams overlap with each other in the direction perpendicular to the Y direction, and where fast scanning is performed.
[fig.10E]Fig. 10E is a drawing illustrating an example of emission of processing laser beams, where beams are in contact with each other in the direction perpendicular to the Y direction.
[fig.10F]Fig. 10F is a drawing illustrating an example of emission of processing laser beams, where beams are in contact with each other in the direction perpendicular to the Y direction, and where fast scanning is performed.
[fig.11A]Fig. 11A is a drawing illustrating an example of change in the property of a substrate of a container, where the shape of the substrate has changed due to evaporation.
[fig.11B]Fig. 11B is a drawing illustrating an example of change in the property of a substrate of a container, where the shape of the substrate has changed due to melting.
[fig.11C]Fig. 11C is a drawing illustrating an example of change in the property of a substrate of a container, where the crystallization state of the substrate has changed.
[fig.11D]Fig. 11D is a drawing illustrating an example of change in the property of a substrate of a container, where the foaming state of the substrate has changed.
[fig.12]Fig. 12 is a drawing illustrating an example of a container according to the first embodiment.
[fig.13]Fig. 13 is a drawing illustrating an example of relationship between a first pattern and second patterns.
[fig.14]Fig. 14 is a cross sectional view taken along line A-A of Fig. 13.
[fig.15A]Fig. 15A is an example of processing depth, where a processing depth is smaller than a non-processed portion depth.

[fig.15B]Fig. 15B is an example of processing depth, where the processing depth is larger than the non-processed portion depth.

[fig.15C]Fig. 15C is an example of processing depth, where the processing depth and the non-processed portion depth are about the same.

[fig.15D]Fig. 15D is an example of processing depth, where the processing depth and the non-processed portion depth are changed.

[fig.16]Fig. 16 is a drawing illustrating an example of a product according to the embodiment.

[fig.17]Fig. 17 is a drawing for explaining an example of a gray level expression with second patterns.

[fig.18A]Fig. 18A is a drawing illustrating another example of gray level expression with second patterns, where processing data of the second patterns does not have regularity.

[fig.18B]Fig. 18B is a cross sectional view illustrating second patterns formed by changes in the crystallization state.

[fig.18C]Fig. 18C is a plan view illustrating second patterns formed by changes in the crystallization state.

[fig.19]Fig. 19 is a drawing illustrating an example of a container according to the second embodiment.

[fig.20]Fig. 20 is a drawing for explaining an example of a container according to the third embodiment.

[fig.21]Fig. 21 is a drawing illustrating the container as seen from the side of a mouth portion of the container according to the third embodiment.

[fig.22]Fig. 22 is a drawing illustrating an example of a configuration of a production apparatus for producing the container according to the third embodiment.

[fig.23]Fig. 23 is a drawing illustrating another example of a container according to the third embodiment.

[fig.24]Fig. 24 is a drawing illustrating the container according to the third embodiment as seen from the side of the bottom portion.

[fig.25A]Fig. 25A is a drawing illustrating a barcode according to a comparative example, where the barcode is seen from the side of the mouth portion.

[fig.25B]Fig. 25B is a drawing illustrating a barcode according to a fourth embodiment.

[fig.25C]Fig. 25C is a drawing illustrating the barcode of Fig. 25B, where the barcode is seen from the side of the mouth portion.

[fig.26]Fig. 26 is a drawing illustrating an example of a configuration of a production apparatus according to a first modified example.

[fig.27]Fig. 27 is a drawing illustrating an example of a configuration of a production apparatus according to a second modified example.

[fig.28]Fig. 28 is a drawing illustrating an example of a container according to a third modified example.

[fig.29A]Fig. 29A is a drawing illustrating an example of a container placed in front of a white background or a container containing a white liquid.

[fig.29B]Fig. 29B is a drawing illustrating another example of a container placed in front of a white background or a container containing a white liquid.

[fig.30]Fig. 30 is a drawing illustrating an example of a configuration for emitting laser beams of different wavelengths depending on the location.

[fig.31A]Fig. 31A is a micrograph of a denaturation mark taken with a scanning electron microscope (SEM), and the micrograph of Fig. 31A is a perspective view as seen from above.

[fig.31B]Fig. 31B is a micrograph of a denaturation mark taken with the SEM, and the micrograph of Fig. 31B is a perspective view taken along line D-D of Fig. 31A as seen in the direction indicated by the arrows D.

[fig.32]Fig. 32 is a drawing illustrating an example of a temperature control with a production apparatus according to a fifth embodiment.

[fig.33]Fig. 33 is a block diagram illustrating an example of a functional configuration of a control unit according to the fifth embodiment.

[fig.34]Fig. 34 is a drawing illustrating an example of a pattern formed on a seal member.

[fig.35]Fig. 35 is a drawing illustrating an example of a configuration for emitting multiple laser beams.

[fig.36A]Fig. 36A is a drawing illustrating an example of multiple laser beams arranged in one row.

[fig.36B]Fig. 36B is a drawing illustrating an example of multiple laser beams arranged in two rows.

[fig.36C]Fig. 36C is a drawing illustrating an example of multiple laser beams arranged two-dimensionally in a lattice form.

[fig.36D]Fig. 36D is a drawing illustrating an example of multiple laser beams arranged two-dimensionally in a grid form.

[fig.37]Fig. 37 is a drawing illustrating an example of a predetermined shape according to a sixth embodiment.

[fig.38A]Fig. 38A is a plan view for explaining an example of configuration of a dot portion.

[fig.38B]Fig. 38B is a cross-sectional view taken along a long dashed short dashed line C-C as seen in the direction indicated by the arrows C of Fig. 38A.

[fig.39A]Fig. 39A is a micrograph taken with a scanning electron microscope (SEM) showing a dot portion in a perspective view as seen from upper side.

[fig.39B]Fig. 39B is a SEM micrograph in a cross-sectional view taken along a long dashed short dashed line D-D as seen in the direction indicated by the arrows D of Fig. 39A.

[fig.40]Fig. 40 is a cross sectional view illustrating an example of propagation of light incident on a container.

[fig.41A]Fig. 41A is a drawing illustrating an example of configuration of measurement of a light transmittance in a pattern area.

[fig.41B]Fig. 41B is a drawing illustrating an example of configuration of measurement of a light transmittance in a non-pattern area.

[fig.42A]Fig. 42A is a drawing illustrating an example of configuration of measurement of a light reflectance in a pattern area.

[fig.42B]Fig. 42B is a drawing illustrating an example of configuration of measurement of a light reflectance in a non-pattern area.

[fig.43]Fig. 43 is a cross sectional view for explaining an example of configuration of a dot portion according to a first modified embodiment of the sixth embodiment.

[fig.44]Fig. 44 is a cross sectional view for explaining an example of configuration of a dot portion according to a second modified embodiment of the sixth embodiment.

[fig.45]Fig. 45 is a cross sectional view for explaining an example of configuration of a dot portion according to a third modified embodiment of the sixth embodiment.

[fig.46]Fig. 46 is a cross sectional view for explaining an example of configuration of a dot portion according to a fourth modified embodiment of the sixth embodiment.

[fig.47]Fig. 47 is a cross sectional view for explaining an example of configuration of a dot portion according to a fifth modified embodiment of the sixth embodiment.

[fig.48]Fig. 48 is a cross sectional view for explaining an example of configuration of a dot portion according to a sixth modified embodiment of the sixth embodiment.

[fig.49]Fig. 49 is a cross sectional view for explaining an example of configuration of a dot portion according to a seventh modified embodiment of the sixth embodiment.

[fig.50]Fig. 50 is a cross sectional view for explaining an example of configuration of a dot portion according to an eighth modified embodiment of the sixth embodiment.

[fig.51]Fig. 51 is a cross sectional view for explaining an example of configuration of a dot portion according to a ninth modified embodiment of the sixth embodiment.

[fig.52A]Fig. 52A is a plan view for explaining an example of configuration of a dot portion according to a tenth modified embodiment of the sixth embodiment.

[fig.52B]Fig. 52B is a cross sectional view taken along a long dashed short dashed line E-E as seen in the direction indicated by the arrows E of Fig. 52A.

[fig.53]Fig. 53 is a cross sectional view for explaining an example of configuration of a dot portion according to an eleventh modified embodiment of the sixth embodiment.

[fig.54A]Fig. 54A is a plan view for explaining an example of configuration of a dot portion according to a twelfth modified embodiment of the sixth embodiment.

[fig.54B]Fig. 54B is a cross sectional view taken along a long dashed short dashed line F-F as seen in the direction indicated by the arrows F of Fig. 54A.

[fig.55]Fig. 55 is a plan view for explaining an example of configuration of a dot portion 410n according to a thirteenth modified embodiment of the sixth embodiment.

[fig.56]Fig. 56 is a plan view for explaining an example of configuration of a dot portion 410p according to a fourteenth modified embodiment of the sixth embodiment.

[fig.57A]Fig. 57A is a plan view for explaining an example of configuration of a dot portion 410q according to a fifteenth modified embodiment of the sixth embodiment.

[fig.57B]Fig. 57B is a cross sectional view taken along a long dashed short dashed line G-G of Fig. 57A.

[fig.58]Fig. 58 illustrates micrographs of cross sections of the substrate taken with a scanning electron microscope (SEM).

[fig.59]Fig. 59 illustrates micrographs of cross sections of a portion of the substrate formed with a recess.

## Description of Embodiments

Hereinafter, embodiments for carrying out the present invention are described with reference to the drawings. In the drawings, the same constituent elements may be denoted with the same reference numerals and duplicate explanations thereabout may be omitted.

A container according to the embodiments is a container such as a polyethylene terephthalate (PET) bottle formed with a first pattern on a surface or in an inside of a substrate thereof, or on the surface and in the inside of the substrate. The first pattern includes characters, a code such as a barcode, figures, and the like to indicate information such as a name, an identification number, a manufacturer, the date and time of manufacture, and the like of a container or a content such as a beverage contained in the container. The substrate means a portion, such as resin or glass, constituting a container.

In the embodiments, the first pattern is constituted by an aggregate of second patterns. In this case, an aggregate is a set of multiple elements.

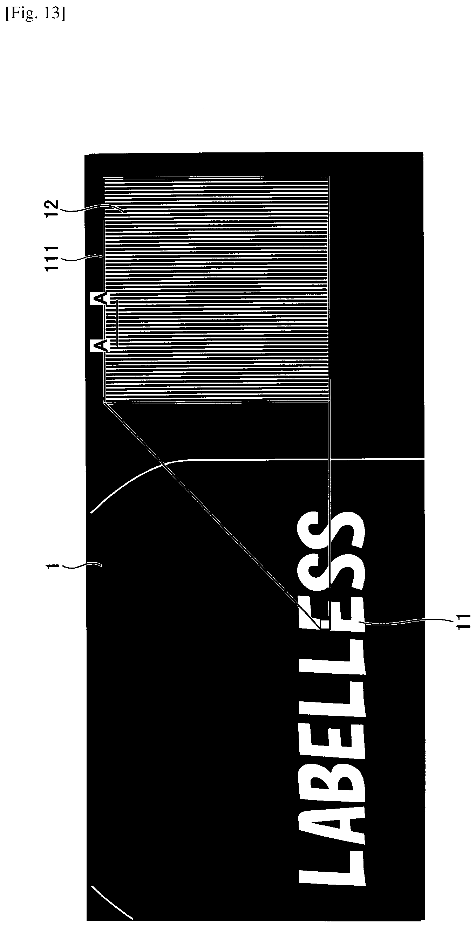

For example, a figure representing a line (an example of the first pattern) is constituted by multiple lines thinner than the line represented by the figure, or is constituted by points having a diameter smaller than the thickness of the line represented by the line. Each of these thinner lines and smaller dots is an example of a second pattern (see Fig. 13). In other words, the first pattern is constructed by embedding an aggregate of second patterns that are smaller than the first pattern.

With the first pattern constituted by the aggregate of second patterns, the diffusive property of the first pattern for diffusing light in the surroundings of the container (hereinafter referred to as ambient light) increases, and accordingly, the contrast of the first pattern improves. Therefore, even if the first pattern is a pattern including a large amount of information including thin lines, characters, images, figures, and the like, the first pattern can be seen clearly with a high contrast.

Hereinafter, a container according to an embodiment and a production method for producing a container with a production apparatus are explained.

<First embodiment>

<Configuration example of production apparatus 100>

First, a configuration of a production apparatus 100 for producing a container 1 according to the first embodiment is explained. Fig. 1 is a drawing illustrating an example of a configuration of the production apparatus 100. The production apparatus 100 is an apparatus for forming the first pattern constituted by the aggregate of second patterns on the surface or in the inside of the substrate, or on the surface and in the inside of the substrate, by changing a property of the substrate constituting the container. In this case, the property of the substrate means a property or a state of the substrate.

As illustrated in Fig. 1, the production apparatus 100 includes a laser emission unit 2, a rotation mechanism 3, a holding unit 31, a moving mechanism 4, a dust collection unit 5, and a control unit 6. The production apparatus 100 rotatably holds the container 1, i.e., a cylindrical vessel, about a cylinder axis 10 of the container 1 via a holding unit 31. Then, the first pattern constituted by the aggregate of second patterns is formed on the container 1 by changing a property of the substrate constituting the container 1 by emitting laser beam from the laser emission unit 2 to the container 1. In this case, the cylinder axis 10 is an example of an "axis". Hereinafter, for the sake of simplifying the explanation, the first pattern constituted by the aggregate of second patterns may be simply referred to as the first pattern as appropriate.

The laser emission unit 2, i.e., an example of an emission unit, scans a laser beam emitted from the laser beam source in the Y direction of Fig. 1, and emits a processing laser beam 20, i.e., an example of a laser beam, to the container 1 arranged in the positive Z direction. The laser emission unit 2 is explained later in detail with reference to Fig. 2.

The rotation mechanism 3, i.e., an example of a rotation unit, holds the container 1 via the holding unit 31. The holding unit 31 is a coupling member connected to a motor shaft of a motor (not illustrated) serving as a driving unit provided in the rotation mechanism 3, and holds the container 1 by having one end of the holding unit 31 inserted into a mouth portion of the container 1. The container 1 held by the holding unit 31 is rotated about the cylinder axis 10 by causing the holding unit 31 to rotate according to the rotation of the motor shaft.

The moving mechanism 4, i.e., an example of a moving unit, is a linear stage having a table, and the rotation mechanism 3 is placed on the table of the moving mechanism 4. The moving mechanism 4 moves the table back and forth in the Y direction to move the rotation mechanism 3, the holding unit 31, and the container 1 integrally in the Y direction.

The dust collection unit 5 is an air suction device arranged in proximity to a portion of the container 1 where the processing laser beam 20 is emitted. The dust collection unit 5 sucks air to collect plume and dust that occur when the first pattern is formed with an emission of the processing laser beam 20, so that the dust collection unit 5 inhibits or prevents contamination of the production apparatus 100, the container 1, and a portion therearound caused by the plume and dust.

The control unit 6 is electrically connected to the laser beam source 21, the scan unit 23, the rotation mechanism 3, the moving mechanism 4, and the dust collection unit 5 via cables and the like, and controls operations thereof by outputting control signals.

The production apparatus 100 causes the laser emission unit 2 to emit the processing laser beam 20 scanned in the Y direction to the container 1, while the container 1 is rotated with the rotation mechanism 3 under the control of the control unit 6. Then, the first pattern is two-dimensionally formed on the surface or in the inside of the substrate of the container 1, or on the surface and in the inside of the substrate of the container 1.

In this case, the scan area of the processing laser beam 20 emitted by the laser emission unit 2 may be limited in the Y direction. Therefore, in order to form the first pattern over a range larger than the scan area, the production apparatus 100 causes the moving mechanism 4 to move the container 1 in the Y direction to shift the emission position of the processing laser beam 20 on the container 1 in the Y direction. Thereafter, while the rotation mechanism 3 rotates the container 1, the laser emission unit 2 scans the processing laser beam 20 in the Y direction again, so that the first pattern is formed on the surface or in the inside of the substrate of the container 1, or on the surface and in the inside of the substrate of the container 1. As a result, the first pattern can be formed on a larger area of the container 1.

<Configuration example of laser emission unit 2>

Next, a configuration of the laser emission unit 2 is explained. Fig. 2A is a drawing illustrating an example of a configuration of the laser emission unit 2. As illustrated in Fig. 2A, the laser emission unit 2 includes a laser beam source 21, a beam expander 22, a scan unit 23, a scan lens 24, and a synchronization detection unit 25.

The laser beam source 21 is a pulse laser emitting laser beam. The laser beam source 21 emits a laser beam at an output level (i.e., a light intensity) suitable for changing a property of the surface or in the inside of the substrate of the container 1 irradiated with the laser beam, or the property of the surface and the inside of the substrate of the container 1 irradiated with the laser beam.

The laser beam source 21 can control the ON and OFF states, the emission frequency, the light intensity, and the like of the emission of the laser beam. For example, the laser beam source 21 may be configured to output a laser beam with a wavelength of 532 nm, a pulse width of 16 picoseconds, and an average output of 4.9 W. The diameter of the laser beam in an area of the container 1 in which the property of the substrate is changed is preferably 1 $\mu$m or more and 200 $\mu$m or less.

The laser beam source 21 may be constituted by a single laser beam source, or may be constituted by multiple laser beam sources. When multiple laser beam sources are used, the laser beam source 21 may be configured to be able to independently control the ON and OFF states, the emission frequency, the light intensity, and the like of the emission of each of the laser beams.

The diameter of the laser beam of parallel light emitted from the laser beam source 21 is increased by the beam expander 22, and the laser beam is incident on the scan unit 23.

The scan unit 23 includes a scan mirror for changing the reflection angle with a driving unit such as a motor. With the reflection angle being changed by the scan mirror, the incident laser beam is scanned in the Y direction. The scan mirror may be achieved with a Galvano mirror, a polygon mirror, a MEMS (Micro Electro Mechanical System) mirror, and the like.

In the embodiment, for example, the scan unit 23 scans laser beam in one dimension in the Y direction, but the present invention is not limited thereto. The scan unit 23 may scan the laser beam in two dimensions in the X and Y directions using a scan mirror that changes the reflection angle in two orthogonal directions.

However, in a case where a laser beam is emitted to the surface of the container 1 in a cylindrical shape, a one-dimensional scan is preferable, because a two-dimensional scan in the X and Y directions will change the beam spot diameter on the surface of the container 1 according to the scan in the X direction.

The laser beam scanned by the scan unit 23 is emitted as the processing laser beam 20 onto the surface or into the inside of the substrate of the container 1, or onto the surface and into inside of the substrate of the container 1.

The scan lens 24 is a f$\theta$ lens for keeping a constant scan speed of the processing laser beam 20 scanned by the scan unit 23 and condensing the processing laser beam 20 on a predetermined or given position on the surface or in the inside of the substrate of the container 1, or on the surface and in the inside of the substrate of the container 1. In an area of the container 1 where the property of the substrate is changed, the scan lens 24 and the container 1 are preferably arranged to minimize the beam spot diameter of the processing laser beam 20. The scan lens 24 may be constituted by a combination of a plurality of lenses.

The synchronization detection unit 25 outputs a synchronization detection signal used to synchronize the scan of the processing laser beam 20 and the rotation of the container 1 by the rotation mechanism 3. The synchronization detection unit 25 includes a photodiode for outputting an electric signal according to the received light intensity, and outputs an electric signal from the photodiode to the control unit 6 as a synchronization detection signal.

For example, although Fig. 2A illustrates the configuration for scanning the processing laser beam, for example, many processing laser beams may be provided in a range of a printing width to constitute a processing laser beam array, and the container 1 may be scanned in one direction with the many laser beams by rotating the container 1. Fig. 2B is a drawing illustrating such an example, in which a processing laser beam array constituted by multiple parallel laser beams is emitted to the container 1.

<Hardware configuration example of control unit 6>

Next, a hardware configuration of the control unit 6 including the production apparatus 100 is explained. Fig. 3 is a block diagram illustrating an example of a hardware configuration of the control unit 6. The control unit 6 is constituted by a computer.

As illustrated in Fig. 3, the control unit 6 includes a central processing unit (CPU) 501, read only memory (ROM) 502, random access memory (RAM) 503, a hard disk (HD) 504, a hard disk drive (HDD) controller 505, and a display 506. The control unit 6 includes an external device connection interface 508, a network interface 509, a data bus 510, a keyboard 511, a pointing device 512, a digital versatile disk rewritable (DVD-RW) drive 514, and a medium interface 516.

Among them, the CPU 501 is a processor that controls the entire operation of the control unit 6. The ROM 502 is memory for storing a program, such as an initial program loader (IPL), used to load an operating system.

The RAM 503 is memory used as a work area for the CPU 501. The HD 504 is a storage storing various kinds of data such as programs. The HDD controller 505 controls reading or writing of various kinds of data from or to the HD 504 according to the control of the CPU 501.

The display 506 displays various kinds of information such as the cursor, menus, windows, characters, images, and the like. The external device connection interface 508 is an interface for connecting various kinds of external devices. In this case, the external device includes the laser beam source 21, the scan unit 23, the synchronization detection unit 25, the rotation mechanism 3, the moving mechanism 4, the dust collection unit 5, and the like. In addition, USB (Universal Serial Bus) memory, printers, and the like may be connected.

The network interface 509 is an interface for performing data communication using a communication network. The bus line 510 is an address bus, a data bus, and the like for electrically connecting the constituent elements such as the CPU 501 illustrated in Fig. 3.

The keyboard 511 is input means equipped with multiple keys for inputting characters, numerical values, various instructions, and the like. The pointing device 512 is input means for selecting and executing various kinds of instructions, selecting a processing target, moving a cursor, and the like.

The DVD-RW drive 514 controls reading or writing of various kinds of data to the DVD-RW 513, i.e., an example of a removable recording medium. Instead of DVD-RW, DVD-R and the like may be used. The medium interface 516 controls reading or writing (storing) of data from or to the recording medium 515 such as flash memory.

<Functional configuration example of control unit 6>

Next, a functional configuration of the control unit 6 is explained. Fig. 4 is a block diagram illustrating an example of a functional configuration of the control unit 6.

As illustrated in Fig. 4, the control unit 6 includes a first pattern data input unit 61, a second pattern parameter designation unit 62, a storage unit 63, a processing data generating unit 64, a laser emission control unit 65, a laser scan control unit 66, a container rotation control unit 67, a container moving control unit 68, and a dust collection control unit 69.

Among them, the functions of the first pattern data input unit 61, the second pattern parameter designation unit 62, the processing data generating unit 64, the laser emission control unit 65, the laser scan control unit 66, the container rotation control unit 67, the container moving control unit 68, and the dust collection control unit 69 are achieved by causing the CPU 501 illustrated in Fig. 3 to execute a predetermined or given program to output a control signal via the external device connection interface 508. However, electronic circuits or electric circuits such as Application Specific Integrated Circuit (ASIC) and Field-Programmable Gate Array (FPGA) may be added to the hardware configuration of the control unit 6, and some or all of the functions of each of the above units may be achieved with the electronic circuits or the electric circuits. The function of the storage unit 63 is achieved by the HD 504 and the like.

The first pattern data input unit 61 receives, from an external device such as a personal computer (PC) and a scanner, pattern data of the first pattern that is to be formed on the surface or in the inside of the substrate of the container 1 or on the surface and in the inside of the substrate of the container 1. The pattern data of the first pattern is electronic data including: information indicating a code such as a barcode and a QR code, a pattern such as characters, a figure, and a photograph, or the like; and information indicating the type of the first pattern.

However, the pattern data is not limited to data received from the external device. The user of the production apparatus 100 may enter the pattern data of the first pattern generated using the keyboard 511 and the pointing device 512 of the control unit 6.

The first pattern data input unit 61 outputs the entered pattern data of the first pattern to each of the processing data generating unit 64 and the second pattern parameter designation unit 62.

The second pattern parameter designation unit 62 designates the processing parameter for forming the second pattern. As mentioned above, the second pattern is a line or point smaller than the first pattern, and serves to increase the contrast of the first pattern and improve the visibility.

The processing parameters of the second pattern are information that designates the type and thickness of the line serving as the second pattern, the processing depth, the spacing or arrangement of adjacent lines in the aggregate of the lines, or the like. Alternatively, the processing parameters of the second pattern are information that designates the type and thickness of the point serving as the second pattern, the processing depth, the spacing or arrangement of adjacent points in the aggregate of the points, or the like.

The type of the line is information indicating a straight line, a curve, or the like. The type of the point is information indicating the shape of the point such as a circle, an ellipse, a rectangle, a rhombus, or the like. In the aggregate of the second patterns, the second pattern may be configured to have regularity or may be configured to have irregularity. However, the second pattern is preferably configured to have regularity, so that designation of the parameters can be simplified.

In association with the type of the first pattern such as characters, a figure, a photograph, or the like, the processing parameters of the second pattern appropriate for improving the visibility are defined through experiments and simulations conducted in advance. The storage unit 63 stores a table storing a relationship between the type of the first pattern and processing parameters as explained above.

The second pattern parameter designation unit 62 can obtain and designate processing parameters of the second pattern by referring to the storage unit 63, on the basis of information indicating the type of the first pattern entered with the first pattern data input unit 61.

However, the method for designation by the second pattern parameter designation unit 62 is not limited thereto. The second pattern parameter designation unit 62 may receive user's instructions via the keyboard 511 and the pointing device 512 of the control unit 6, and may obtain the processing parameters of the second pattern by referring to the storage unit 63 on the basis of the received user's instructions.

The second pattern parameter designation unit 62 may obtain the processing parameters of the second pattern which the user of the production apparatus 100 generates by using the keyboard 511 and the pointing device 512 of the control unit 6.

The processing data generating unit 64 generates processing data for forming the first pattern constituted by the aggregate of second patterns, on the basis of the processing data of the first pattern and the processing parameters of the second pattern.

The processing data includes: rotation condition data according to which the rotation mechanism 3 rotates the container 1; scan condition data according to which the laser emission unit 2 scans the processing laser beam 20; and emission condition data according to which the laser emission unit 2 emits the processing laser beam 20 in synchronization with the rotation of the container 1. In addition, the processing data includes: moving condition data according to which the moving mechanism 4 moves the container 1 in the Y direction; and dust collection condition data according to which the dust collection unit 5 performs dust collection operation.

The processing data generating unit 64 outputs the generated processing data to the laser emission control unit 65, the laser scan control unit 66, the container rotation control unit 67, the container moving control unit 68, and the dust collection control unit 69.

The laser emission control unit 65 includes a light intensity control unit 651 and a pulse control unit 652, and controls the emission of the processing laser beam 20 to the container 1 with the laser beam source 21 on the basis of the emission condition data. The laser emission control unit 65 controls emission timing of the processing laser beam 20 to the container 1 in synchronization with the rotation of the container 1 by the rotation mechanism 3, on the basis of a synchronization detection signal from the synchronization detection unit 25. Known techniques such as a technique disclosed in Japanese Unexamined Patent Application Publication No. 2008-073894 can be applied to the emission timing control using the synchronization detection signal, and accordingly detailed description thereof is omitted here.

When the laser beam source 21 is constituted by multiple laser beam sources, the laser emission control unit 65 independently performs the above control for each of the multiple laser beam sources.

The light intensity control unit 651 controls the light intensity of the processing laser beam 20, and the pulse control unit 652 controls the pulse width and the emission timing of the processing laser beam 20.

The laser scan control unit 66 controls scanning of the processing laser beam 20 with the scan unit 23, on the basis of the scan condition data. Specifically, the laser scan control unit 66 controls the ON and OFF states, the driving frequency, and the like of the driving of the scan mirror.

The container rotation control unit 67 controls the ON and OFF states of rotation driving, the rotation angle, the rotation direction, the rotation speed, and the like of the container 1 with the rotation mechanism 3, on the basis of the rotation condition data. The container rotation control unit 67 may continuously rotate the container 1 in a predetermined or given rotation direction, or may reciprocally rotate (swing) the container 1 within a predetermined or given range of angle such as $\pm 90$ degrees while switching the rotation direction.

The container moving control unit 68 controls the ON and OFF states, the moving direction, the amount of movement, the moving speed, and the like of the movement and driving of the container 1 with the moving mechanism 4, on the basis of the moving condition data.

The dust collection control unit 69 controls the ON and OFF states, the flow rate, the flow velocity, and the like of the sucked air in dust collection with the dust collection unit 5, on the basis of the dust collection condition data. A mechanism for moving the dust collection unit 5 may be provided, and the mechanism may control movement of the dust collection unit 5 so as to arrange the dust collection unit 5 in proximity to the position to which the processing laser beam 20 is emitted.

<Example of production method performed with production apparatus 100>

Next, the production method performed with the production apparatus 100 is explained. Fig. 5 is a flowchart of an example of a production method performed with the production apparatus 100.

First, in step S51, the first pattern data input unit 61 receives the processing data of the first pattern from an external device such as a PC, a scanner, and the like. The first pattern data input unit 61 outputs the received processing data of the first pattern to the processing data generating unit 64 and the second pattern parameter designation unit 62.

Subsequently, in step S52, the second pattern parameter designation unit 62 designates processing parameters for forming the second pattern. The second pattern parameter designation unit 62 obtains and designates the processing parameters of the second pattern by referring to the storage unit 63 on the basis of information indicating the type of the first pattern entered from the first pattern data input unit 61.

The order of execution of step S51 and step S52 may be reversed as appropriate. Alternatively, step S51 and step S52 may be executed in parallel.

Next, in step S53, the processing data generating unit 64 generates processing data for forming the first pattern constituted by the aggregate of second patterns, on the basis of the processing data of the first pattern and the processing parameters of the second pattern. Then, the processing data generating unit 64 outputs the generated processing data to the laser emission control unit 65, the laser scan control unit 66, the container rotation control unit 67, the container moving control unit 68, and the dust collection control unit 69.

Next, in step S54, the laser scan control unit 66 causes the scan unit 23 to start scanning the processing laser beam 20 in the Y direction on the basis of the scan condition data. In the embodiment, in response to the start of the scanning, the scan unit 23 continuously scans the processing laser beam 20 in the Y direction until a stop instruction of scanning is given.

Next, in step S55, the container rotation control unit 67 causes the rotation mechanism 3 to start rotating the container 1 on the basis of the rotation condition data. In the embodiment, in response to the start of rotation, the rotation mechanism 3 continuously rotates the container 1 until a stop instruction of rotation is given.

Next, in step S56, the container moving control unit 68 moves the container 1 to an initial position in the Y direction with the moving mechanism 4 so as to emit the processing laser beam 20 to a predetermined or given position of the container 1 on the basis of the moving condition data. The container moving control unit 68 stops the moving mechanism 4 after the container 1 has been moved to the initial position.

The order of execution of step S54 to step S56 may be changed as appropriate. Alternatively, step S54 to step S56 may be executed in parallel.

Next, in step S57, the laser emission control unit 65 starts control of emission of the processing laser beam 20 to the container 1.

Specifically, the laser emission unit 2 emits the processing laser beam 20 to the container 1 by scanning a line along the Y direction. Thereafter, the rotation mechanism 3 rotates the container 1 about the cylinder axis 10 by a predetermined or given angle. After the container 1 has been rotated by the predetermined or given angle, the laser emission unit 2 emits the processing laser beam 20 to the container 1 by scanning a subsequent line. Thereafter, the rotation mechanism 3 rotates the container 1 about the cylinder axis 10 by the predetermined or given angle. By repeating such an operation, the first pattern is formed line by line on the surface or in the inside of the substrate of the container 1 or on the surface and in the inside of the substrate of the container 1.

Next, in step S58, the laser emission control unit 65 determines whether the first pattern has been formed in the predetermined or given area of the container 1 in the Y direction.

In a case where the first pattern is determined not to have been formed yet in step S58 (No in step S58), the processing in step S56 and subsequent steps are repeated again.

In a case where the first pattern is determined to have been formed in step S58 (Yes in step S58), the rotation mechanism 3 stops rotating the container 1 in response to a stop instruction given by the container rotation control unit 67 in step S59.

Next, in step S60, the scan unit 23 stops scanning of the processing laser beam 20 in response to a stop instruction given by the laser scan control unit 66. The laser beam source 21 stops emission of the processing laser beam 20 in response to a stop instruction given by the laser emission control unit 65.

The order of execution of step S59 and step S60 may be reversed as appropriate. Alternatively, step S59 and step S60 may be executed in parallel.

In a manner as described above, the production apparatus 100 can form the first pattern constituted by the aggregate of second patterns on the surface or in the inside of the substrate of the container 1 or on the surface and in the inside of the substrate of the container 1.

<Examples of various kinds of data>

Next, examples of various kinds of data used in the production of the container 1 are explained.

(Pattern data example)

Fig. 6 is a drawing illustrating an example of the processing data of the first pattern entered by the first pattern data input unit 61.

As illustrated in Fig. 6, the pattern data 611 includes character data 612 indicating characters "LABELLESS". The characters, "LABELLESS", indicated by the character data 612 are to be formed as the first pattern on the container 1. An aggregate of multiple lines constituting the 9 characters of "LABELLESS" correspond to data for the first pattern. Data in the pattern data 611 other than the character data 612 is not to be formed on the container 1.

For example, the pattern data 611 is provided as an image file such as a bitmap and the like. The header information of the image file providing the pattern data 611 includes information indicating the type of the first pattern. In this example, the type of the first pattern is "CHARACTERS".

The first pattern data input unit 61 outputs the pattern data 611 including information indicating "CHARACTERS" to the second pattern parameter designation unit 62 and the processing data generating unit 64.

(Example of correspondence table storing correspondence between types of first patterns and processing parameters)

Fig. 7 illustrates an example of a correspondence table 631 stored in the storage unit 63. The correspondence table 631 illustrated in Fig. 7 indicates a relationship of correspondence between: a type of a first pattern such as characters, a figure, and a photograph, or the like; and a processing parameter for a second pattern suitable for improving the visibility of the first pattern. The relationship of correspondence is defined through experiments and simulations conducted in advance.

In the correspondence table 631, a numerical value in a column "IDENTIFICATION INFORMATION" indicates the type of the first pattern, and information in a column "TYPE" indicates the type of the first pattern. Information in the column "PARAMETER" indicates a filename of a file recorded with processing parameters corresponding to the type of the first pattern.

The second pattern parameter designation unit 62 reads a file corresponding to the information indicating the type of the first pattern by referring to the correspondence table 631, and obtains processing parameters. In the example of Fig. 6, the type of the first pattern is "CHARACTERS", and accordingly, the second pattern parameter designation unit 62 reads a file having a filename "Para1" corresponding to the identification information "1" indicating "CHARACTERS", obtains processing parameters from the file having the filename "Para1", and outputs the obtained processing parameters to the processing data generating unit 64.

(Example of processing parameters)

Fig. 8 is a drawing illustrating an example of processing parameters 621 obtained by the second pattern parameter designation unit 62. The processing parameters 621 include parameters in the column "PARAMETER" associated with the corresponding items in the column "ITEM".

(Example of processing data)

Fig. 9 is a drawing illustrating an example of processing data 641 generated by the processing data generating unit 64. The character data 642 in the processing data 641 is constituted by straight line data of multiple straight lines corresponding to a second pattern. Black areas in the processing data 641 correspond to areas in which the property of the substrate of the container 1 is changed by emission of the processing laser beam 20.

<Modes of processing laser beam 20>

Next, Figs. 10A to 10F are drawings illustrating emission modes of the processing laser beam 20 onto the container 1. In Figs. 10A to 10F, three emission modes are illustrated.

In Figs. 10A to 10F, beam spots 201 of the processing laser beams 20 are formed on the surface of the container 1. Specifically, three beam spots 201 are arranged in a direction perpendicular to the scan direction (the Y direction) of the processing laser beam 20 to scan in the Y direction.

These three beam spots 201 can be obtained by arranging three laser beam sources 21 in the direction perpendicular to the Y direction and causing the three laser beam sources 21 to emit the respective processing laser beams 20.

Figs. 10A and 10B illustrate the first mode, in which there are gaps between beam spots 201 in the direction perpendicular to the Y direction. Fig. 10A illustrates a state in which there are gaps between beam spots 201 in the direction perpendicular to the Y direction. Fig. 10B illustrates a state in which the beam spots 201 of Fig. 10A are scanned at a high speed in the Y direction. When the beam spots 201 are scanned at the high speed, three scan lines are formed by the three beam spots 201, and there are gaps between the three scan lines extending in the Y direction. When the beam spots 201 are emitted with the arrangement of Figs. 10A and 10B, the efficiency for forming the pattern can be enhanced.

Figs. 10C and 10D illustrate the second mode, in which the beam spots 201 overlap with each other in the direction perpendicular to the Y direction. Fig. 10C illustrates a state in which the beam spots 201 overlap with each other in the direction perpendicular to the Y direction. Fig. 10D illustrates a state in which the beam spots 201 of Fig. 10C are scanned at a high speed in the Y direction. When the beam spots 201 are scanned at the high speed, three scan lines are formed by the three beam spots 201, and the three scan lines extending in the Y direction overlap with each other. When the beam spots 201 are emitted with the arrangement of Figs. 10C and 10D, the contrast of the pattern can be increased.

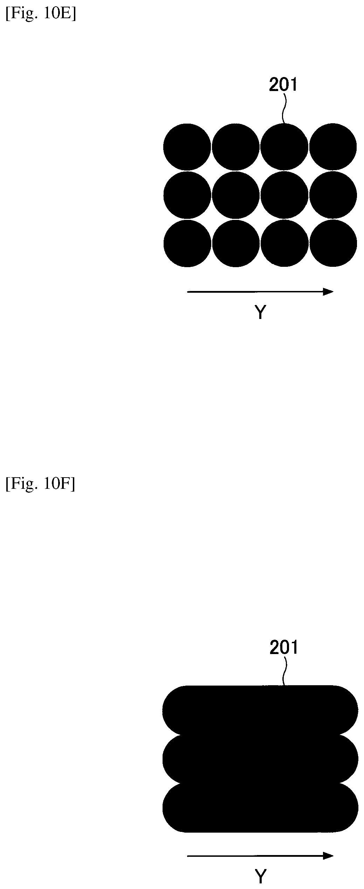

Figs. 10E and 10F illustrate the third mode, in which the beam spots 201 are in contact with each other in the direction perpendicular to the Y direction. Fig. 10E illustrates a state in which the beam spots 201 are in contact with each other in the direction perpendicular to the Y direction. Fig. 10F illustrates a state in which the beam spots 201 of Fig. 10E are scanned at a high speed in the Y direction. When the beam spots 201 are scanned at the high speed, three scan lines are formed by the three beam spots 201, and the three scan lines extending in the Y direction are in contact with each other. When the beam spots 201 are emitted with the arrangement of Figs. 10E and 10F, the efficiency for forming the pattern and the contrast of the pattern can be balanced.

The first pattern constituted by the aggregate of second patterns can be formed on the container 1 by combining three emission modes of the processing laser beams 20 as described above. The number of processing laser beams 20 is not limited to three, and one or two processing layer beams 20 may be used, or four or more processing layer beams 20 may be used. As the number of processing laser beams 20 is increased, the pattern can be formed in a shorter period of time.

The diameter of the beam spot 201 is, for example, 42.6 $\mu$m. The spacing between the laser spots 201 in the direction perpendicular to the Y direction illustrated in Figs. 10A, 10B is, for example, 23.6 $\mu$m.

Figs. 10A to 10F illustrate examples in which the processing laser beams are arranged with regularity. However, the present embodiment is not limited thereto, and the processing laser beams may be arranged with irregularity.

<Example of changing property of substrate>

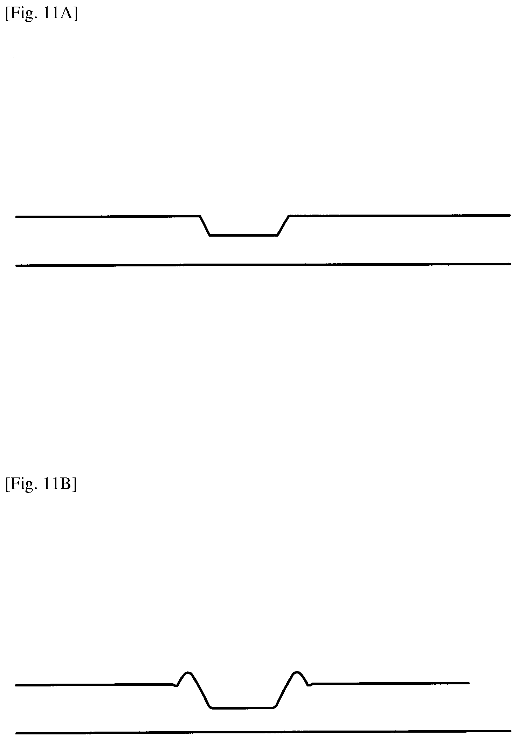

Next, a change in the property of the substrate of the container 1 with an emission of the processing laser beam 20 is explained. Figs. 11A to 11D are drawings illustrating an example of a change in the property of the substrate of the container 1 with an emission of the processing laser beam 20.

Fig. 11A illustrates a recessed shape formed by evaporating the substrate on the surface of the container 1. Fig. 11B illustrates a recessed shape formed by melting the substrate on the surface of the container 1. In the case of Fig. 11B, the peripheral edge of the recessed portion is raised as compared with the shape of Fig. 11A.

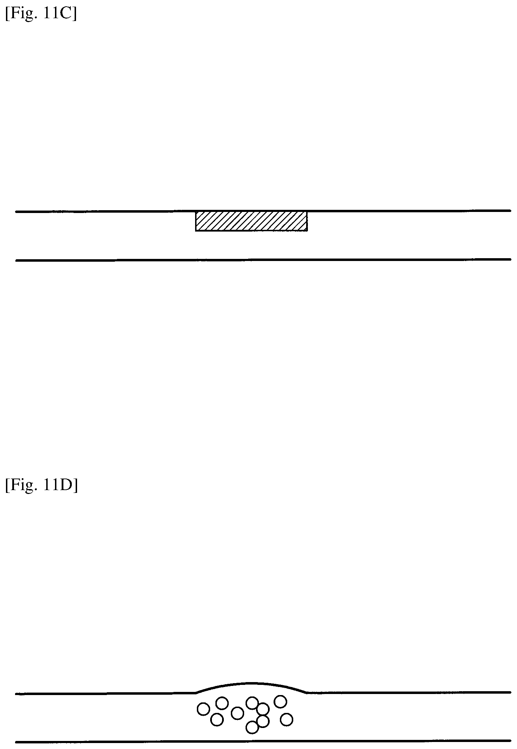

Fig. 11C illustrates an example of a change in the crystallization state of the substrate surface of the container 1. Fig. 11D illustrates an example of a foaming state in the inside of the substrate of the container 1.

In a manner as described above, the first pattern constituted by the aggregate of second patterns can be formed on the surface or in the inside of the container 1 by changing the shape of the surface of the container 1 or changing a property such as the crystallization state of the substrate surface, the forming state in the inside of the substrate, and the like.

A method for forming a recessed shape by evaporating the substrate on the surface of the container 1 includes, for example, emitting a pulse laser with a wavelength of 355 nm to 1064 nm and a pulse width of 10 fs to 500 ns or less. As a result, a substrate in a portion to which the laser beam is emitted is evaporated, and a very small recessed portion is formed on the surface.

Alternatively, the recessed portion can also be formed by melting the substrate by emitting continuous wave (CW) laser with a wavelength of 355 nm to 1064 nm. When the laser is continuously emitted even after the substrate is melted, the substrate foams in the inside and on the surface thereof, so that the substrate can be opacified.

In order to change the crystallization state, for example, a CW laser with a wavelength of 355 nm to 1064 nm is emitted to a substrate made of PET to instantly raise the temperature of the substrate, and thereafter, for example, the power of the laser is reduced to gradually cool the substrate, so that the PET of the substrate is made into a crystallization state to become opaque. Note that, when the substrate is rapidly cooled by, e.g., turning off the laser beam after the temperature is raised, the PET is made into an amorphous state to become transparent.

The change in the property of the substrate of the container 1 is not limited to the changes illustrated in Figs. 11A to 11D. Alternatively, the property of the substrate may be changed by yellowing, oxidation reaction, surface modification, and the like of the substrate made of a resin material.

<Example of container 1 according to first embodiment>

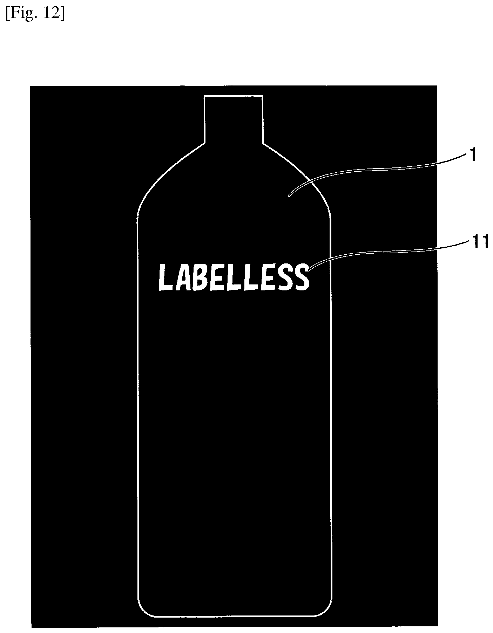

Next, the container 1 according to the first embodiment is explained. Fig. 12 is a drawing illustrating an example of the container 1. The container 1 is a bottle in a cylindrical shape with a substrate made of resin (transparent resin) having transparency to visible light. Fig. 12 illustrates the container 1 placed in front of a black screen as a background. The black screen in the background can be seen through the transparent container 1. Alternatively, it may be considered that a black liquid is contained in the container 1, and the black liquid contained in the container 1 may be deemed to be seen through the transparent container 1.

Characters 11, "LABELLESS", are formed on the surface of the container 1. In contrast to the black color in the background or the black color of the liquid contained in the container 1, the characters 11 appear to be opaque due to diffusion of the ambient light at the characters 11. An aggregate of multiple lines constituting the nine characters of "LABELLESS" correspond to the characters 11. The characters 11 are an example of a first pattern, and are an example of a first area. An area of the container 1 in which the characters 11 are not formed is an example of another area.

Examples of resins used for the substrate 1a of the container 1 include polyvinyl alcohol (PVA), polybutylene adipate terephthalate (PBAT), polyethylene terephthalate succinate, polyethylene (PE), polypropylene (PP), polyethylene terephthalate (PET), vinyl chloride (PVC), polystyrene (PS), polyurethane, epoxy, bio-poly(butylene succinate) (Bio PBS), poly(butylene adipate-co-terephthalate) (PBAT), starch blend polyester resin, polybutylene terephthalate succinate, polylactic acid (PLA), poly(3-hydroxybutyrate-co-3-hydroxyhexanoate) (PHBH), polyhydroxyalkanoic acid (PHA), bio-based PET30, bio-polyamide (PA) 610, 410, 510, bio-based PA1012, 10T, bio-based PA11T, MXD10, bio-based polycarbonate, bio-based polyurethane, bio-based PE, bio-based PET100, bio-based PA11, bio-based PA1010, and the like.

Among them, biodegradable resins such as polyvinyl alcohol (PVA), polybutylene adipate terephthalate (PBAT), and polyethylene terephthalate succinate are preferable because the biodegradable resins can reduce the environmental burden.

Fig. 13 is a drawing illustrating an example of a relationship between a first pattern and second patterns formed on the container 1. An enlarged view 111 in Fig. 13 illustrates a portion of the characters 11 in an enlarged manner. As illustrated in Fig. 13, the characters 11, "LABELLESS", are formed on the surface of the container 1. As illustrated in the enlarged view 111, the characters 11 are constituted by multiple straight lines 12. In other words, the characters 11 are constituted by an aggregate of straight lines 12. Fig. 13 illustrates straight lines 12 only in the area corresponding to the enlarged view 111, but the entire characters 11 are constituted by the aggregate of straight lines 12.

White areas corresponding to the aggregate of straight lines 12 are areas in which the property of the substrate has been changed. One of the multiple straight lines 12 represented as one of the white areas is an example of a second pattern, and is also an example of a second area. The multiple straight lines 12 are an example of an aggregate of straight lines 12. The straight line 12 is a pattern smaller than the characters 11. Specifically, the straight line 12 is a pattern of which the area is smaller than the total area of the multiple lines constituting the characters 11. In this manner, the characters 11 are formed to include the aggregate of straight lines 12 that are smaller than the characters 11.

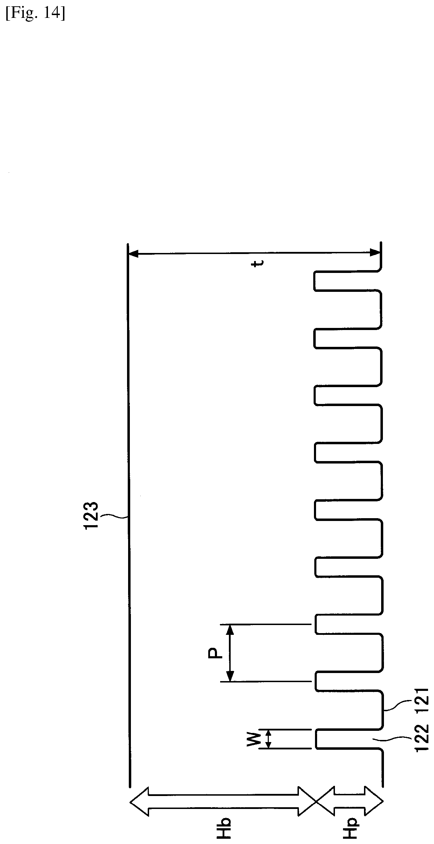

Fig. 14 is a cross sectional view illustrating a cross sectional shape taken along line A-A of the enlarged view 111 of Fig. 13. An outer surface portion 121 represents a substrate surface on the outside of the container 1. A recessed portion 122 represents a portion formed by evaporating the surface of the substrate of the container 1 with the emission of the processing laser beam 20, and is a portion corresponding to the straight line 12. The inner surface portion 123 indicates a substrate surface on the inner side of the container 1.

A thickness t denotes a thickness of the substrate of the container 1. A processing depth Hp denotes a depth of the recessed portion 122. A non-processed portion depth Hb denotes a depth of the non-processed portion. The non-processed portion depth Hb is a depth obtained by subtracting the processing depth Hp from the thickness t of the substrate of the container 1.

In this case, a spacing P between adjacent second patterns means a distance between the centers of the adjacent second patterns. The spacing P in Fig. 14 represents a spacing between adjacent straight lines 12. A width W denotes a thickness of the straight line 12. In the present embodiment, the straight lines 12 are formed with regularity, and accordingly, the spacing P also corresponds to the regular distance with which straight lines 12 are formed.

In this case, the spacing P is preferably 0.4 μm or more and 130 μm or less. When the spacing P is equal to or more than 0.4 μm, the ambient light can be diffused without being affected by the limitation of the wavelength of the visible light, and the contrast of the characters 11 constituted by the aggregate of the straight lines 12 can be improved.

When the spacing P is equal to or less than 130 μm, a resolution of 200 dpi (dot per inch) can be ensured, each of the straight lines 12 (i.e., the second patterns) is less likely to be seen, and the entirety of the straight lines 12 as a whole can be seen with a high contrast as a pattern obtained by opacifying the characters 11. When the spacing P is equal to or less

than 50 $\mu$m, it can be made sure that the straight lines 12 (i.e., the second patterns) are less likely to be seen, which is more preferable.

In the example as explained above, numerical values preferable for the spacing P have been explained, but in a case where the second patterns have regularity, the preferable numerical values explained above can also be applied to the regular distance.

In contrast to the processing data of the second patterns illustrated in Fig. 9, Fig. 13 illustrates an example of second patterns with narrower spacings. In other words, the character data 642 of Fig. 9 and the characters 11 of Fig. 13 do not correspond to each other.

The enlarged view 111 illustrates the aggregate of the straight lines 12 formed regularly with equal spacings, but the aggregate of the second patterns is not limited thereto. The aggregate of the second patterns may be constituted by multiple straight lines 12 formed irregularly with different spacings, or the aggregate of the second patterns may be constituted by multiple dots and the like formed regularly or irregularly. When the second patterns are dot patterns, the dot patterns are smaller than the first pattern such as the characters 11.

Also, in the present embodiment, the second pattern is formed in an uneven shape including outer surface portions 121 corresponding to the projecting portions and recessed portions 122. When the second patterns are formed in such an uneven shape, the difference in the depth between the outer surface portion 121 and the recessed portion 122 is preferably equal to or more than 0.4 $\mu$m. When the difference is equal to or more than 0.4 $\mu$m, the ambient light can be diffused without being affected by the limitation of the wavelength of the visible light, and the contrast of the characters 11 constituted by the aggregate of the straight lines 12 can be improved. Although the outer surface portion 121 has been illustrated as an example of a projecting portion, a portion obtained by evaporating the outer surface of the container 1 with an emission of the processing laser beam 20 may be adopted as a projecting portion, as long as the projecting portion has a depth smaller than the depth of the recessed portion 122.

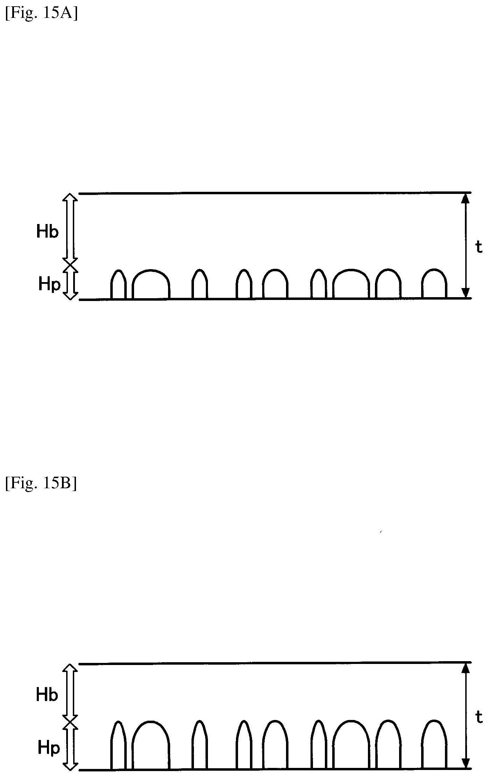

Next, Figs. 15A to 15D are drawings illustrating various kinds of examples of the processing depth Hp.

Fig. 15A is a drawing illustrating a case where the processing depth Hp is smaller than the non-processed portion depth Hb of the substrate. Specifically, in Fig. 15A, a ratio of the processing depth Hp to the non-processed portion depth Hb satisfies the following condition.

$$(1/49) \leq (Hp/Hb) \leq (3/7)$$

In this case, the rigidity (mechanical strength) of the second pattern is improved. For example, to satisfy this condition, when the thickness of the substrate of the container 1 is 100 $\mu$m to 500 $\mu$m, the processing depth Hp is 10 $\mu$m.

Fig. 15B is a drawing illustrating a case where the processing depth Hp is larger than the non-processed portion depth Hb of the substrate. Specifically, in Fig. 15B, the ratio of the processing depth Hp to the non-processed portion depth Hb satisfies the following condition.

$$(7/3) \leq (Hp/Hb) \leq (49/1)$$

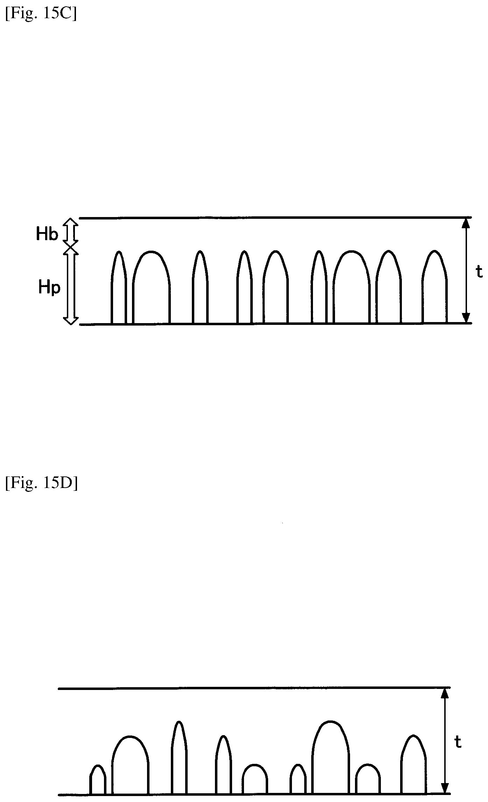

Fig. 15C is a drawing illustrating a case where the processing depth Hp is about the same as the non-processed portion depth Hb of the substrate. Specifically, in Fig. 15C, the ratio of the processing depth Hp to the non-processed portion depth Hb satisfies the following condition.

$$(4/6) \leq (Hp/Hb) \leq (6/4)$$

Fig. 15D is a drawing illustrating a case where the processing depth Hp and the non-processed portion depth Hb of the substrate are varied.

The processing depth Hp as illustrated in Figs. 15A to 15D can be adjusted by controlling the light intensity of the laser beam emitted by the laser beam source 21 with the light intensity control unit 651 of the laser emission control unit 65.

<Example of correspondence between laser beam source and processing parameters>

For example, the laser beam source 21 in the production apparatus 100 uses pulse lasers with a wavelength of 355 nm, a wavelength of 532 nm, and a wavelength of 1064 nm, and with a pulse width of several dozens of femtoseconds to several hundreds of nanoseconds. In other words, the laser beam source 21 uses a short pulse laser or ultra-short pulse laser in the ultraviolet range or visible light range. However, the embodiment is not limited thereto, and the laser beam source 21 can use a CW laser, and can also modulate a CW laser.

When the wavelength of the laser beam source used by the laser beam source 21 decreases, the size of the beam spot diameter can be reduced, which is preferable for forming a first pattern constituted by an aggregate of smaller second patterns.

<Effects of container 1>

Containers such as PET bottles are widely used because such containers have various advantages such as performance of preservation during distribution and sales of beverages. Containers distributed in the market are often attached with labels indicating their product names, ingredients, expiration dates, barcodes, QR codes, recycling marks, logomarks, and the like for the management and sales promotion of the containers. The labels can provide useful information to consumers. In addition, the individuality and competitiveness of products can be enhanced by displaying designs that appeal to consumers on labels.

In recent years, marine pollution caused by plastic waste has been reported, and the movement to eliminate pollution caused by plastic waste is becoming active worldwide, and the demand for circular recycling of containers is increasing. Containers such as PET bottles are no exception to this movement, and measures are being taken to reduce plastic waste from the perspective of environmentally friendly reduction.

Under such circumstances, the demand for circular recycling of containers is increasing. In this case, circular recycling of containers means that recycling service companies process used containers, collected by separate collection, into flakes, which are used as raw material for containers, and then reproduce containers from the flakes.

In order to smoothly promote such circular recycling, it is preferable to strictly separate the bodies, labels, and caps of containers such as PET bottles, which are made of different materials, in separate collection during the process of recycling. In order to achieve the separate collection, consumers have to separate a cap and a label from each container, and in particular, a process of removing the label cannot be performed by means other than manual labor. Therefore, the separate collection imposes a burden on general consumers and recycling contractors of local government. For this reason, such a process for removing labels has been one of the obstacles in stringently carrying out separate collection.

To address such a problem, the technology for providing containers without labels is being studied. For example, a method of eliminating labels by printing patterns indicating information on bodies of containers with inkjet printing is being studied.

However, in some cases, the inkjet printing is not preferable because the printed ink may remain, and accordingly, the impurities increase in the recycling process after the bottles are collected. In addition, if the ink is removed from the body of a container during the recycling process in order to reduce the impurities, management information may be lost, which is not preferable in some cases.

Alternatively, there is a method to use a carbon dioxide laser ($CO_2$ laser) to form a pattern indicating information on the body of a container.

However, the wavelength of the laser beam source of the carbon dioxide laser is long, and accordingly, the size of the beam spot diameter increases, resulting in a lower resolution of the pattern formed on the body of the container. As a result, when a pattern having a large amount of information such as an image is formed on the container, the contrast of the pattern decreases, and the visibility decreases.

In contrast, the present embodiment provides the container 1 having the first pattern constituted by the second patterns formed on the surface or in the inside of the substrate or on the surface and in the inside of the substrate.

The first pattern constituted by the second patterns has a higher diffusive property of ambient light than a first pattern formed by a single stroke. In this case, the single stroke means drawing a line or a figure while continuously emitting a laser beam without intermittence. As a result of forming the first pattern constituted by second patterns, the contrast of the first pattern with respect to areas where the first pattern is not formed improves on the container 1. In the present embodiment, with the effect of diffusion of the second patterns, the first pattern is observed as being opaque in contrast to the area where the first pattern is not formed, and due to the improvement in the contrast, the opacified area appears to be whiter.

Therefore, even when the first pattern is a pattern including a large amount of information including thin lines, characters, and the like, the first pattern can be visually recognized with a high contrast, and the container 1 formed with a highly visible pattern including a large amount of information can be provided. Furthermore, a substrate in which images, figures, and the like are formed with a high visibility on a member that is to be the substrate of the container 1 can be provided.

In addition, the first pattern can be formed without giving impurities such as ink to the body of the container 1, so that a step of removing impurities can be eliminated from the process of circular recycling, and the loss of management information due to removal of ink, i.e., impurities, can be prevented.

In addition, the first pattern is opacified, so that the first pattern can be visually recognized with a high contrast even when transparent plastic or transparent glass having transparency to visible light is used as the substrate of the container 1.

In the present embodiment, the first pattern constituted by the aggregate of second patterns is formed by the processing laser beam 20, but the present embodiment is not limited thereto. Other processing methods such as cutting can also be employed.

In order to change at least one of the shape, crystallization state, and the foaming state as the property of the substrate, a laser processing method for emitting laser beam can be employed as means to change the property of the substrate. The laser processing method allows for high speed processing and generates fewer cutting chips and the like, so that the first pattern constituted by the aggregate of second patterns can be formed in a cleaner environment.

In the present embodiment, the light intensity of the processing laser beam 20 is controlled on the basis of emission condition data to adjust the depth of the processing depth Hp of the second pattern, so that the contrast of the first pattern, the rigidity of the substrate where the second pattern is formed, or the like can be optimized.

On the surface or in the inside of the container 1, the diameter of the processing laser beam 20 in the area where the property of the substrate is changed is preferably set to 1 $\mu$m or more and 200 $\mu$m or less. In this case, the diffusive property of the ambient light by the first pattern constituted by the aggregate of second patterns can be enhanced, and the efficiency for forming the first pattern can be secured.

When the beam spot diameter is less than 1 $\mu$m, the wavelength is almost close to visible light, and in such a case, the structure processed with such a beam spot diameter is unable to diffuse light, which means that the substrate cannot be opacified. When the beam spot diameter is more than 200 $\mu$m, the processed structure can be seen with the eye of a person. Because of the above reason, the diameter of the processing laser beam 20 is preferably set to 1 $\mu$m or more and 200 $\mu$m or less. More preferably, the diameter of the processing laser beam 20 is set to 1 $\mu$m or more and 100 $\mu$m or less, in order to make sure that even a person with good eyesight cannot see the structure.

The spacing between adjacent second patterns is preferably set to 0.4 $\mu$m or more and 130 $\mu$m or less. When the spacing is set to 0.4 $\mu$m or more, the ambient light can be diffused without being affected by the limitation of the wavelength of the visible light, and the contrast of the first pattern can be improved. When the spacing is set to 130 $\mu$m or less, a resolution of 200 dpi (dot per inch) can be ensured, the second patterns are less likely to be seen, and the first pattern can be seen with a high contrast as the opacified pattern.

When the second pattern is formed with regular intervals, information about the regular intervals can be used as a processing parameter, so that the processing parameter for forming the second pattern can be simplified, which is preferable.

When the second pattern is constituted by an uneven shape, the difference in the depth between the recessed portion and the projecting portion in the uneven shape is preferably equal to or more than 0.4 $\mu$m. In this case, the diffusive property of the ambient light by the second pattern can be secured, and the contrast of the first pattern can be improved.

When an aggregate is constituted by two to five second patterns, the substrate can be opacified adequately with the second patterns, which is preferable.

Furthermore, when biodegradable resin is used as the substrate of the container 1, the biodegradable resin does not generate resin waste, so that the environmental burden can be reduced, which is preferable. In this case, the ratio of the biodegradable resin in the resin constituting the container 1 is preferably 100%, but even when the ratio of the biodegradable resin is about 5%, 10%, or 30% used in combination with ordinary resin at the remaining ratio, the environmental burden can be reduced greatly.

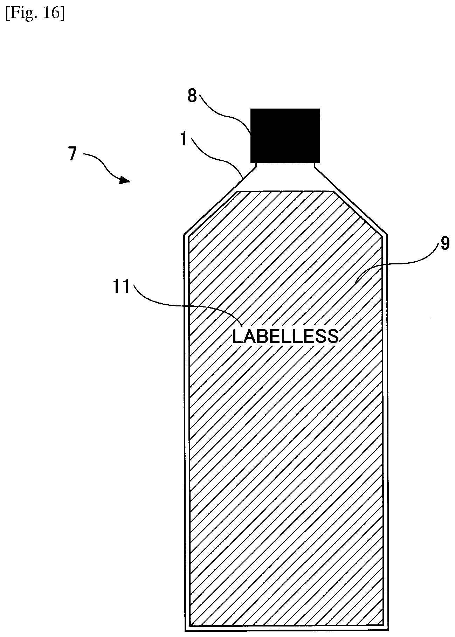

In addition, the present embodiment also includes a product including the container 1 and a content contained in the container 1. Fig. 16 is a drawing illustrating an example of such a product 7. The product 7 includes the container 1, a seal member 8 such as a cap, and a content 9 such as liquid beverage contained in the container 1. The characters 11, "LABELLESS", are formed on the surface of the container 1.

The content 9 often has a color such as black, brown, yellow, or the like. The mouth portion of the product 7 is provided with a threaded portion on which the seal member 8 is screwed and fixed. In addition, on the inner side of the seal member 8, there is provided a threaded portion to be screwed on the threaded portion of the mouth portion of the product 7.

Production methods for producing the product 7 include the following three types of methods.

First type of method: a production method for producing the product 7, including forming the pattern on the container 1, thereafter introducing the content 9 into the container 1, and thereafter sealing the container 1 with the seal member 8.

Second type of method: a production method for producing the product 7, including introducing the content 9 into the container 1, thereafter sealing the container 1 with the seal member 8, and forming a pattern of the container 1.

Third type of method: a production method for producing the product 7, including forming a pattern on the container 1 while introducing the content 9 into the container 1, and thereafter sealing the container 1 with the seal member 8.

<Second embodiment>

Next, the second embodiment is explained.

In the second embodiment, a first pattern formed on a container 1 is an image, and each of multiple pixels constituting the image is constituted by an aggregate of second patterns. The spacing between second patterns is changed between pixels, so that the image, i.e., the first pattern, can be expressed by a grayscale with multiple gray levels.

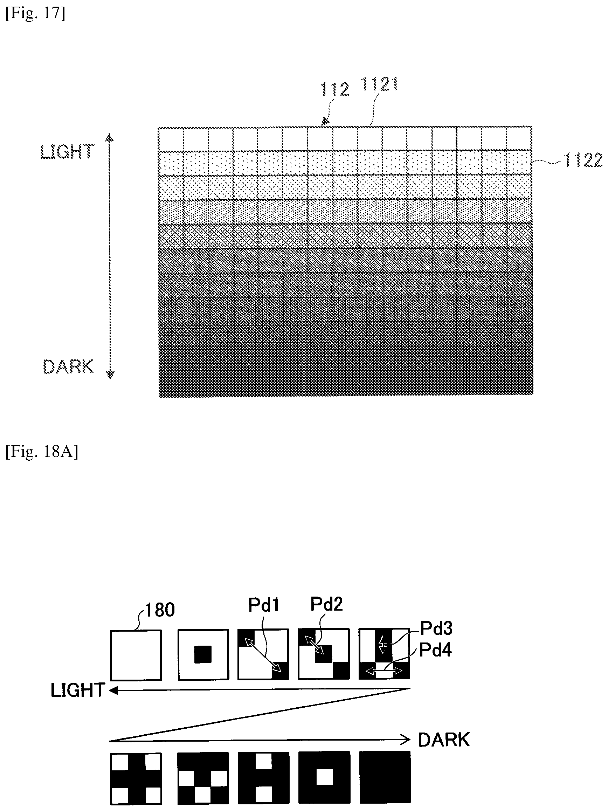

Fig. 17 is a drawing for explaining an example of gray level expression achieved by changing a spacing between second patterns between pixels. Fig. 17 illustrates processing image data 112 for the image corresponding to the first pattern that is to be formed on the container 1. The processing image data 112 is constituted by pixels 1121 arranged in a grid manner as illustrated in Fig. 17.

In the present embodiment, the second pattern is a dot pattern, and each of the multiple pixels 1121 is constituted by an aggregate of dot elements 1122. In the processing image data 112, a black dot element 1122 corresponds to an area where the property of the substrate is to be changed with an emission of the processing laser beam 20.

In Fig. 17, the spacing between adjacent dot elements 1122 increases toward the upper side of the arrow, and the spacing between adjacent dot elements 1122 decreases toward the lower side of the arrow. As the spacing between adjacent dot elements 1122 increases, the diffusive property of the ambient light decreases and accordingly the density of the opacified first pattern decreases when dot patterns are formed on the container 1. On the contrary, as the spacing between adjacent dot elements 1122 decreases, the diffusive property of the ambient light increases and accordingly the density of the opacified first pattern increases when dot patterns are formed on the container 1.

In this manner, the spacing of second patterns is changed between pixels, so that gray levels of the image can be expressed.

Fig. 17 illustrates an example in which the gray levels are expressed by a variation in the spacing between dot patterns arranged with regularity, but the method of gray level expression is not limited thereto. Figs. 18A to 18C are drawings for explaining another example of gray level expression with second patterns. Fig. 18A is a drawing illustrating processing data of second patterns arranged without regularity. In Fig. 18A, a pixel 180 represents a single pixel, and the pixel 180 is constituted by rectangular dot elements arranged irregularly. The directions of the arrow in Fig. 18A indicate either an increase or decrease in the pixel density, and as the number of dot elements in the pixel 180 increases, the density becomes higher.

Spacings Pd1 to Pd4 in Fig. 18A represent spacings between adjacent dot elements in various arrangements of dot elements in the pixel 180, and correspond to spacings between dot patterns formed on the container 1.

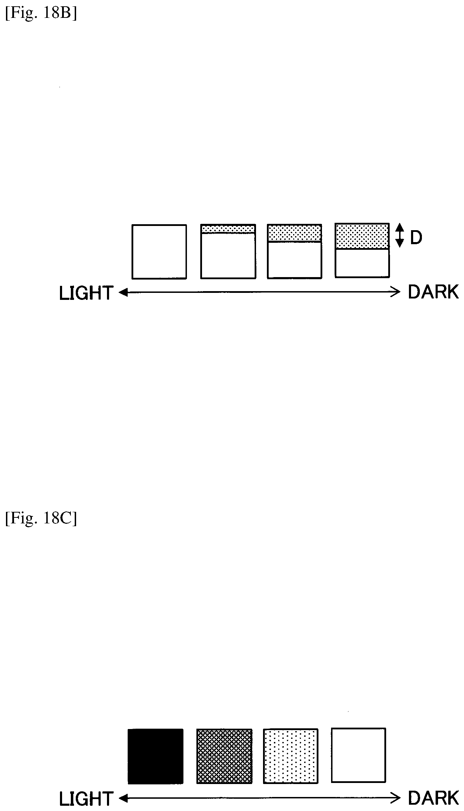

Fig. 18B illustrates a cross sectional view illustrating second patterns formed by changes in the crystallization state. Fig. 18C is a plan view of Fig. 18B.

Figs. 18B and 18C illustrate examples in which the density of the first pattern is changed by changing the diffusive property of the second patterns for diffusing the ambient light by changing a crystallization depth D to which the substrate of the container 1 is crystallized. As the crystallization depth D increases, the diffusive property of the ambient light becomes higher, and accordingly, the degree of whiteness caused by the opacification of the substrate becomes higher (the substrate appears to be whiter).

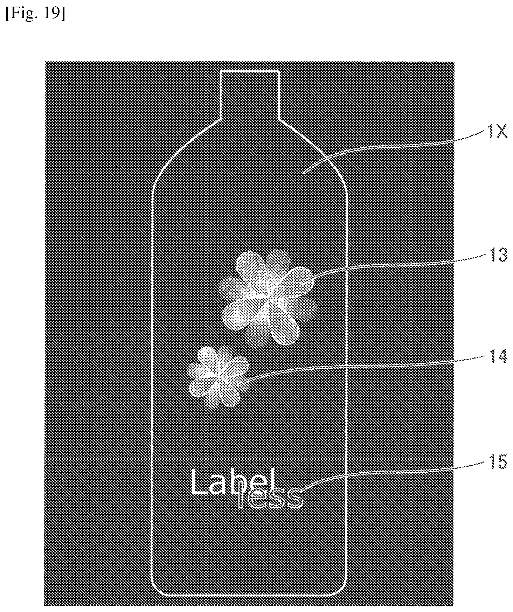

Fig. 19 is a drawing illustrating an example of a container 1X according to the second embodiment. The container 1X is formed with images 13 and 14 expressed with multiple gray levels. In addition, the container 1X is formed with an image 15 formed by overlaying character.

Each of the images 13, 14, and 15 is constituted by multiple pixels, and each pixel is constituted by an aggregate of dot patterns, i.e., second patterns. Gray levels are expressed by changing the spacing between adjacent dot patterns between pixels. Each of such images 13, 14, and 15 is an example of a first pattern.

As explained above, in the present embodiment, the first pattern formed on the container 1 is an image, and each of multiple pixels constituting the image is constituted by the aggregate of the second patterns, and the spacing between the second patterns is changed among pixels. Accordingly, the diffusive properties are changed in respective pixels, whereby the density of the first pattern formed on the container 1 is changed in units of pixels, and the first pattern can be expressed with multiple gray levels.

<Third embodiment>

Next, a container 1b according to the third embodiment is explained.

In the present embodiment, a first pattern constituted by an aggregate of second patterns is formed on a shoulder portion of the container 1b including a mouth portion, the shoulder portion connected to the mouth portion, a body portion connected to the shoulder portion, and a bottom portion connected to the body portion, so that, when the container 1b is seen from the side of the mouth portion, the first pattern can be seen easily.

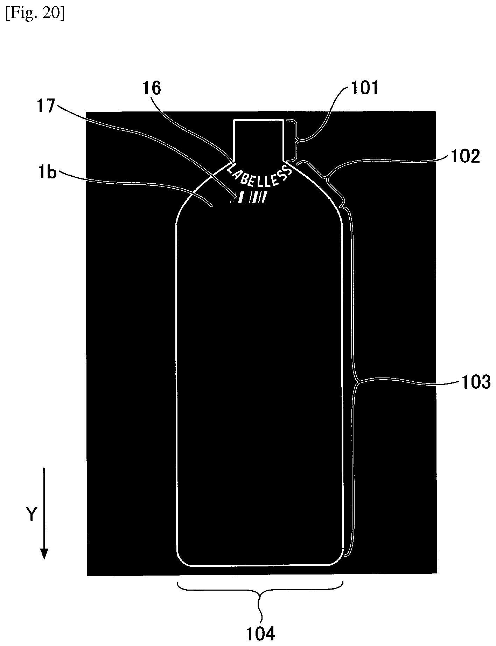

Fig. 20 is a drawing for explaining an example of the container 1b according to the present embodiment. As illustrated in Fig. 20, the container 1b is a bottle in a cylindrical shape, and includes a mouth portion 101, a shoulder portion 102, a body portion 103, and a bottom portion 104.

The mouth portion 101 is a portion of an introduction port for introducing a content such as a beverage into the container 1b. A cap for plugging the container 1b may be provided so as not to spill the content contained in the container 1b.

The shoulder portion 102 is connected to the mouth portion 101 and is a conical portion with its apex being at the mouth portion 101. The body portion 103 is connected to the shoulder portion 102, and is a portion in a cylindrical shape with its cylinder axis being along the Y direction as indicated by an arrow in Fig. 20. The shoulder portion 102 is inclined with respect to a cylindrical shape of the body portion 103.

The bottom portion 104 is a bottom of the container 1b connected to the body portion 103.

The shoulder portion 102 of the container 1b is formed with characters 16, "LABELLESS", and a barcode 17. The characters 16 and the barcode 17 are constituted by aggregates of second patterns.

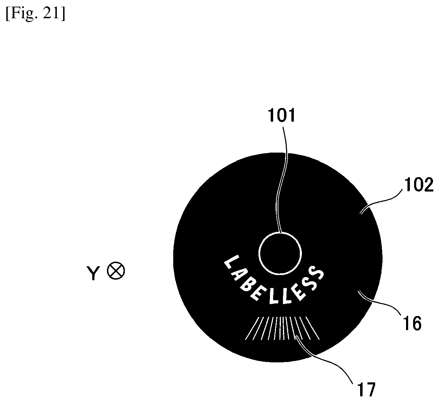

Fig. 21 is a drawing illustrating the container 1b as seen from the side of the mouth portion 101. In Fig. 21, the container 1b is seen from the negative Y direction toward the positive Y direction of Fig. 20. As illustrated in Fig. 21, when the characters 16 and the barcode 17 are formed on the shoulder portion 102, the shoulder portion 102 is inclined with respect to the body portion 103, and accordingly, when a user (consumer) of the container 1b sees the container 1b from the side of the mouth portion 101, the characters 16 and the barcode 17 are in such an orientation as to face the user. Therefore, as compared with the case where the characters 16 and the barcode 17 are formed on the body portion 103, the user can more easily see the characters 16 and the barcode 17.

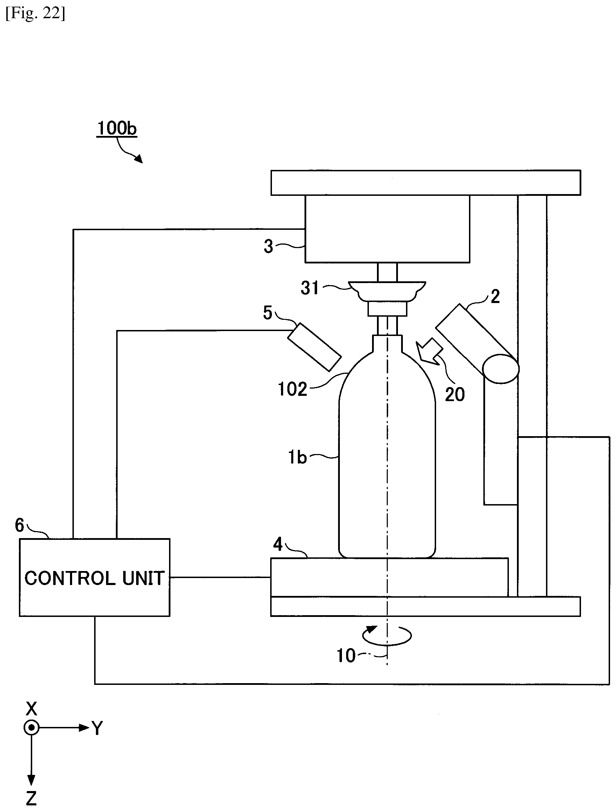

Next, Fig. 22 is a drawing illustrating an example of a configuration of a production apparatus 100b for producing the container 1b. The production apparatus 100b holds the container 1b such that the cylinder axis 10 of the container 1b is in the Z direction. The laser emission unit 2 is arranged to face the shoulder portion 102 of the container 1b and emit the processing laser beam 20.

With the configuration of the production apparatus 100b, the processing laser beam 20 can be scanned facing the shoulder portion 102, and the first pattern constituted by the aggregate of second patterns can be formed easily.

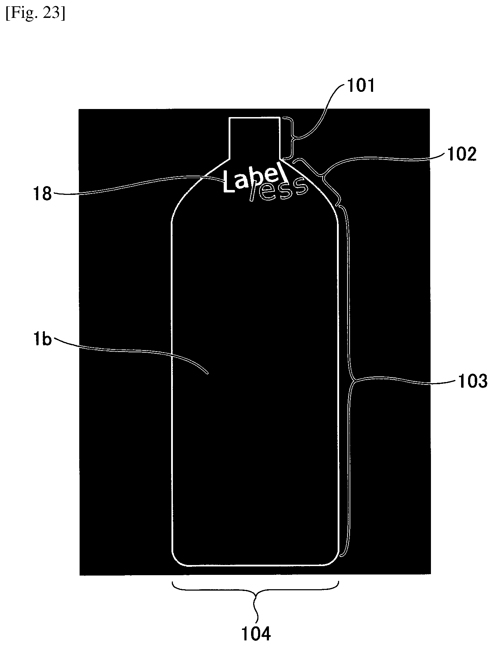

Fig. 23 is a drawing illustrating another example of a container 1b. Characters 18, i.e., a pattern formed by overlaying characters, are formed on the shoulder portion 102 of the container 1b.

As explained above, in the present embodiment, the first pattern constituted by the aggregate of second patterns is formed on the shoulder portion 102 of the container 1b that includes the mouth portion 101, the shoulder portion 102 connected to the mouth portion 101, the body portion 103 connected to the shoulder portion 102, and the bottom portion 104 connected to the body portion 103. Accordingly, when the container 1b is seen from the side of the mouth portion 101, the first pattern can be seen easily.

As a result, for example, even when the container 1b is stored in a storage case with the bottom portion 104 facing downward, the information displayed by the first pattern can be easily seen without removing the container 1b from the storage case, and the container 1b or the content contained in the container 1b can be managed efficiently. The container 1b being stored in a box and the like with the bottom portion 104 facing downward may be, for example, multiple PET bottles for beverage, i.e., the containers 1b, being stored in a storage case.

When the container 1b stored in the storage case can be seen from the bottom side of the storage case through a transparent bottom portion of the storage case or through a penetrating hole formed in the bottom portion of the storage case, the first pattern may be formed on the bottom portion 104 of the container 1b.

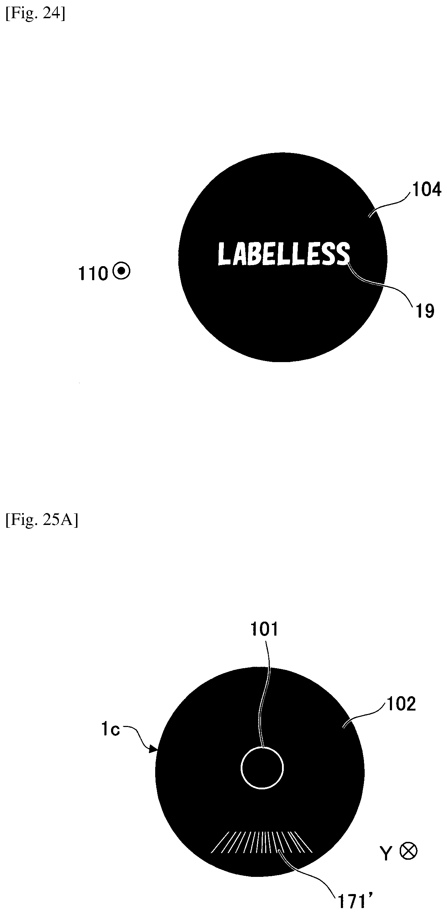

Fig. 24 is a drawing illustrating an example where the first pattern constituted by the aggregate of second patterns is formed on the bottom portion 104 of the container 1b. As illustrated in Fig. 24, characters 19, "LABELLESS", are formed on the bottom portion 104 as an example of a first pattern.

When the first pattern is formed on the bottom portion 104, the information displayed by the first pattern can be easily seen from the bottom side of the storage case without removing the container 1b from the storage case, and the container 1b or the content contained in the container 1b can be managed efficiently.

<Fourth embodiment>

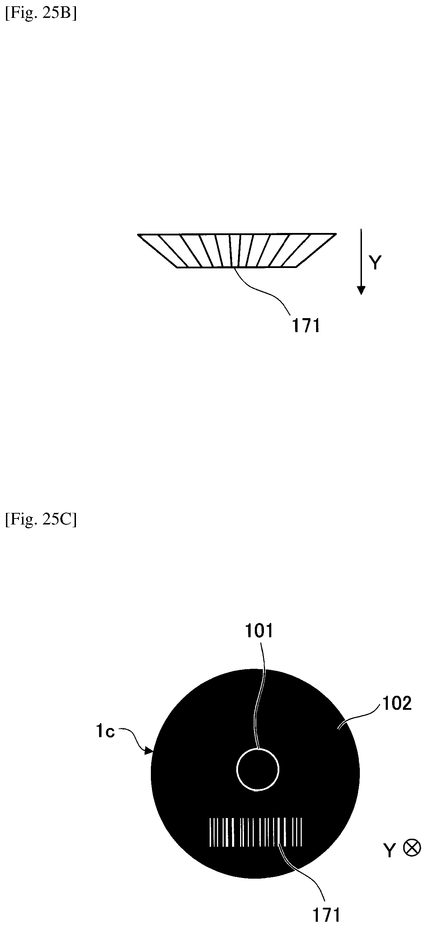

Next, the fourth embodiment is explained. Fig. 25 is a drawing illustrating an example of a container 1c according to the present embodiment. A barcode is formed on the container 1c as an example of a first pattern constituted by an aggregate of second patterns.

In this case, when the shoulder portion of the container is formed in a conical shape with its apex being at the mouth portion, the first portion formed on the shoulder portion is seen as if the width of the first patter increases away from the mouth portion as seen from the side of the mouth portion.

Fig. 25A is a drawing illustrating a barcode 171', i.e., a first pattern, according to a comparative example formed on a shoulder portion 102 of the container 1c as seen from the side of a mouth portion. As illustrated in Fig. 25A, the rectangular barcode 171' is seen as if the rectangular barcode 171' becomes wider away from the mouth portion 101. For this reason, it may be impossible to properly read the barcode 171' from the side of the mouth portion 101.

Therefore, in the present embodiment, the barcode 171 of which the width decreases away from the mouth portion 101 is formed on the shoulder portion 102. Fig. 25B illustrates an example of the barcode 171. The negative Y direction in Fig. 25B corresponds to the side of the mouth portion 101, and the width of the barcode 171 decreases away from the mouth portion 101.

Fig. 25C is a drawing illustrating the barcode 171 formed on the shoulder portion 102 of the container 1c as seen from the side of the mouth portion 101. The barcode 171 is in a pattern of which the width decreases away from the mouth portion 101, and accordingly, when the barcode 171 is seen from the side of the mouth portion 101, the increase in the width of the barcode 171 away from the mouth portion 101 is offset, and the barcode 171 can be recognized correctly as a rectangular barcode. The width of the barcode 171 is preferably optimized in accordance with the inclination angle of the shoulder portion 102 with respect to the body portion 103.

As described above, in the present embodiment, the barcode 171 of which the width decreases away from the mouth portion 101 is formed on the shoulder portion 102. This prevents the barcode 171 from being perceived as being wider away from the mouth portion 101, and codes such as the barcode 171 and a QR code can be correctly read from the side of the mouth portion 101. Note that such reading of codes includes not only reading performed by a user who sees the codes but also reading with a reading device such as a barcode reader or a QR code reader.

Although the embodiments have been described above, the present invention is not limited to the above embodiments specifically disclosed, and various modifications and changes can be made without departing from the scope of claims.

The moving mechanism 4 (see Fig. 1) in the production apparatus 100 may be a mechanism for continuously moving containers 1 such as a conveyor. In such a case, the container 1 is assumed to be held by its own weight of the container 1 and the content, or the container 1 may be simply placed on the moving mechanism 4.

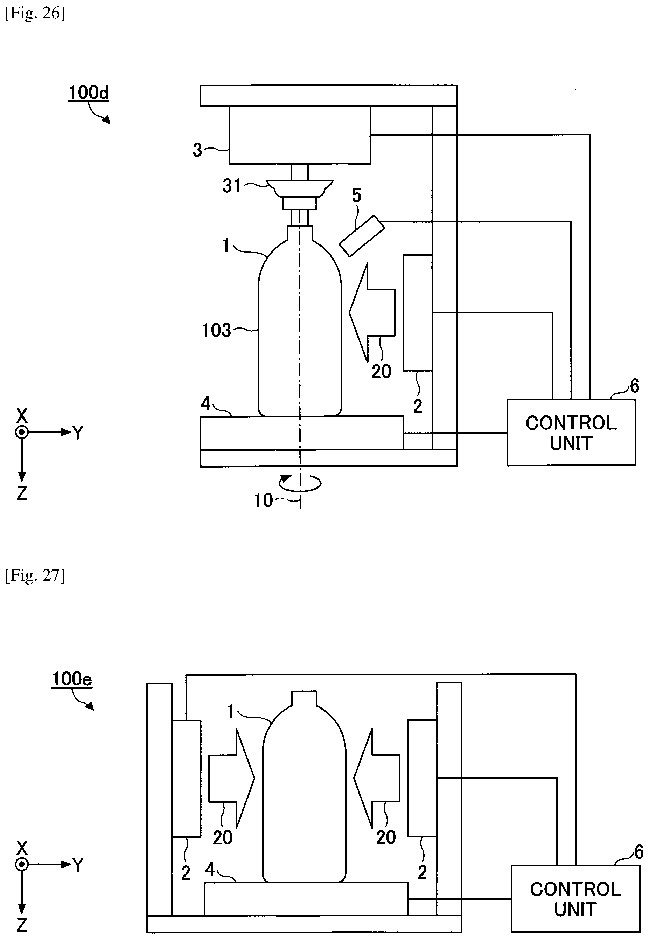

Fig. 26 is a drawing illustrating an example of a configuration of a production apparatus 100d according to a first modified example. The production apparatus 100d holds the container 1 such that the cylinder axis 10 of the container 1 is in the Z direction. The laser emission unit 2 is arranged to face the body portion 103 of the container 1 and emit the processing laser beam 20.

Fig. 27 is a drawing illustrating an example of a configuration of a production apparatus 100e according to a second modified example. The production apparatus 100e supports the container 1 such that the cylinder axis 10 of the container 1 is in the Z direction. One laser emission unit 2 is provided at each of the side in the positive Y direction and the side in the negative Y direction with the container 1 interposed therebetween such that the laser emission units 2 are arranged to face the body portion 103 of the container 1. The two laser emission units 2 emit processing laser beams 20 to the body portion 103 of the container 1 from both sides, i.e., the side in the positive Y direction and the side in the negative Y direction.

With the production apparatus 100e thus configured, the first pattern constituted by the aggregate of second patterns can be formed on both sides, i.e., the side in the positive Y direction and the side in the negative Y direction, of the body portion 103 of the container 1. For this reason, the production apparatus 100e is not provided with the rotation mechanism for rotating the container 1 around the cylinder axis. However, the production apparatus 100e may be provided with such a rotation mechanism.

The moving mechanism 4 may be a mechanism for continuously moving containers 1 such as a conveyor. In such a case, the container 1 is assumed to be held by its own weight of the container 1 and the content, or the container 1 may be simply placed on the moving mechanism 4. The number of laser emission units is not limited to two. Three or more laser emission units may be provided.

The production apparatus 100e as illustrated in Fig. 27 is suitable for the first type of method (i.e., the production method for producing the product 7, including forming the pattern on the container 1, thereafter introducing the content 9 into the container 1, and thereafter sealing the container 1 with the seal member 8) as a production method for producing the product 7.

Specifically, the container 1 on which the image pattern has not yet been formed is placed and moved on the moving mechanism 4 such as a belt conveyor. A container holding means for holding the container 1 with the cylinder axis 10 of the container 1 being in the Z direction may be provided on the moving mechanism 4, and the container holding means may hold the container 1, or the container 1 may be simply placed on the moving mechanism 4.

The container holding means may include a recessed shape with which the bottom portion of the container 1 engages, and the container 1 may be held via this recessed shape. Also, the container 1 can be held by a linear guide member provided on a side surface below or above the container 1.

A pair of such linear guide members may be provided on both side surfaces of the container 1, or three or more guide members may be provided on both side surfaces of the container 1. With multiple containers 1 being linearly, continuously arranged on the moving mechanism 4, the moving mechanism 4 moves, one by one, the vacant containers 1 to the position of the laser emission unit 2 (i.e., pattern forming means) via a position immediately before the laser emission unit 2 while the containers 1 are guided with the container holding means or the linear guide means.

At the position of the laser emission unit 2, the laser is emitted to form the image pattern on the surface, the back surface, or in the inside of the container 1. When an image pattern is formed, the content 9 does not exist in the container 1, and accordingly, the laser emission unit 2 is not affected by the temperature, thermal conductivity, and the like of the content 9 (see Fig. 16). Therefore, the laser emission unit 2 does not have to be controlled by control parameters according to the characteristics such as the temperature, thermal conductivity, and heat capacity of the content 9.

When the image pattern is formed, the container 1 is not sealed by the seal member 8 (see Fig. 16), and accordingly, it is preferable that the dust collection unit 5 inhibits or prevents fine powder and gas generated during image pattern formation from being mixed into the container 1. One or more dust collection units 5 are preferably provided at a position in proximity to the laser emission unit 2 or at a position in proximity to the content filling means, or are preferably provided at both of the position in proximity to the laser emission unit 2 and the position in proximity to the content filling means.

After the image pattern is formed, the moving mechanism 4 successively moves the containers 1 having the image patterns formed thereon to the position of the content filling means that introduces the content 9 into the container 1. The content filling means preferably has a nozzle-like shape when the content 9 is a liquid, powder, or granular solid. The nozzle-like shape is in such a shape that a solid or a fluid can pass through the inside of a cylinder, semi-cylinder, square cylinder, semi-square cylinder, and the like. At a position in proximity to the open mouth portion of the container 1, the nozzle-like shape of the content filling means functions to inject the content 9 into the inside of the container 1 so that the content 9 is contained therein. Further, the moving mechanism 4 moves the container 1, on which the image has been formed and in which the content 9 has been contained, to the position of the seal means that seals the container 1 with the seal member 8. At the position of the seal means, the seal member 8 such as a cap member is inserted to the open mouth portion of the container 1, on which the image pattern has been formed and in which the content 9 has been contained, and is rotated to seal the open mouth portion of the container 1. As a result, the product 7 is produced.

After the container 1 is sealed with the seal member 8, the moving mechanism 4 further moves the product 7, on which the image pattern has been formed and in which the content 9 has been contained with the open mouth portion being sealed with the seal member 8, to a gathering position where multiple containers 1 are gathered, or to a packaging position where the containers 1 are packaged.

The production apparatus 100 illustrated in Fig. 1, the production apparatus 100b illustrated in Fig. 22, and the production apparatus 100d according to the first modified example illustrated in Fig. 26 are suitable for the first type of method (i.e., the production method for producing the product 7, including forming the pattern on the container 1, thereafter introducing the content 9 into the container 1, and thereafter sealing the container 1 with the seal member 8) as a production method for producing the product 7.

The production apparatus 100e according to the second modified example illustrated in Fig. 27 is suitable for the second type of method (i.e., a production method for producing the product 7, including introducing the content 9 into the container 1, thereafter sealing the container 1 with the seal member 8, and forming a pattern of the container 1) as a production method for producing the product 7.

Specifically, the container 1 on which the image pattern has not yet been formed is placed and moved on the moving mechanism 4 such as a belt conveyor. A container holding means for holding the container 1 with the cylinder axis 10 of the container 1 being in the Z direction may be provided on the moving mechanism 4, or the container 1 may be simply placed on the moving mechanism 4. The container holding means may be in a recessed shape (i.e., a recess) with which the bottom portion of each container 1 engages, or may be a linear guide member provided on a side surface below or above the container 1.

A pair of such linear guide members may be provided on both side surfaces of the container 1, or three or more guide members may be provided on both side surfaces of the container 1. With multiple containers 1 being linearly, continuously arranged on the moving mechanism 4, the container holding means or the guide means successively moves to the content filling means that introduces the content 9 into the container 1. The content filling means preferably has a nozzle-like shape when the content 9 is a liquid, powder, or granular solid.

At a position in proximity to the open mouth portion of the container 1, the nozzle-like shape of the content filling means injects the content 9 into the inside of the container 1 so that the content 9 is contained therein. Further, the moving mechanism 4 moves the container 1, in which the content 9 has been contained, to the position of the seal means that seals the container 1 with the seal member 8. At the position of the seal means, the seal member 8 such as a cap member is inserted to the open mouth portion of the container 1, in which the content 9 has been contained, and is rotated to seal the open mouth portion of the container 1.

Thereafter, the moving mechanism 4 successively moves the products 7, in which the content 9 is contained with the open mouth portion of the container 1 being attached with the seal member such as a cap member, to the position of the laser emission unit 2 via a position immediately before the laser emission unit 2. At the position of the laser emission unit 2, an image pattern is formed on the outer surface of the container 1, in the inside (i.e., the inside of the wall portion of the container 1), or on the inner surface (i.e., the surface on the inner side of the container 1) by emitting laser and the like.

In this example, the content is present in the container 1 when the image pattern is formed, and accordingly, the laser emission is affected by the temperature, thermal conductivity, and heat capacity of the content 9. Therefore, the laser emission is preferably controlled by control parameters according to the characteristics such as the temperature, thermal conductivity, and heat capacity of the content 9. In other words, in the production method for producing the product 7 according to the second type of method, the image pattern is formed with control parameters different from control parameters used when the image pattern is formed on the container not containing the content 9.

In the production method for producing the product 7 according to the second type of method, when an image pattern is formed, the product 7 has already been sealed by the seal member 8, and therefore, fine powder, gas, and the like generated during the formation of the image pattern are less likely to be mixed into the product 7.

After the image pattern is formed, the moving mechanism 4 moves the product 7, on which the image pattern has been formed and in which the content 9 has been contained with the open mouth portion being sealed with the seal member 8, to a gathering position where multiple products are gathered, or to a packaging position where the products 7 are packaged.

The production apparatus 100b as illustrated in Fig. 22 is suitable for the second type of method (i.e., a production method for producing the product 7, including introducing the content 9 into the container 1, thereafter sealing the container 1 with the seal member 8, and forming a pattern of the container 1) as a production method for producing the product 7, when the holding unit 31 is removed or the holding unit 31 is changed to a holding unit 31 that holds the seal member 8 sealing the container 1 by engaging with the seal member 8.

The production apparatus 100e according to the second modified example as illustrated in Fig. 27 is suitable for the third type of method (i.e., a production method for producing the product 7, including forming a pattern on the container 1 while introducing the content 9 into the container 1, and thereafter sealing the container 1 with the seal member 8) as a production method for producing the product 7.

Specifically, the container 1 on which the image pattern has not yet been formed is placed and moved on the moving mechanism 4 such as a belt conveyor. The moving mechanism 4 successively moves the container 1 from a position immediately before the laser emission unit 2 to the laser emission unit 2. In proximity to the laser emission unit 2, content filling means that introduces the content 9 into the container 1 is also provided. The content filling means preferably has a nozzle-like shape when the content 9 is a liquid, powder, or granular solid.

At a position in proximity to the open mouth portion of the container 1, the nozzle-like shape of the content filling means injects the content 9 into the inside of the container 1 so that the content 9 is contained therein. A container holding means for holding the container 1 with the cylinder axis 10 of the container 1 being in the Z direction may be provided on the moving mechanism 4, or the container 1 may be simply placed on the moving mechanism 4. The container holding means may be in a recessed shape with which the bottom portion of each container 1 engages, or may be a linear guide member provided on a side surface below or above the container 1.

A pair of such linear guide members may be provided on both side surfaces of the container 1, or three or more guide members may be provided on both side surfaces of the container 1. With multiple containers 1 being linearly, continuously arranged on the moving mechanism 4, the container holding means or the guide means successively moves from a position immediately before the position where the laser emission unit 2 and the content filling means that introduces the content 9 into the container 1 are arranged in proximity to each other to a position where the laser emission unit 2 and the content filling means that introduces the content 9 into the container 1 are arranged in proximity to each other.

At the position of the laser emission unit 2, an image pattern is formed in proximity to the outer surface of the container 1, in the inside (i.e., the inside of the wall portion of the container 1), or on the inner surface (i.e., the surface on the inner side of the container 1) by emitting laser and the like. At a position in proximity thereto, the content filling means that introduces the content 9 into the container 1 introduces the content into the container 1. After the content 9 is contained and the image pattern is formed, the moving mechanism 4 moves the container 1, in which the content 9 has been contained and on which the image pattern has been formed, to the seal means that seals the container 1 with the seal member 8.

At the position of the seal means, the seal member 8 such as a cap member is inserted to the open mouth portion of the container 1 in which the content 9 has been contained and on which the image pattern has been formed, and is rotated to seal the open mouth portion of the container 1. Further, the moving mechanism 4 moves the product 7, in which the content 9 has been contained with the open mouth portion being sealed with the seal member 8 and on which the image pattern has been formed, to a gathering position where multiple products are gathered, or to a packaging position where the products 7 are packaged.

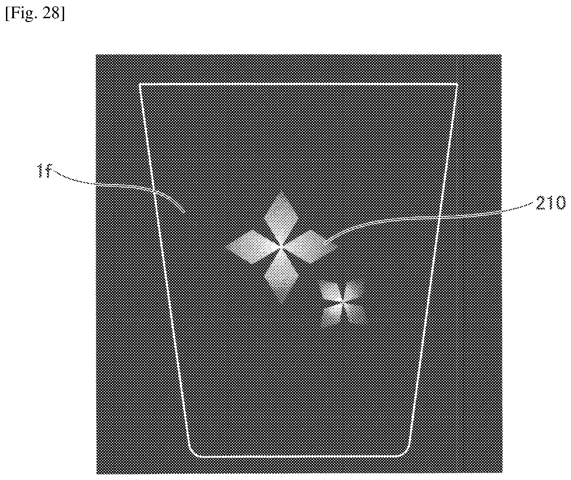

In the above embodiments, bottles such as PET bottles made with resin are explained as an example of a container, but the container is not limited thereto. The container may be a cup or the like made of glass. Fig. 28 is a drawing illustrating an example of a cup 1f, i.e., a container, according to a third modified example. As illustrated in Fig. 28, the first pattern constituted by the aggregate of second patterns 210 is formed on the cylindrical shape of the cup 1f.

In the above embodiments, for example, the container 1 is made of the substrate that is transparent to visible light, and the container 1 is placed in front of a black screen or the like as a background.

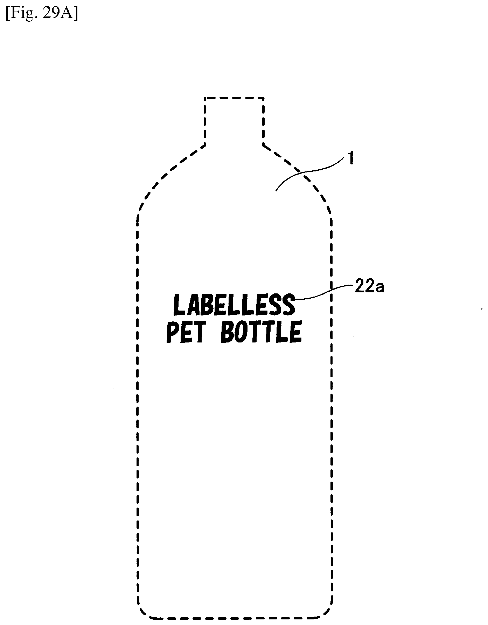

Alternatively, for example, in Fig. 29A, the container 1 is made of resin or glass (transparent resin or transparent glass) that is transparent to visible light, and is placed in front of a white screen as a background. The white screen in the background can be seen through the transparent container 1. Alternatively, it may be considered that a white liquid is contained in the container 1, and the white liquid contained in the container 1 may be deemed to be seen through the transparent container 1.

Characters 22a are formed on the surface of the container 1 of Fig. 29A. The characters 22a are formed by blackening the surface of the substrate of the container 1 by carbonization or the like by emitting the processing laser beam. The blackened characters 22a are seen as being black in contrast to the whiteness in the background or the whiteness of the liquid contained in the container 1. In this way, the substrate of the container 1 is blackened, so that the first pattern such as the characters 22a constituted by the second patterns can be seen.

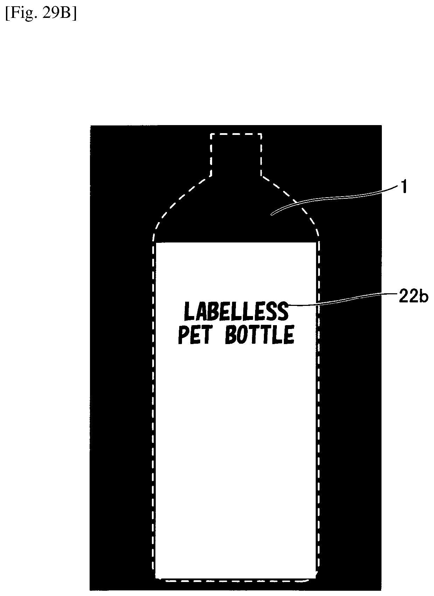

Still alternatively, for example, in Fig. 29B, the container 1 is made of transparent resin or transparent glass, and is placed in front of a black screen as a background. The black screen in the background can be seen through the transparent container 1. Alternatively, it may be considered that a black liquid is contained in the container 1, and the black liquid contained in the container 1 may be deemed to be seen through the transparent container 1.

A pattern obtained by changing a property of the substrate of the container 1 by emitting a processing laser beam to an area other than characters 22b is formed on the surface of the container 1 illustrated in Fig. 29B. The area other than the characters 22b corresponds to the first pattern constituted by the aggregate of second patterns.

In the area other than the characters 22b, the diffusive property of the ambient light increases, and the area other than the characters 22b is seen as being opaque. In the area of the characters 22b, the blackness on the screen in the background or the blackness of the liquid contained in the container 1 is seen. The first pattern such as the characters 22b can be displayed in the manner as described above.

In the embodiments, for example, the container is in the cylindrical shape, but the shape of the container is not limited thereto, and the container may be a box-shaped container, a cone-shaped container, or the like.

In the embodiments, for example, the first pattern constituted by the aggregate of second patterns is formed on the surface of the container, but the first pattern constituted by the aggregate of second patterns can also be formed in the inside of the substrate constituting the container.

When the contrast of the first pattern is increased with respect to the color of the content contained in the container 1 having transmittance to visible light, the container 1 can be formed with a pattern having a large amount of information with a high visibility. For example, when the content is black, the visibility of the first pattern is improved by making the first pattern obtained by opacifying the substrate of the container. In contrast, when the content is white, the visibility of the first pattern is improved by making the first pattern obtained by blackening the substrate of the container.

The shape of the container may be any shape such as a columnar or quadrangular prism shape that does not have a shoulder portion and an inclination portion. The content contained in the container may be in any color, and may be either cold or warm. The content contained in the container may anything such as a carbonated beverage or colloid (yogurt and the like), as long as the content can be contained in the container. Examples of contents include coffee, tea, beer, water, juice, carbonated beverage, milk, and the like, but are not limited thereto. The content contained in the container may be anything that can be contained in a container.

The processing state can be changed according to the content contained in the container. For example, depending on the content of the container, the density for opacifying or blackening the substrate can be controlled by changing a processing state, e.g., adjusting the intensity of the laser.

The second pattern may be formed in conformity with the embossed shape of the pet bottle. The contours, the insides, and the outer peripheries of protrusions and recesses can be processed with the use of inclination processing explained above.

<Example of wavelength of laser beam source>

Hereinafter, the wavelength of the laser beam source is explained in more detail. The wavelength of the laser beam source is not limited to the range of ultraviolet light and visible light, and may be a wavelength in the range of near-infrared light to mid-infrared light. Specifically, the wavelength of the laser beam source is preferably 1200 nm to 1500 nm.

For example, the laser beam in the range of near-infrared light to mid-infrared light is preferable, because a high speed processing can be performed when the substrate is opacified through foaming (thermal denaturation) and because the production apparatus can be made into an array configuration with less difficulty. The wavelength in the range of ultraviolet light is preferable because the light intensity of the laser beam can be increased to perform processing by abrasion.

In each wavelength band, there is a particular wavelength with an outstandingly higher absorption rate for a target substrate than the absorption rates of wavelengths around the particular wavelength, and therefore, it is particularly preferable to use this particular wavelength.

Table 1 below shows an example of a particular wavelength with an outstandingly higher absorption rate for each wavelength band. In Table 1, the right column indicates "Approximate Wavelength Band", and the left column indicates a particular wavelength with an outstandingly higher absorption rate corresponding to the "Approximate Wavelength Band". The center column indicates the absorption rate achieved by the particular wavelength with the outstandingly higher absorption rate.

[Table 1]

| Wavelength | Absorption Rate | Approximate Wavelength Band |
|---|---|---|
| 1660 nm | 0.24 | 1600 nm to 1720 nm |
| 2130 nm | 0.36 | 2050 nm to 2210 nm |
| 2270 nm | 0.65 | 2200 nm to 2340 nm |
| 2340 nm | 0.69 | 2260 nm to 2420 nm |
| 2450 nm | 0.76 | 2350 nm to 2550 nm |
| 5800 nm | 0.44 | 5700 nm to 6000 nm |
| 8030 nm | 0.46 | 7780 nm to 8230 nm |
| 9120 nm | 0.42 | 8600 nm to 9500 nm |
| 9760 nm | 0.28 | 9600 nm to 10100 nm |
| 11500 nm | 0.22 | 11400 nm to 11600 nm |
| 13800 nm | 0.47 | 13500 nm to 14500 nm |

The absorption rate differs depending on the material, the thickness, or the like, of the substrate, but Table 1 shows an example in which the substrate is made of PET with a thickness of 0.5 mm. Table 1 shows wavelengths with absorption rates of 20% or more.

When a laser beam source capable of emitting a wavelength as shown in Table 1 is used, the absorption rate of the laser beam on the substrate can be secured, and a pattern with a high visibility can be formed at a high speed. An example of a laser beam source includes a YAG laser that emits a laser beam having a wavelength of 1660 nm.

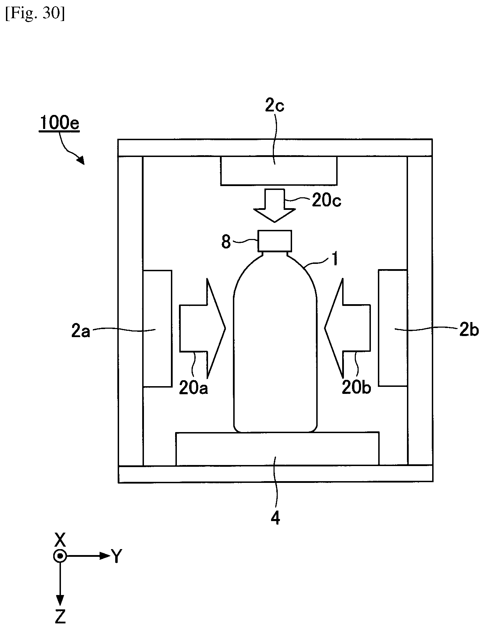

Laser beams with different wavelengths can be emitted depending on the location of the container 1. Fig. 30 is a drawing illustrating an example of a configuration for emitting laser beams of different wavelengths depending on the location. As illustrated in Fig. 3, the production apparatus 100e includes laser emission units 2a, 2b, and 2c. The laser emission unit 2a emits a processing laser beam 20a of a first wavelength to a first surface (for example, a surface on the side in the negative Y direction of Fig. 30) of the container 1, and the laser emission unit 2b emits a processing laser beam 20b of a second wavelength to a second surface (for example, a surface on the side in the positive Y direction of Fig. 30) of the container 1. A laser emission unit 2c emits a processing laser beam 20c of a third wavelength to a surface of a seal member 8 of the container 1.

The laser beam sources provided in the laser emission units 2a, 2b, and 2c can emit processing laser beams 20a, 20b, and 20c, respectively. The first wavelength, the second wavelength, and the third wavelength are different wavelengths. However, the wavelengths of all the laser beam sources do not necessarily have to be different, and some laser beam sources may emit lasers of the same wavelength. The laser emission units 2a, 2b, and 2c can emit the processing laser beams in parallel.

For example, when the material of the seal member 8 is different from the material of the container 1 and the absorption rate with respect to the seal member 8 at the first wavelength is lower than the absorption rate with respect to the container 1 at the first wavelength, a second wavelength at which the absorption rate with respect to the seal member 8 is about the same as the absorption rate with respect to the container 1 at the first wavelength is emitted as the processing laser beam 20b. As a result, the speed of pattern formation on the container 1 with the processing laser beam 20a and the speed of pattern formation on the seal member 8 with the processing laser beam 20b match each other.

With the first wavelength and the third wavelength being different from each other, for example, a pattern of a density different from the pattern formed on the first surface of the container 1 with the laser emission unit 2a can be formed on the second surface of the container 1 with the laser emission unit 2c.

<Example of denaturation mark>

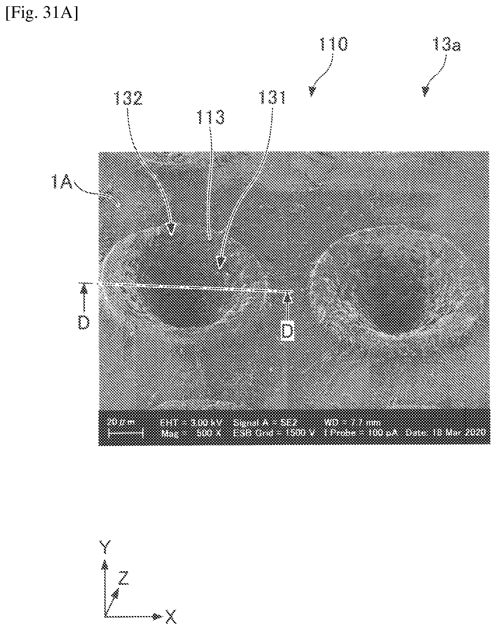

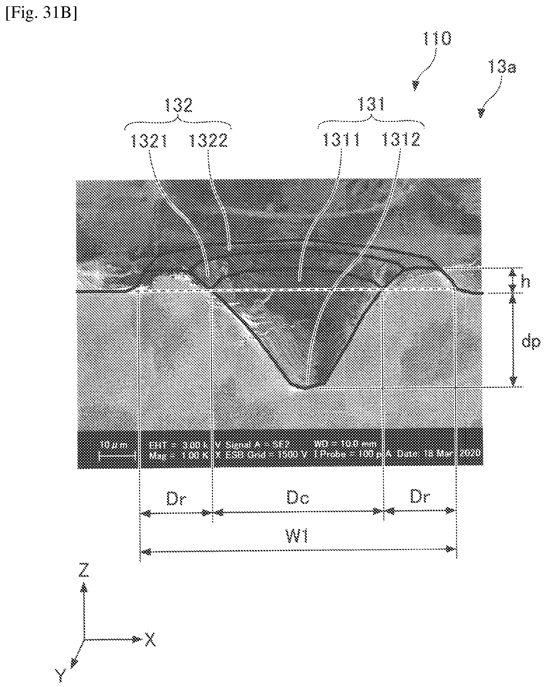

Next, a denaturation mark of a substrate with an emission of a processing laser beam is explained. Figs. 31A and 31B are micrographs of denaturation marks taken with a scanning electron microscope (SEM). Fig. 31A is a perspective view as seen from above. Fig. 31B is a perspective view taken along line D-D as seen in the direction of the arrows D of Fig. 31A. In Fig. 31A, the denaturation mark 110 is observed.

As illustrated in Figs. 31A and 31B, the denaturation mark 110 includes a recessed portion 131 and a projecting portion 132. The recessed portion 131 includes a first inclined surface 1311 and a bottom portion 1312, and is formed in a bowl shape. A recessed portion width Dc represents the width of the recessed portion 131. The depth dp represents a height (i.e., a height in the Z axis direction) of the bottom portion 1312 from the surface of the non-patterned area in which the pattern is not formed.

The projecting portion 132 includes a vertex 1321 and a second inclined surface 1322, and is formed in a shape of a surface of a torus. The surface of the torus is a rotation surface obtained by rotating a circumference. A torus width Dr represents the width of the torus surface portion of the projecting portion 132 in the radius direction. A height h represents a height (i.e., a height in the Z axis direction) of the vertex 1321 from the surface of the non-patterned area.

A denaturation mark width W1 represents the width of the entire denaturation mark 110. The denaturation mark width W1 is, for example, about 100 um. The first inclined surface 1311 and the second inclined surface 1322 are continuous surfaces. The continuous surfaces mean surfaces made of the same material and connected without a step.

As illustrated in Figs. 31A and 31B, the surfaces constituting the recessed portion 131 and the projecting portion 132 are rough surfaces formed with uneven portions 413 of very small sizes. The uneven portions 413 include recessed portions and projecting portions having widths smaller than the denaturation mark width W of the denaturation mark 110. Typically, the uneven portions 413 include recessed portions and projecting portions having widths of about 1 $\mu$m to 10 $\mu$m.

As illustrated in Fig. 31A, fragments that are generated in the processing of the denaturation mark 110 are scattered between adjacent denaturation marks, and the surfaces are roughened also by these fragments. In a pattern area 13a, the surface roughness is higher than the non-patterned area, because of the uneven portions 413 and such fragments roughening the surfaces.

For example, the production apparatus according to the embodiment emits a processing laser beam to a substrate 1A and denatures the surface of the substrate 1A to form the denaturation mark 110. A single denaturation mark 110 may be formed by focusing the processing laser beam on one point of the substrate 1A. Multiple denaturation marks 110 may be formed by two-dimensional scanning of the processing laser beam. Alternatively, multiple denaturation marks 110 can also be formed by multiple processing laser beams emitted from the multiple laser beam sources in the array configuration. Furthermore, an enlarged processing laser beam may be emitted to a mask member having a plurality of light transmitting apertures corresponding to the positions of multiple denaturation marks, and multiple denaturation marks may be formed in parallel with a single exposure by the multiple transmission laser beams transmitted through the respective light transmitting apertures of the mask member.

<Example of temperature control with the production apparatus 100f >

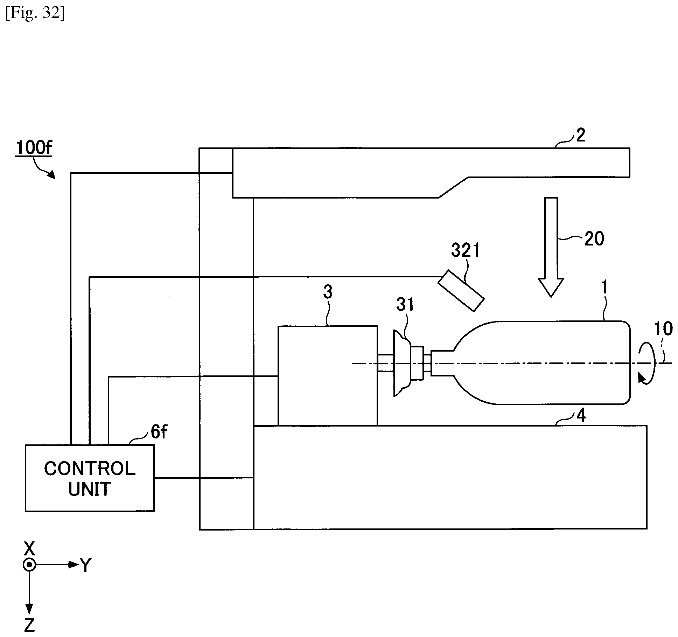

Next, temperature control with the production apparatus 100f according to a fifth embodiment is explained. Fig. 32 is a drawing for explaining an example of a temperature control with the production apparatus 100f. As illustrated in Fig. 32, the production apparatus 100f includes an air blower 321 and a control unit 6f.

The air blower 321 is an air blower located in proximity to a portion of the container 1 where the processing laser beam 20 is emitted. The air blower 321 cools the portion of the container 1 by blowing air onto the portion of which the temperature has risen due to the emission of the processing laser beam 20.

The air blower 321 can switch ON and OFF the air blow and change the amount of air blow under the control of the control unit 6f. In addition, the air blower 321 can be held by holding means such as a robot hand, and the holding means can be driven to change the blow position of air according to the emission position of the processing laser beam 20.

In this case, the air blower 321 is illustrated as a configuration for cooling the portion of the container 1 of which the temperature has risen due to the emission of the processing laser beam 20, but the embodiment is not limited thereto, and any configuration having a cooling function may be employed.

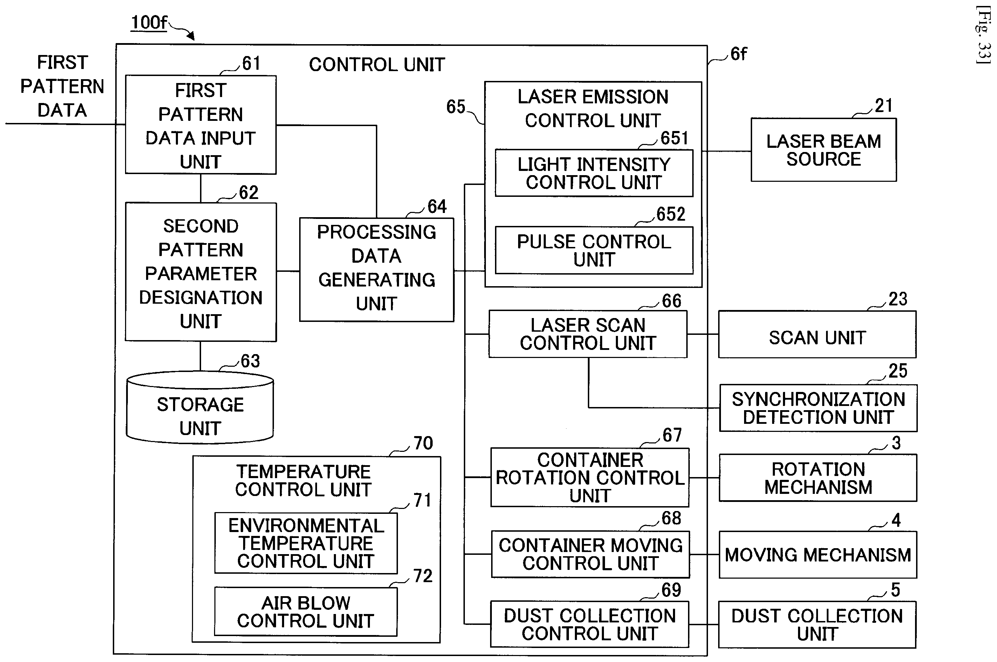

Fig. 33 is a block diagram for explaining an example of a functional configuration of the control unit 6f. The control unit 6f has a temperature control unit 70. The temperature control unit 70 includes an environment temperature control unit 71 and an air blower control unit 72.

The environment temperature control unit 71 controls heating means such as a heater and cooling means such as a heat exchanger to control the environment temperature of the entire internal configuration of the production apparatus 100f.

The air blower control unit 72 can perform control for switching ON and OFF the air blow and changing the amount of air blow with the air blower 321.

<Example of formation of pattern on seal member 8>

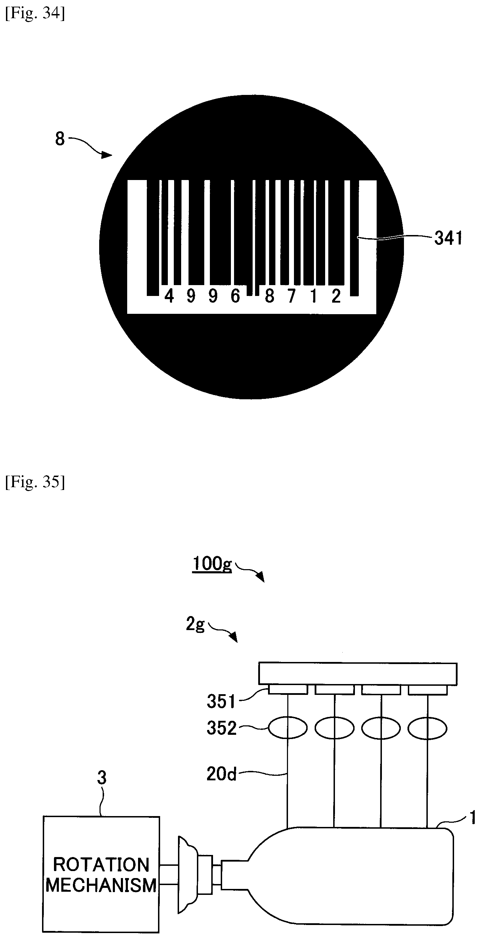

Next, formation of a pattern on the seal member 8 such as a cap for sealing a PET bottle is explained. Fig. 34 is a drawing illustrating an example of a pattern formed on the seal member 8. As illustrated in Fig. 34, a one-dimensional barcode 341, i.e., an example of a pattern, is formed on the surface of the seal member 8. In order to form such a pattern, the laser emission unit 2c in the production apparatus 100e illustrated in Fig. 30 can be used.

In the one-dimensional barcode 341 of Fig. 34, a processing laser beam is emitted to the surface of the seal member 8 in black to opacify the surface, and linear areas other than the opacified area are caused to function as a one-dimensional barcode. It is preferable to form a short one-dimensional barcode having a short length such as a shortened code, as the seal member 8 is small.

Instead of opacifying the substrate, the substrate may be denatured to a color other than white to cause the substrate to function as a barcode. Further, bar portions (linear areas) of a barcode may be formed in a portion other than the denaturation portion, or the barcode may be formed by the denaturation portion.

For example, the production apparatus according to the embodiment can form, on demand for each PET bottle, a one-dimensional barcode that indicates the type of beverage contained in the PET bottle on the surface of the plain cap that seals the PET bottle. Therefore, a cap formed with a one-dimensional barcode according to the type of beverage can be obtained at any time without keeping inventory. In addition, information can be displayed on the cap made of a single material without using a label, so that adaptability to recycling can be ensured.

<Example of multiple laser beams>

Next, formation of a pattern using multiple laser beams emitted from an arrayed layer is explained. Fig. 35 is a drawing illustrating an example of a configuration for emitting multiple laser beams. It should be noted that the multiple laser beams mean two or more laser beams.

As illustrated in Fig. 35, the production apparatus 100g includes a laser emission unit 2g and a rotation mechanism 3. The laser emission unit 2g includes multiple semiconductor lasers 351 arranged in an array form and multiple condensing lenses 352 arranged in one-to-one association with the respective semiconductor lasers 351.

The laser emission unit 2g emits laser beams from the multiple semiconductor lasers 351 via the condensing lenses 352 to the substrate of the container 1. The production apparatus 100g can form a pattern on the substrate of the container 1 by emitting laser beams from the semiconductor lasers 351 in parallel while rotating the container 1 with the rotation mechanism 3.

The laser emission unit 2d may include multiple optical fibers arranged in one-to-one association with the respective semiconductor lasers 351, and may be configured to emit the laser beams guided by the respective optical fibers to the container 1.

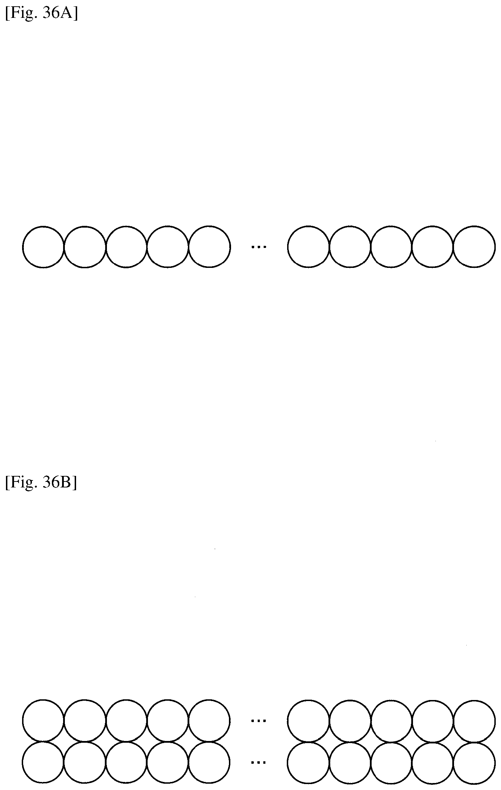

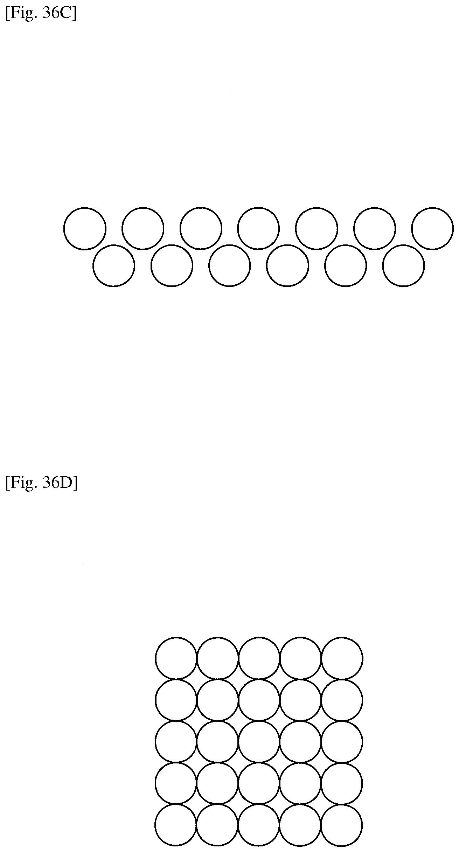

Figs. 36A to 36D are drawings illustrating examples of various kinds of multiple laser beams. In Fig. 36A, multiple laser beams are arranged in one row. In Fig. 36B, multiple laser beams are arranged in two rows. In Fig. 36C, multiple laser beams are arranged two-dimensionally in a lattice form. In Fig. 36D, multiple laser beams are arranged two-dimensionally in a grid form. The production apparatus 100g can emit multiple laser beams of Figs. 36A to 36D to the container 1.

In Fig. 36A, for example, 254 laser beams are arranged, so that laser beams can be emitted in parallel to an area with a width of 1 inch and a pixel size of 100 $\mu$m on the substrate of the container 1.

For example, the multiple laser beams of Fig. 36A enable high-speed pattern formation with a configuration achieved at a low cost. The multiple laser beams of Fig. 36B can form a pattern at a speed higher than the multiple laser beams of Fig. 36A.

The multiple laser beams of Fig. 36C can increase the density of beams (dot density) on the substrate. The multiple laser beams of Fig. 36D can form a pattern at a speed still higher than the multiple laser beams of Fig. 36A and 36B. The multiple laser beams of Fig. 36D can also be used to form a two-dimensional pattern without rotating or moving the container 1.

<Sixth embodiment>

Next, the sixth embodiment is explained. In the explanation about the sixth embodiment, the same or similar constituent elements as those of the above embodiments are denoted with the same or corresponding reference numerals, and explanation thereabout may be omitted as appropriate. A substrate according to the sixth embodiment is a substrate on which a predetermined shape constituting a pattern is formed in at least a portion of an area. The substrate means a material portion of an object. An example of an object includes a container. An example of a container includes a polyethylene terephthalate (PET) bottle constituted by a resin such as PET to contain a beverage. However, the object is not particularly limited. The shape and the material of the container is not limited, and the container may be of any shape and any material.

"At least a portion of an area" of the substrate includes an area of a surface of the substrate. The surface of the substrate means a surface of the material in contact with outside air. In the embodiment, a term, "a surface of the substrate", is used as a term opposite in meaning to the interior portion of the substrate, and for example, in a case of a plate-shaped substrate, both of a surface on the outer side and a surface on the inner side of the substrate corresponds to the surface of the substrate. In a case of a tubular substrate, both of a surface on the outer side and a surface on the inner side of the substrate corresponds to the surface of the substrate.

In a manner similar to the first pattern described in the embodiments explained above, the pattern includes characters, a code such as a barcode, figures, and the like to indicate information such as a name, an identification number, a manufacturer, the date and time of manufacture, and the like of a container or a content such as a beverage contained in the container.

In a container such as a PET bottle, a recording medium recorded with such information may be pasted to the surface of the container to display the information. In the embodiment, without using the recording medium, the information is displayed by forming a pattern indicating the information on the surface of the substrate constituting the container.

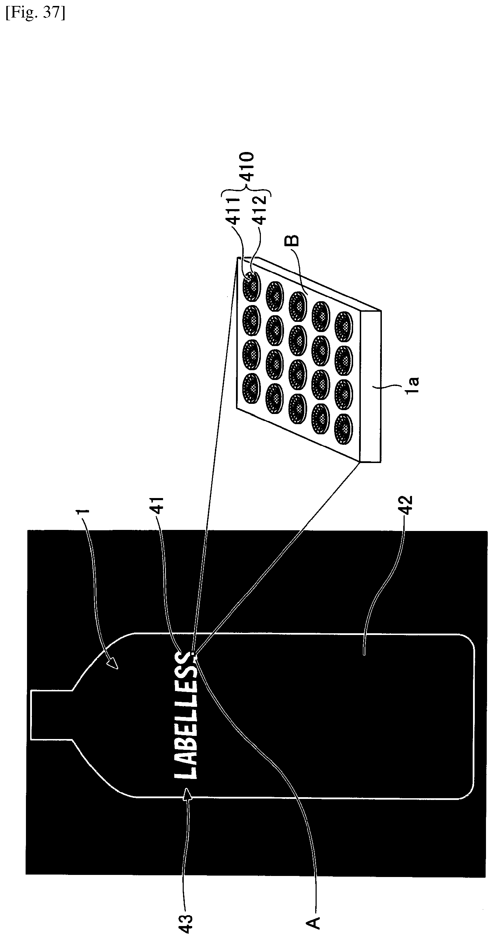

In this case, Fig. 37 is a drawing for explaining an example of a predetermined shape formed on the substrate according to the present embodiment. Fig. 37 illustrates a portion of a substrate 1a constituting a container 1 on a surface of which a pattern 41 is formed. The container 1 is constituted by, for example, a substrate 1a made of a PET resin having transparency to visible light. The visible light is a light of which the lower bound wavelength is about 360 nm to about 400 nm and of which the upper bound wavelength is about 760 nm to about 830 nm.

The pattern 41 constitutes a character string, "LABELLESS". An area A is a portion of an area of a character "S" of the pattern 41. A perspective view B is a drawing schematically illustrating an area A in an enlarged manner in order to explain the detail of the configuration of the pattern 41.

As illustrated in the perspective view B, the area A includes multiple dot portions 410. These dot portions 410 are formed in at least a portion of an area of the substrate. The dot portion 410 is an example of a predetermined shape constituting a pattern. The predetermined shape includes a shape formed on the surface of the substrate and an inner shape such as a void portion and the like under the surface of the shape formed on the surface of the substrate.

The dot portion 410 includes a recessed portion 411 and a projecting portion 412. The recessed portion 411 is a portion recessed from the surface of the substrate 1a constituting the container 1, and is an example of a predetermined recessed portion. The projecting portion 412 is a portion projecting from the surface of the substrate 1a constituting the container 1, and is an example of a predetermined projecting portion. The projecting portion 412 is formed around the recessed portion 411 to surround the recessed portion 411.

Multiple dot portions 410 are formed as an aggregate on the substrate 1a constituting the container 1 to constitute a character string, "LABELLESS", in the pattern 41. In this case, the aggregate means a mass or body formed by combining individual elements. The pattern 41 is constituted by an aggregate of multiple dot portions 410.

In the substrate 1a, a pattern area 43 formed by patterns 41 of multiple dot portions 410 corresponds to a first area. A non-pattern area 42 of the substrate 1a other than the first area corresponds to a second area.

Since multiple dot portions 410 are formed in the pattern area 43, the reflection direction and the light diffusive property of the light incident on the container 1 are different from the reflection direction and the light diffusive property of the light incident on the non-pattern area 42. Therefore, the pattern area 43 and the non-pattern area 42 are different in at least one of the light transmittance or the light reflectance with respect to light incident upon the container 1. With at least one of the light transmittance or the light reflectance being different, a person who sees the container 1 can visually recognize the pattern 41 formed on the container 1.

The entire width (i.e., a dot width) of each of the multiple dot portions 410 and the distance (i.e., a dot distance) between neighboring dot portions 410 are small relative to the pattern 41. Accordingly, the person who sees the container 1 can visually recognize the characters, "LABELLESS", of the pattern 41 without visually recognizing the dot portions 410 per se.

The distance between dots is preferably 100 $\mu$m or less although the distance for making the dot portions 410 per se be visually not recognizable may be different according to the eyesight of the person who sees the container 1, the distance between the eyes and the container 1, and the like. The dot width is also the smaller the better. More particularly, the dot width is preferably smaller than about 100 um, at which size the dot portion per se cannot be recognized. This is hereinafter explained in detail.

When a person with a visual acuity of about 1.5 in decimal sees the container 1 at a distance of about 30 cm, the person can generally distinguish a black and white dot of 50 $\mu$m. When the contrast between black and white is low, this smallest size of dot that can be distinguished becomes larger, but it is generally about 50 $\mu$m. However, a dot as small as 30 $\mu$m can be visually recognized simply in terms of its presence or absence, and if the contrast is high, a dot of 10 $\mu$m may be visually recognized in some cases.

When there are two dot portions 410 adjacent to each other, whether the two dot portions 410 can be visually recognized depends on the resolution and the like of the eyes of a person. Note that the resolution is the minimum distance that can be recognized as two points separated from each other.

The resolution of the eyes of a person is generally 100 $\mu$m at a distance of 30 cm, although it depends on the visual acuity. The distance of 30 cm corresponds to a distance at which a person picks up a PET bottle containing a beverage and the like and reads information printed on the label of the PET bottle. Specifically, when a person picks up a PET bottle with his or her elbow slightly bent, the distance between the eyes and the PET bottle will be about 30 cm. When the physique of a person is taken into consideration, this distance varies in a range of 30 cm to 50 cm. The resolution is about 100 $\mu$m at a distance of 30 cm and about 160 $\mu$m at a distance of 50 cm.

According to another index, when 200 dpi (dot per inch) is guaranteed as the boundary of the resolution, and if the gap between adjacent dots is 130 $\mu$m or less, the dots are not seen separately, and are visually recognized as a single mass.

Therefore, the gap between dots is set to preferably 160 $\mu$m or less and more preferably 100 $\mu$m or less, so that the dot portions 410 are not visually recognized as being separate one by one and are visually recognized as a continuous body, and a pattern of characters, i.e., "LABELLESS", of the pattern 41 can be visually recognized. When the size of the dot becomes larger than 100 $\mu$m, a change in the shape of the dot per se can be visually recognized in some cases. For this reason, the dot is set to preferably 160 $\mu$m or less and more preferably 100 $\mu$m or less, so that even when there is a change in the shapes in the dots, the dots can be perceived as a uniform pattern, and a pattern such as characters which are an aggregate of the dots can be visually recognized as a uniform pattern without any granularity.

The dot portions 410 may be formed by various processing methods such as laser processing, electric discharge processing, etching processing, cutting processing, or molding using a mold. However, among them, the laser processing method is suitable because the laser processing method can process a substrate without coming into contact with the substrate, and the laser processing method can be performed at a high speed by scanning the laser beam, arraying the light sources, using a pattern exposure, and the like.

In the laser processing, the sizes, shapes, depths, and the like of the dot portions 410 can be changed by adjusting the light energy, the size of the laser beam, the irradiation time, and the like of the laser light (laser beam) to be emitted. The cross-sectional intensity distribution of the laser beam is generally Gaussian distribution, but the intensity distribution can be adjusted by combining the laser beams of the arrayed light sources, or a top hat form intensity distribution in which the intensity distribution in the center is flat can also be generated through adjusting the design of the emission optical system.

The recessed portion 411 of the dot portion 410 is formed by melting, burning, vaporizing, or deforming a part of the substrate 1a where the laser light is emitted. The projecting portion 412 is formed by a part of the substrate 1a that is scattered from the recessed portion 411 without being burnt or vaporized and that adheres to and solidifies at the periphery of the recessed portion 411. Since the processing mainly uses thermal energy, resin, which has a relatively low thermal conductivity, is suitable for the material of the substrate 1a, but the processing may also be applied to other materials such as glass.

Various predetermined shapes such as the dot portions 410 and the like can be formed by controlling the thermal conductivity. To control the thermal conductivity, for example, it is conceivable to make the substrate 1a from a high thermal conductive material, or bring another member with a high thermal conductivity in close contact with the substrate 1a to rapidly release the heat of the substrate 1a caused by emission of the laser light. Examples of members with a high thermal conductivity include a coolant, a metal, and the like.

In addition, since phenomena such as melting, evaporation, crystallization, or foaming in the laser processing occur irregularly in the irradiated area, the surface of the pattern area 43 becomes rough to result in a higher surface roughness than the surface roughness of the non-pattern area 42. In the pattern area 43, the surface roughness is high, and accordingly, the light dispersion property with respect to light incident upon the container 1 becomes higher than the light dispersion property of the non-pattern area 42. As a result, the contrast of the pattern 41 is increased, and the visibility is further improved. In this respect as well, it is more preferable to apply the laser processing.

In the present embodiment, the pattern is constituted by an aggregate of multiple dot portions 410 including either the recessed portion 411 or the projecting portion 412 or including both of the recessed portion 411 and the projecting portion 412. Accordingly, the surface area along the shape of the recessed portion 411 and the projecting portion 412 increases, so that as compared with a case where the pattern is constituted by grooves or recesses as a mass that is not formed by an aggregate of multiple dot portions 410, the area with a higher surface roughness further increases. In addition, a pattern is constituted by an aggregate of multiple dot portions 410, and accordingly, the surface area along the shape of multiple dot portions 410 further increases. As a result, the light dispersion property is further increased, and the contrast is increased, so that the visibility is further improved.

In the example illustrated in the perspective view B, the dot portions 410 are regularly arranged in a square lattice arrangement, but the dot portions 410 are not limited to this arrangement. The dot portions 410 may be formed as being arranged in a triangular lattice pattern or a honeycomb pattern. The dot portions 410 do not have to be arranged regularly, and may be arranged irregularly so that the distances between the arranged dots are different from each other.

The pattern 41 including the character string, "LABELLESS", has been shown as an example, but the embodiment is not limited thereto. The pattern 41 may be constituted by a symbol or a code such as any given character string, a figure or a picture, and a barcode or a QR code, and a combination thereof. In other words, the pattern 41 is an image, and the image can be formed by a predetermined shape of the dot portions 410 and the like.

<Example of configuration of dot portion 410>

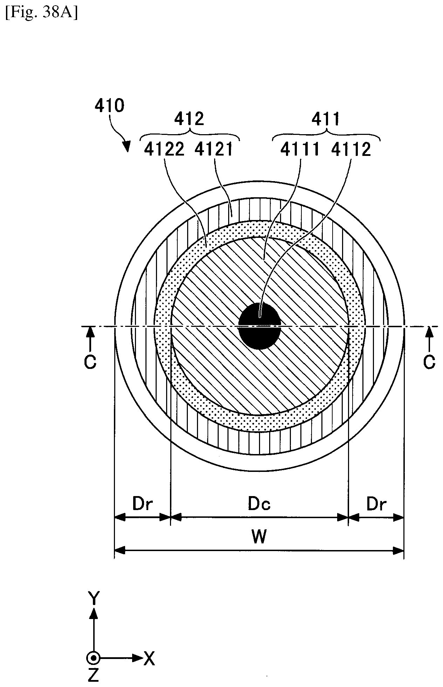

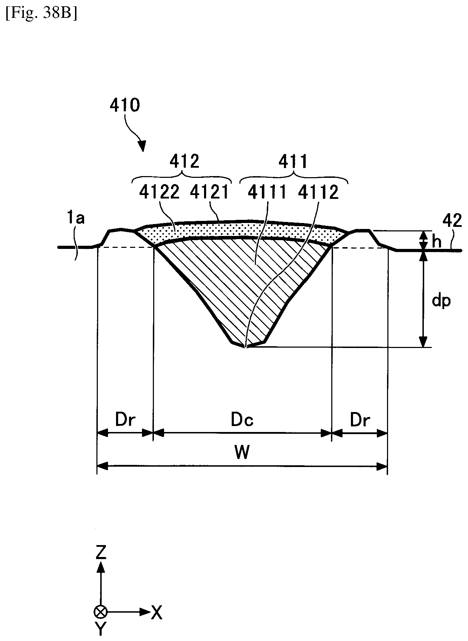

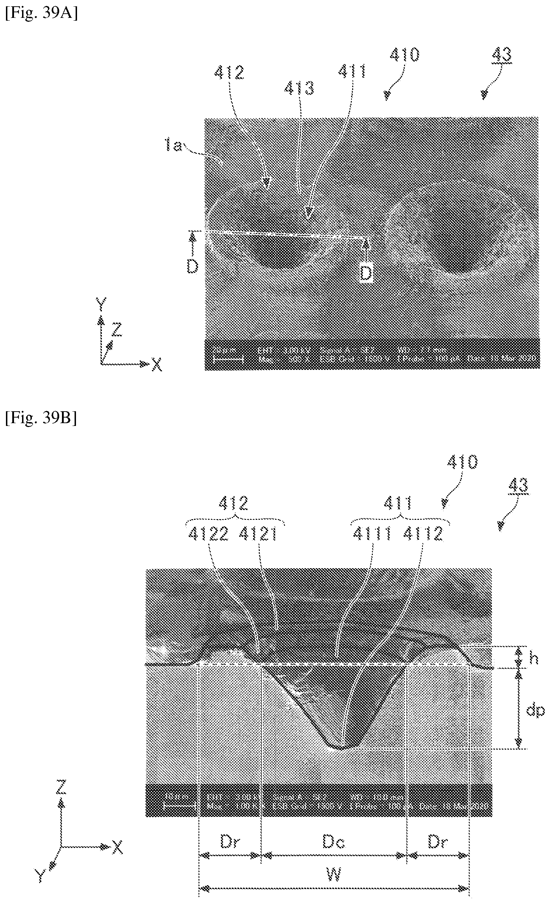

Next, the detail of the configuration of the dot portions 410 is explained with reference to Figs. 38A, 38B, and 39.

Fig. 38A is a plan view for explaining an example of configuration of the dot portion 410. Fig. 38B is a cross-sectional view taken along a long dashed short dashed line C-C as seen in the direction indicated by the arrows C of Fig. 38A. Fig. 39A is a micrograph in a scanning electron microscope (SEM) illustrating the dot portion 41 in a perspective view as seen from upper side. Fig. 39B is a SEM micrograph in a cross-sectional view taken along a long dashed short dashed line D-D as seen in the direction indicated by the arrows D of Fig. 39A. Figs. 39A and 39B are SEM micrographs magnifying a portion of the pattern area 43 in an enlarged manner. Fig. 39A illustrates the entirety of two of the multiple dot portions 410, and slightly shows portions of two dot portions 410 neighboring in the Y axis positive direction and portions of two dot portions 410 neighboring in the Y axis negative direction. The dot width is formed to be about 100 um.

As illustrated in Figs. 38A, 38B and Figs. 39A, 39B, the dot portion 410 includes a recessed portion 411 and a projecting portion 412. The recessed portion 411 includes a first inclined surface 4111 (a portion hatched by diagonal lines) and a bottom portion 4112 (solidly filled portion), and is formed in a bowl shape. A recessed portion width Dc denotes a width of the recessed portion 411. A depth dp denotes a height (a length in the Z axis direction) of the bottom portion 4112, i.e., a height from the bottom portion 4112 to the surface of the non-pattern area 42.

The projecting portion 412 includes an apex portion 4121 (a portion hatched by vertical lines) and a second inclined surface 4122 (a portion hatched by dots), and is formed in a torus shape. The torus is a surface of revolution obtained by revolving a circumference. A torus width Dr denotes a width in the radius direction of a torus surface portion of the projecting portion 412. A height h denotes a height (a length in the Z axis direction) of an apex portion 4121 from the surface of the non-pattern area 42.

A dot width W denotes the width of the entire dot portion 410. The first inclined surface 4111 and the second inclined surface 4122 constitute a continuous surface. The continuous surface means a surface made of the same material and connected without steps.

As illustrated in Figs. 39A and 39B, the surfaces constituting the recessed portion 411 and the projecting portion 412 are formed with very small uneven portions 413 and are rough surfaces. The uneven portion 413 is an example of an uneven portion including a recessed portion and a projecting portion smaller than a predetermined shape. The uneven portion 413 includes a recessed portion and a projecting portion of a width smaller than a dot width of the dot portion 410, and typically includes a recessed portion and a projecting portion of a width of about 1 $\mu$m to 10 $\mu$m.

As illustrated in Fig. 39A, in areas between the dot portions 410, chips generated during processing of the dot portions 410 are scattered, and these chips also roughen the surface. Due to the rough surface caused by the uneven portions 413 and the chips, the pattern area 43 has a higher surface roughness than the non-pattern area 42.

For example, the dot portion 410 can be formed by emitting a laser light to the substrate 1a to denature the surface of the substrate 1a. A single dot portion 410 can be formed by focusing the laser light onto a single point on the substrate 1a. Multiple dot portions 410 are formed by two-dimensionally scanning the laser light. Alternatively, multiple dot portions 410 may be formed by multiple laser lights emitted from multiple arrayed laser light sources. Still alternatively, an enlarged laser beam may be emitted to a mask member having multiple light transmission apertures corresponding to the positions of the respective dot portions 410, so that multiple dot portions 410 may be formed in a single exposure with a group of multiple transmission laser lights having been transmitted through the light transmission apertures of the mask member.

Various kinds of laser light sources such as solid-state lasers, gas lasers, semiconductor lasers, and the like can be used as a laser light source for emitting a laser light. The laser light source is preferably capable of generating pulses of, e.g., picoseconds to nanoseconds. Examples of solid-state lasers include a YAG laser, a titanium sapphire laser, and the like. Examples of gas lasers include an argon laser, a helium neon laser, a carbon dioxide gas laser, and the like. The semiconductor lasers are also preferable because the semiconductor lasers are small in size. A fiber laser, which is a type of a solid-state laser that uses an optical fiber as an amplification medium, is the most suitable light source because of the height of the peak energy and because of its small size.

<Example of propagation of light incident on the container 1>

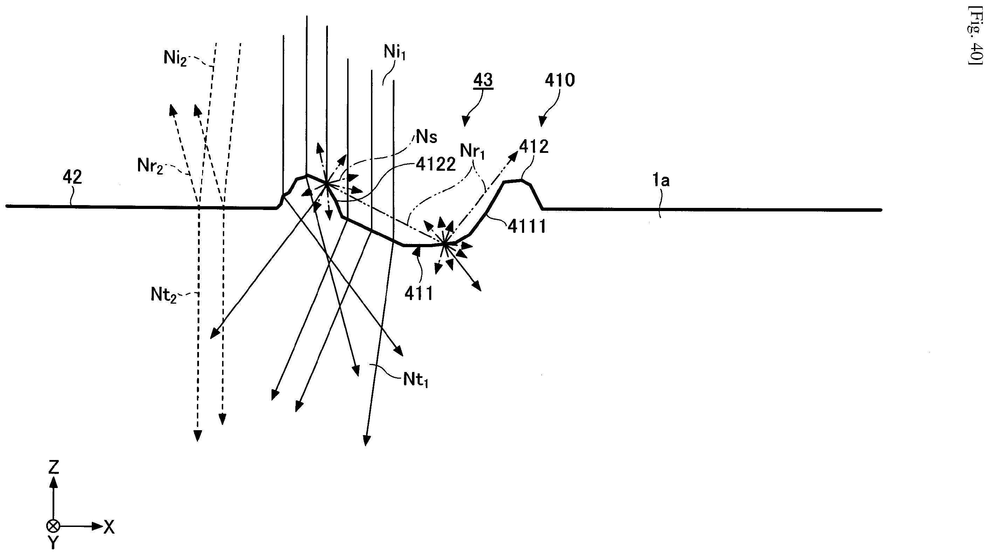

Next, propagation of light incident upon the container 1 is explained with reference to Fig. 40. Fig. 40 is a cross sectional view illustrating the dot portion 410 for explaining an example of propagation of light incident upon the container 1.

An incident light ray Ni1 indicated by an arrow of a solid line in Fig. 40 represents a visible light ray incident upon the pattern area 43 of the substrate 1a where the dot portion 410 is formed.

A portion of the incident light ray Ni1 incident on the pattern area 43 is regularly reflected by the surface of the dot portion 410, another portion thereof is diffusely reflected by and/or diffusely transmitted through the surface of the dot portion 410, and still another portion thereof is transmitted to the inside of the substrate 1a where the dot portion 410 is formed.

A reflected light ray Nr1 represented by an arrow of a dashed double-dotted line denotes a regularly reflected light reflected by the surface of the dot portion 410. A diffused light ray Ns indicated by an arrow of a dashed dotted line denotes a diffusely reflected light and a diffusely transmitted light at the surface of the dot portion 410. A transmitted light ray Nt1 indicated by an arrow of a solid line denotes a light transmitted into the inside of the substrate 1a.

An incident light ray Ni2 indicated by an arrow of a broken line denotes a visible light ray incident on the non-pattern area 42 of the substrate 1a. A reflected light ray Nr2 indicated by an arrow of a broken line denotes a regularly reflected light reflected on the surface of the substrate 1a in the non-pattern area 42. A transmitted light ray Nt2 indicated by an arrow of a broken line denotes a transmitted light transmitted to the inside of the substrate 1a.

In the pattern area 43, the roughness of the surface of the dot portion 410 is higher than the roughness of the surface of the non-pattern area 42. Therefore, the light dispersion property for the incident light ray is high, and much diffused light is generated. Also, the dot portion 410 includes the recessed portion 411 and the projecting portion 412, and accordingly, the surface area along the shape of the recessed portion 411 and the projecting portion 412 increases, so that the diffused light increases. In addition, the reflected light ray Nr1 regularly reflected by the second inclined surface 4122 of the projecting portion 412 is reflected in a manner of multireflection such as diffuse reflection by the first inclined surface 4111 of the recessed portion 411, so that the diffused light is further generated.

In the pattern area 43 in which the dot portions 410 are formed, at least one of the light transmittance and the light reflectance is different from that in the non-pattern area 42 due to the large amount of diffused light generated as described above. In this case, the light transmittance means a ratio of transmitted light to incident light, and the light reflectance means a ratio of reflected light to incident light.

The light transmittance and the light reflectance are different according to the material constituting the substrate 1a. However, for example, when the light transmittance of the material constituting the substrate 1a is high, the light transmittance in the pattern area 43 is lower than the light transmittance in the non-pattern area 42, and the light reflectance in the pattern area 43 is equal to or more than the light reflectance in the non-pattern area 42. When the light reflectance of the material constituting the substrate 1a is high, the light reflectance in the pattern area 43 is lower than the light reflectance in the non-pattern area 42, and the light transmittance in the pattern area 43 is equal to or more than the light transmittance in the non-pattern area 42. In some cases, both of the light reflectance and the light transmittance in the pattern area 43 may be smaller than the light reflectance and the light transmittance in the non-pattern area 42.

<Example of configuration of measurement of light transmittance>

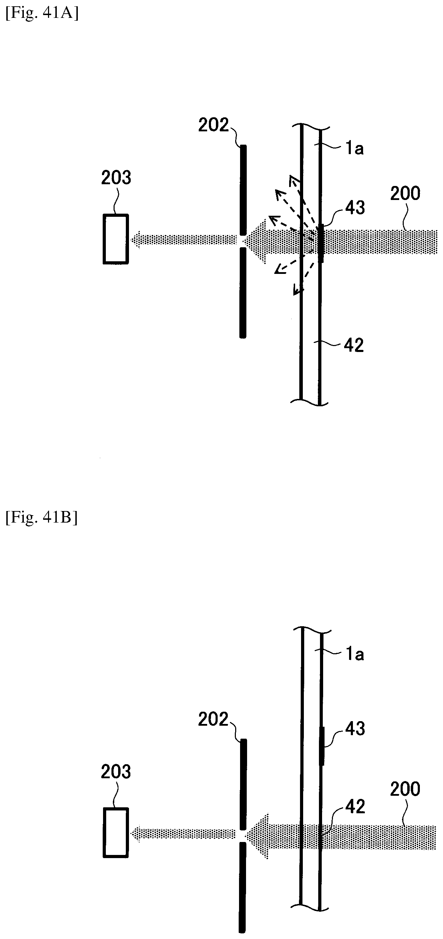

In this case, Fig. 41A is a drawing illustrating an example of configuration of measurement of a light transmittance in the pattern area 43. Fig. 41B is a drawing illustrating an example of configuration of measurement of a light transmittance in the non-pattern area 42.

In the configuration of Figs. 41A and 41B, a reference light 200 emitted from the light source is incident upon the substrate 1a, and light having passed through the aperture 202 from among the light having passed through the substrate 1a is received by a photodetector 203.

For example, the reference light 200 may be a laser light with a wavelength of about 633 nm emitted from a helium neon (He-Ne) laser light source. However, the reference light is not particularly limited, and may be other light sources such as a semiconductor laser, a light emitting diode (LD) light source, a halogen lamp, and the like.

The aperture 202 is a member for defining the size of area of transmitted light. The aperture 202 may be a metal pinhole or a rectangular slit with a predetermined aperture area, or a mask member with a part of a metal thin film deposited on a glass substrate being removed to make an aperture. However, the aperture 202 is not particularly limited as long as the aperture 202 can function as an aperture, and the aperture 202 may be made of other members.

The photodetector 203 is a device for converting the light intensity of the received light into an electric signal and outputs the electric signal. For example, the photodetector 203 may be an optical power meter made by HIOKI E.E. Corporation, Advantest Corporation, Ophir Optronics Solutions Ltd., and the like. However, the photodetector 203 is not limited thereto. The photodetector 203 may be a photodetector such as a photomultiplier tube other than an optical power meter as long as the light intensity can be detected.

In the measurement of the light transmittance, first, without the substrate 1a, a light intensity It0 of the reference light 200 is measured with the photodetector 203 and recorded.

In order to measure the light transmittance of the pattern area 43, as illustrated in Fig. 41A, with the substrate 1a arranged so as to allow the reference light 200 to pass through the pattern area 43, a light intensity It1 of the reference light 200 having passed through the pattern area 43 is measured. A light transmittance Tr1 of the pattern area 43 is obtained as a ratio It1/It0.

In order to measure the light transmittance of the non-pattern area 42, as illustrated in Fig. 41B, with the substrate 1a arranged so as to allow the reference light 200 to pass through the non-pattern area 42, the light intensity It2 of the reference light 200 having passed through the non-pattern area 42 is measured. A light transmittance Tr2 of the non-pattern area 42 is obtained as a ratio It2/It0.

In this manner, the light transmittance Tr1 of the pattern area 43 and the light transmittance Tr2 of the non-pattern area 42 can be measured.

<Example of configuration of measurement of light reflectance>

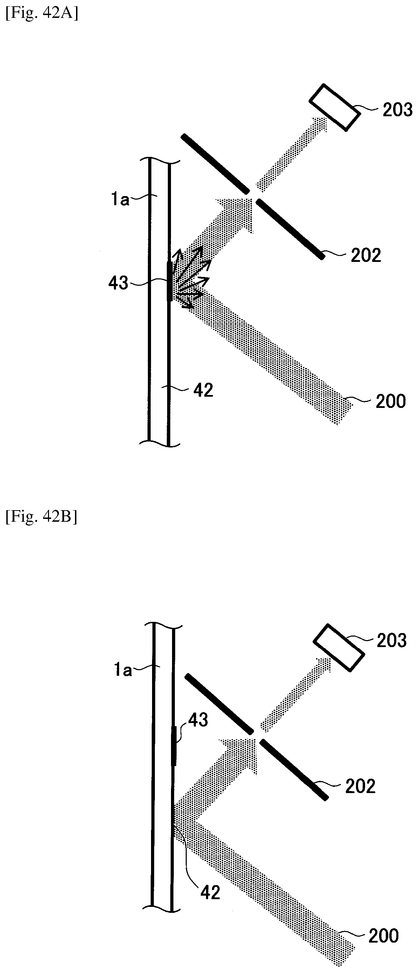

Next, Fig. 42A is a drawing illustrating an example of configuration of measurement of a light reflectance in the pattern area 43. Fig. 42B is a drawing illustrating an example of configuration of measurement of a light reflectance in the non-pattern area 42.

In the configuration of Figs. 42A and 42B, a reference light 200 emitted from the light source is incident upon the substrate 1a, and light having passed through the aperture 202 from among the light reflected by the substrate 1a is received by the photodetector 203.

The reference light 200, the aperture 202, and the photodetector 203 are similar to those explained with reference to Figs. 41A and 41B. Accordingly, repeated explanation thereabout is omitted.

First, with a reflection reference surface being provided instead of the substrate 1a, the photodetector 203 measures and records the light intensity Ir0 of the reference light 200. The reflection reference surface may be any given reflection surface such as a planar mirror, as long as the same reflection reference surface is used for both of the measurement of the light reflectance of the pattern area 43 and the measurement of the light reflectance of the non-pattern area 42.

In order to measure the light reflectance of the pattern area 43, as illustrated in Fig. 42A, with the substrate 1a arranged so that the reference light 200 is reflected by the pattern area 43, a light intensity Ir1 of the reference light 200 reflected by the pattern area 43 is measured. A light reflectance Re1 of the pattern area 43 is obtained as a ratio Ir1/I0.

In order to measure the light reflectance of the non-pattern area 42, as illustrated in Fig. 42B, with the substrate 1a arranged so that the reference light 200 is reflected by the non-pattern area 42, a light intensity Ir2 of the reference light 200 reflected by the non-pattern area 42 is measured. A light reflectance Re2 of the non-pattern area 42 is obtained as a ratio Ir2/I0.

In this manner, the light reflectance Re1 of the pattern area 43 and the light reflectance Re2 of the non-pattern area 42 can be measured.

<Various modified embodiments of predetermined shapes according to the sixth embodiment>

In this case, the predetermined shape according to the present embodiment is not limited to the dot portions 410 explained above, and may be changed in various manners by changing the shapes of the recessed portion or the projecting portion or a combination thereof. Hereinafter, various shapes are explained. In the following explanations, constituent elements similar to the constituent elements explained above are denoted with the same reference numerals or symbols, and repeated explanation thereabout is omitted.

<First modified embodiment of sixth embodiment>

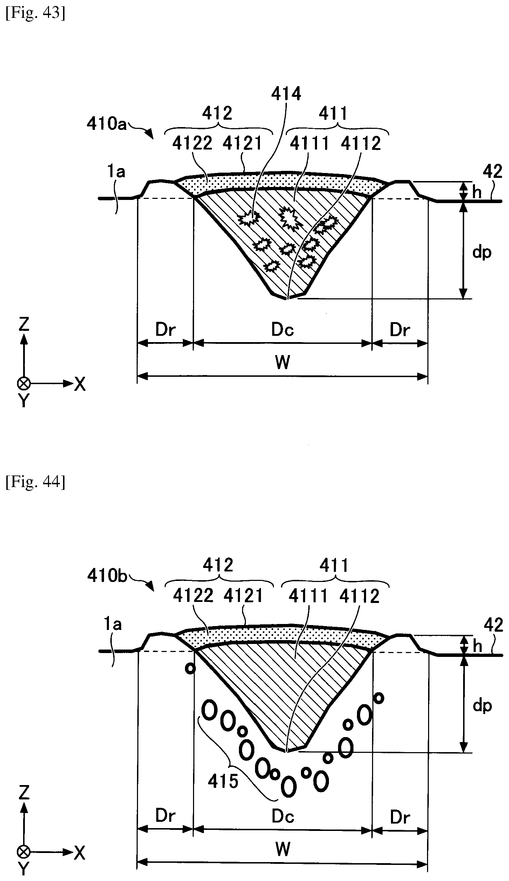

First, Fig. 43 is a cross sectional view of a dot portion 410a for explaining an example of configuration of the dot portion 410a according to the first modified embodiment of the sixth embodiment. As illustrated in Fig. 43, the dot portion 410a includes granular body portions 414 provided in the first inclined surface 4111. The granular body portion 414 is a portion formed so that granular bodies (i.e., particles) are partly buried in the first inclined surface 4111. The granular body portion 414 includes granular bodies with widths smaller than the dot width W of the dot portion 410b, and typically includes granular bodies with widths of about 1 μm to 10 μm.

For example, the granular body portion 414 is formed by dissolving a portion of the substrate of the recessed portion 411 with an emission of a laser light and the like, making the dissolved portion into granular bodies (i.e., particles) when the dissolved portion are solidified again on the substrate, and causing the solidified portion to attach to the first inclined surface 4111 again. With the granular body portions 414, the surface roughness of the dot portion 410a further increases, and accordingly, the light dispersion property further increases. As a result, the contrast of the pattern constituted by the dot portion 410a can be increased.

In the dot portion 410a as illustrated in Fig. 43, for example, the granular body portions 414 are provided in the first inclined surface 4111, but the dot portion 410a is not limited thereto. As long as the granular body portions 414 are provided on the surface of the dot portion 410a, the granular body portions 414 can be applied to other portions such as the bottom portion 4112, the second inclined surface 4122, the apex portion 4121, and the like.

<Second modified embodiment of sixth embodiment>

Next, Fig. 44 is a cross sectional view for explaining an example of configuration of a dot portion 410b according to the second modified embodiment of the sixth embodiment. As illustrated in Fig. 44, the dot portion 410b includes a void portion 415 provided under the surface of the recessed portion 411.

The void portion 415 includes voids with widths smaller than the dot width W of the dot portion 410b, and typically includes voids with widths of about 1 $\mu$m to 10 $\mu$m. The void portion 415 is filled with a gas such as air.

In order to form the void portion 415, in a gas environment of sparingly soluble gases such as nitrogen ($N_2$) gas and carbon dioxide ($CO_2$) gas, a crystalline polymer such as polypropylene, high-density polyethylene (HDPE), or the like is melted with an emission of a laser light and the like and is cooled from the molten state, and the pressure is reduced. The crystalline polymer foams with crystallization, so that the void portion 415 can be formed under the surface of the dot portion 410b.

Alternatively, in particular, when the substrate is transparent, the transparent substrate is less likely to absorb a laser light of which the main wavelength is in a visible light range, and therefore, a laser light with a high power is required for the transparent substrate. However, plastic substrates and the like generally absorb light in a range other than the visible light range, such as light in an ultraviolet range, and accordingly, it is preferable to use a laser light of which the main wavelength is in the ultraviolet range.

Also, an absorbent (i.e., a converting material) that absorbs a received laser light and converts the light energy into heat energy may be applied to the substrate in advance, and heating control may be performed to form the recessed portion or the projecting portion on the substrate with the heat energy converted by the absorbent.

Also, a pattern may be formed on the surface of the substrate by a member containing a light-absorbing material that generates heat by absorbing light according to the emission wavelength (for example, the pattern may be printed with inkjet), and a laser light including the above wavelength may be emitted onto the pattern, so that a recessed portion or a projecting portion and both of the recessed portion and the projecting portion are generated by ablation or heat processing with the use of the heat generation effect of the light-absorbing material.

Also, with heat generated by an absorbent that has been irradiated with a laser, a portion that has received the heat may be denatured to produce a foaming body having a very small foam structure in the substrate. In other words, with the presence of the above heat absorber, a portion of the substrate can be vaporized and foams can be made with $CO_2$ and the like with thermal decomposition by emitting a laser for a very short period of time to cause the portion of the substrate to instantly reach a temperature above the thermal decomposition temperature of the material. For example, in a case of PET, a very limited area on the substrate to which the laser is focused is preferably heated to a temperature of 400 degrees Celsius or more.

Also, by melting the substrate by adjusting an emission power to such a level as to cause the substrate to reach a temperature beyond the melting temperature of the substrate but not reach the thermal decomposition temperature, uneven portions of sizes smaller than the dot width can be formed on the surface of a recessed or protruding portion or on the surfaces of recessed and projecting portions. For example, the temperature may be heated to a temperature higher than the melting point of PET, i.e., about 260 degrees Celsius.

In addition, the substrate can be crystallized by slowly cooling the substrate after the temperature of the substrate reaches a melting temperature or more.

The above has a great effect on highly transparent resin substrates such as, for example, PET bottles. Desired dot portions can be formed even on a substrate that transmits a portion of or almost all of the laser light. In addition, emission of highpower laser is not always required, and therefore, this contributes to simplification and energy saving of the apparatus, or to improvements in speed such as the increase in the speed of generating dots.

Instead of the surface scattering of the dot portion 410b, the light incident upon the void portion 415 once enters the inside of the substrate to be scattered by the voids due to internal scattering. Accordingly, a larger amount of light scatters than an amount of light scattered by the surface scattering, and the light dispersion property further improves, so that the contrast of the pattern constituted by the dot portion 410b can be further increased.

Although Fig. 44 illustrates the dot portion 410b in which the void portion 415 is formed under the surface of the recessed portion 411, the dot portion 410b is not limited thereto. The void portion 415 may also be formed under the surface of the projecting portion 412.

<Third modified embodiment of sixth embodiment>

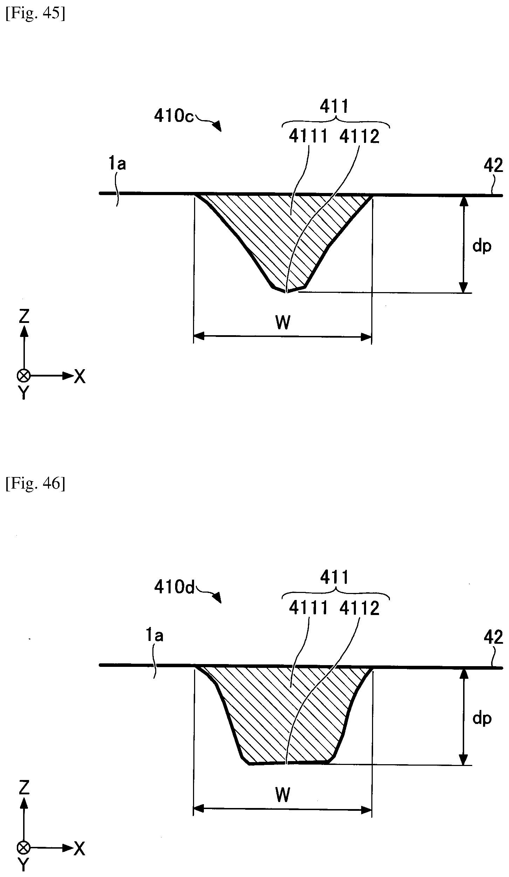

Next, Fig. 45 is a cross sectional view for explaining an example of configuration of a dot portion 410c according to the third modified embodiment of the sixth embodiment. As illustrated in Fig. 45, the dot portion 410c includes only the recessed portion 411 and does not include any projecting portion. The dot width W of the dot portion 410c is equal to the width of the recessed portion 411. When the dot width W is larger than the depth dp, the dot portion 410c can be easily processed, which is more preferable. The dot portion 410c can be formed by partly vaporizing a portion of the substrate with emission of the laser light.

<Fourth modified embodiment of sixth embodiment>

Next, Fig. 46 is a cross sectional view for explaining an example of configuration of a dot portion 410d according to the fourth modified embodiment of the sixth embodiment. As illustrated in Fig. 46, the dot portion 410d includes a recessed portion 411, and the bottom portion 4112 of the recessed portion 411 is formed to be flat. In this case, the term "flat" means that the bottom portion 4112 is flat (i.e. characterized by no significant increase or decrease in height) across the surface of the non-pattern area 42 of the substrate 1a. However, the bottom portion 4112 is not required to have a high degree of flatness, and the bottom portion 4112 may have small unevenness to such a degree that can be recognized as a surface roughness, or may include swelling of the surface to such a degree that a peak-to-peak (P-P) value is about the same as the surface roughness Ra.

By flattening the bottom portion 4112, the intensity distribution of the diffused light is uniformized on the bottom portion 4112, and the uniformity of the observed pattern with diffused light can be improved.

This flat shape can be formed by making the intensity distribution of the laser light emitted to the substrate into a top hat shape by an emission optical system having an aspherical surface. For example, although Fig. 46 illustrates the configuration in which the dot portion 410d contains only the recessed portion 411, a projection portion around the recessed portion 411 may be provided. Further, the dot width W of the dot portion 410e is preferably larger than the depth dp to make the recessed portion 411 shallower, because the uniformity of the pattern is improved.

<Fifth modified embodiment of sixth embodiment>

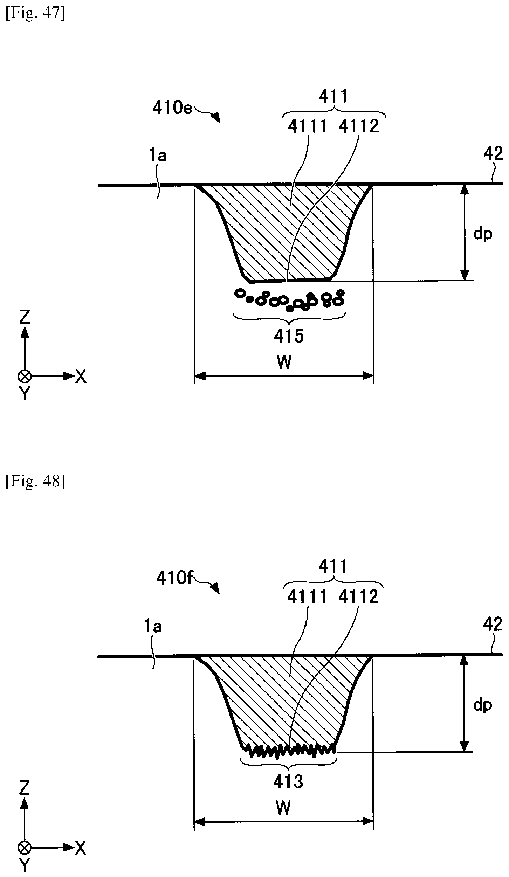

Next, Fig. 47 is a cross sectional view for explaining an example of configuration of a dot portion 410e according to the fifth modified embodiment of the sixth embodiment. As illustrated in Fig. 47, the dot portion 410e includes a recessed portion 411, and the bottom portion 4112 of the recessed portion 411 is formed to be flat. A void portion 415 is provided under the surface of the bottom portion 4112.

By flattening the bottom portion 4112, the intensity distribution of the diffused light can be uniformized on the bottom portion 4112, and the uniformity of the observed pattern with diffused light can be improved. In addition, the light dispersion property is improved by providing the void portion 415, so that the contrast of the pattern constituted by the dot portion 410e can be improved.

For example, although Fig. 47 illustrates the configuration in which the dot portion 410e contains only the recessed portion 411, a projection portion around the recessed portion 411 may be provided. Further, the dot width W of the dot portion 410e is preferably larger than the depth dp to make the recessed portion 411 shallower, because the uniformity of the pattern is improved.

<Sixth modified embodiment of sixth embodiment>

Next, Fig. 48 is a cross sectional view for explaining an example of configuration of a dot portion 410f according to the sixth modified embodiment of the sixth embodiment. As illustrated in Fig. 48, the dot portion 410f includes a recessed portion 411, and the bottom portion 4112 of the recessed portion 411 is formed to be flat. The uneven portions 413 are provided on the surface of the bottom portion 4112.

By causing the bottom portion 4112 to be approximately flat, the intensity distribution of the diffused light is uniformized on the bottom portion 4112, and the uniformity of the observed pattern with diffused light can be improved. In addition, by providing the uneven portions 413 to improve the light dispersion property, the contrast of the pattern constituted by the dot portion 410f can be increased.

For example, although Fig. 48 illustrates the configuration in which the dot portion 410f contains only the recessed portion 411, a projection portion around the recessed portion 411 may be provided. Further, the dot width W of the dot portion 410f is preferably larger than the depth dp to make the recessed portion 411 shallower, because the uniformity of the pattern is improved.

<Seventh modified embodiment of sixth embodiment>

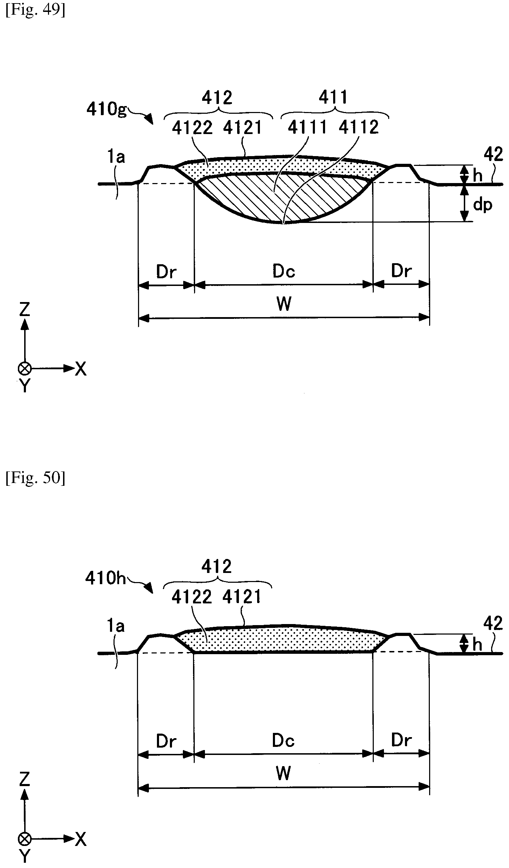

Next, Fig. 49 is a cross sectional view for explaining an example of configuration of a dot portion 410g according to the seventh modified embodiment of the sixth embodiment. As illustrated in Fig. 49, the dot portion 410g includes a recessed portion 411 and a projecting portion 412, and the depth dp of the recessed portion 411 is substantially equal to or more than the height h of the projecting portion 412. In other words, a difference in the height between the bottom portion 4112 of the recessed portion 411 and the non-pattern area 42 is more than a difference in the height between the apex portion 4121 of the projecting portion 412 and the non-pattern area 42. Such a shape can be formed by controlling the depth dp of the recessed portion 411 and the height h of the projecting portion 412 by adjusting the emission time of the laser light emitted to the substrate.

With this configuration, it is not necessary to increase the aspect ratio of the recessed portion 411, so that the dot portion 410g can be formed more easily.

<Eighth modified embodiment of sixth embodiment>

Next, Fig. 50 is a cross sectional view for explaining an example of configuration of a dot portion 410h according to the eighth modified embodiment of the sixth embodiment. As illustrated in Fig. 50, the dot portion 410h includes a projecting portion 412 but does not include any recessed portion. The projecting portion 412 is formed in a shape of a torus. The projecting portion 412 of the dot portion 410h is formed by emitting a laser light to a portion of the substrate corresponding to the projecting portion 412 to raise the surface of the substrate with bubbles in the substrate.

According to the configuration of the dot portion 410h, the types of predetermined shapes can be increased, and the expression of the pattern constituted by the predetermined shape can be more diversified.

<Ninth modified embodiment of sixth embodiment>

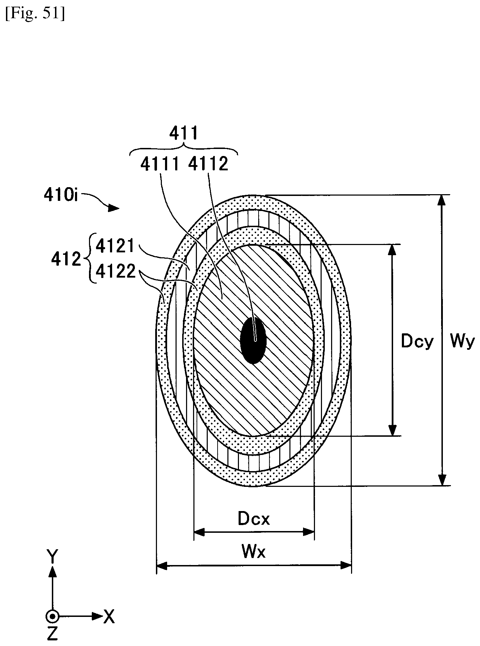

Next, Fig. 51 is a plan view illustrating a dot portion 410i for explaining an example of configuration of the dot portion 410i according to the ninth modified embodiment of the sixth embodiment. As illustrated in Fig. 51, the dot portion 410i includes a recessed portion 411 and a projecting portion 412, and the recessed portion 411 has a substantially elliptical shape in the plan view. The dot portion 410i can be formed by irradiating the substrate with a laser light of which the cross-sectional shape is shaped into a substantially elliptical shape.

In Fig. 51, a recessed portion width Dcx denotes a width of the recessed portion 411 in the X axis direction, and a recessed portion width Dcy denotes a width of the recessed portion 411 in the Y axis direction. A dot width Wx denotes a width of the dot portion 410 in the X axis direction. A dot width Wy denotes a width of the dot portion 410 in the Y axis direction.

With the configuration of the dot portion 410i, the types of predetermined shapes can be increased, and the expression of the pattern constituted by the predetermined shape can be more diversified.

<Tenth modified embodiment of sixth embodiment>

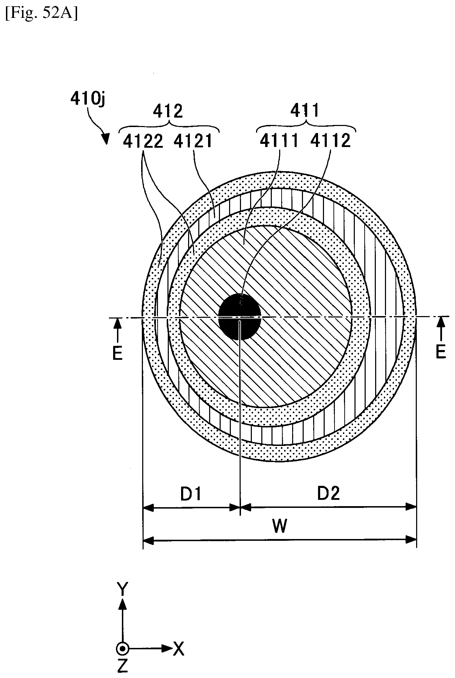

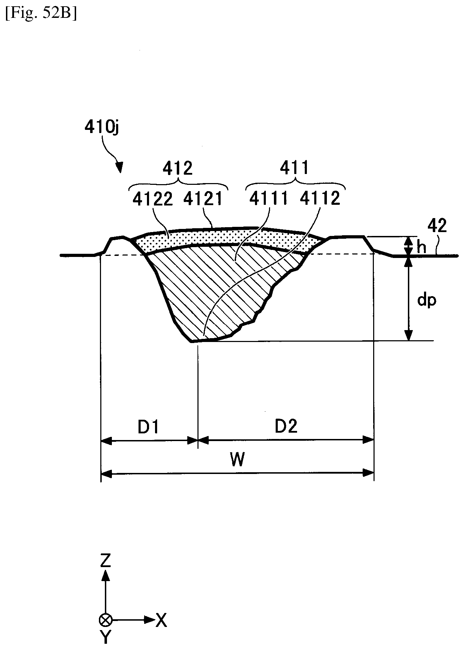

Next, Fig. 52A is a plan view for explaining an example of configuration of a dot portion 410j according to a tenth modified embodiment of the sixth embodiment. Fig. 52B is a cross sectional view taken along a long dashed short dashed line E-E as seen in the direction of the arrows E of Fig. 52A. As illustrated in Figs. 52A and 52B, the dot portion 410j includes a recessed portion 411 and a projecting portion 412, and the recessed portion 411 has a substantially eccentric curved surface shape. The eccentric curved surface shape of the recessed portion 411 is a shape of a bowl of which the center position is shifted from the center position of the dot portion 410j.

In the example as illustrated in Fig. 52, the position of the bottom portion 4112 corresponding to the center of the recessed portion 411 is shifted in the X axis negative direction with respect to the center position of the dot portion 410j, so that the shape of the bowl is made eccentric. The dot portion 410j can be formed by emitting laser light with an inclination with respect to the substrate.

In Fig. 52, a width D1 denotes a width from the center position of the dot portion 410j to an end portion of the dot portion 410j in the X axis negative direction, a width D2 denotes a width from the center position of the dot portion 410j to an end portion of the dot portion 410j in the X axis positive direction.

According to the configuration of the dot portion 410j, the types of predetermined shapes can be increased, and the expression of the pattern constituted by the predetermined shape can be more diversified.

<Eleventh modified embodiment of sixth embodiment>

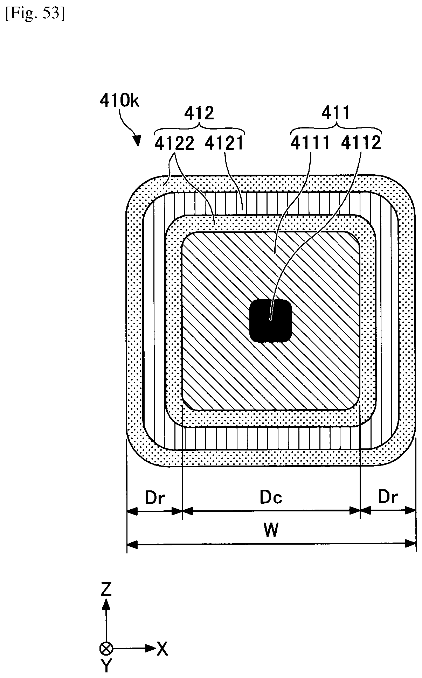

Next, Fig. 53 is a plan view illustrating a dot portion 410k for explaining an example of configuration of the dot portion 410k according to the eleventh modified embodiment of the sixth embodiment. As illustrated in Fig. 53, the dot portion 410k includes a recessed portion 411 and a projecting portion 412, and the recessed portion 411 has a substantially rectangular shape in the plan view. The dot portion 410k can be formed by irradiating the substrate with a laser light of which the cross-sectional shape is shaped into a substantially rectangular shape. The shaping to make a substantially rectangular shape can be performed by using a mask member or the like having a rectangular aperture.

According to the configuration of the dot portion 410k, the types of predetermined shapes can be increased, and the expression of the pattern constituted by the predetermined shape can be more diversified.

<Twelfth modified embodiment of sixth embodiment>

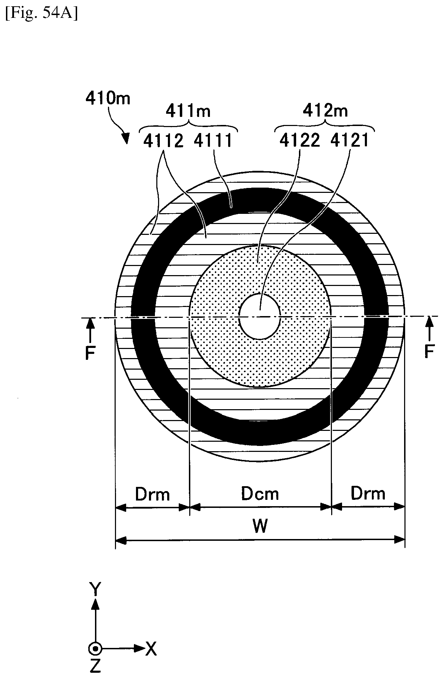

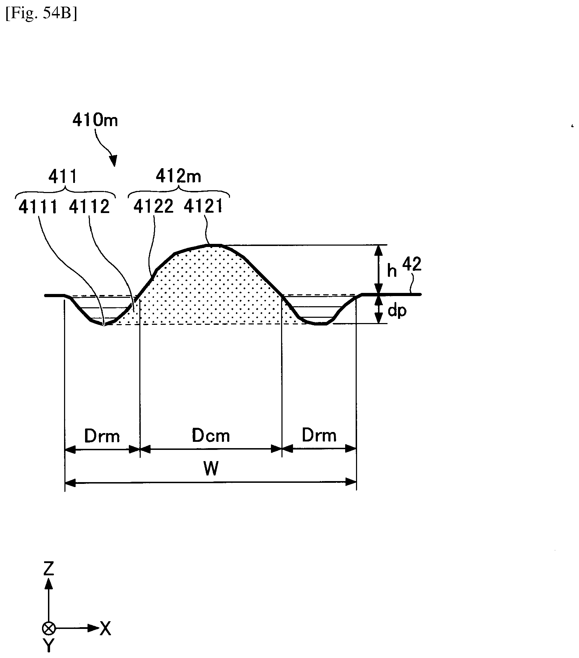

Next, Fig. 54A is a plan view for explaining an example of configuration of a dot portion 410m according to a twelfth modified embodiment of the sixth embodiment. Fig. 54B is a cross sectional view taken along a long dashed short dashed line F-F as seen in the direction of the arrows F of Fig. 54A. As illustrated in Figs. 54A and 54B, the dot portion 410m includes a recessed portion 411m and a projecting portion 412m. The recessed portion 411m has a recessed surface in a shape of a torus. The projecting portion 412m has an inverted-bowl-shaped projecting surface. The dot portion 410m can be formed by irradiating the substrate with a laser light of which the cross-sectional shape is shaped into a substantially torus shape.

In Figs. 54A and 54B, a width Drm denotes a width of the torus surface of the recessed portion 411m. A width Dcm denotes a width of the surface of the inverted-bowl shape of the projecting portion 412m.

According to the configuration of the dot portion 410m, the types of predetermined shapes can be increased, and the expression of the pattern constituted by the predetermined shape can be more diversified.

<Thirteenth modified embodiment of sixth embodiment>

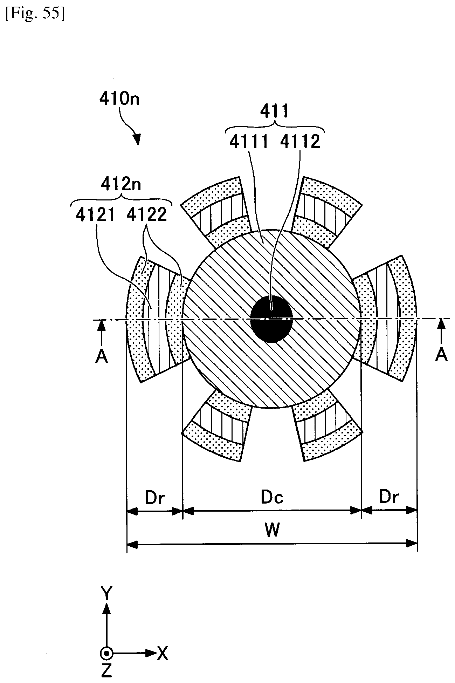

Next, Fig. 55 is a plan view illustrating a dot portion 410n for explaining an example of configuration of the dot portion 410 according to the thirteenth modified embodiment of the sixth embodiment. As illustrated in Fig. 55, the dot portion 410n includes a projecting portion 412n, and the projecting portion 412n has a projecting surface of a torus shape a part of which is missing. The dot portion 410n can be formed by irradiating the substrate with a laser light of which the cross-sectional shape is shaped using a star-shaped mask member and the like and by adjusting the emission time.

According to the configuration of the dot portion 410n, the types of predetermined shapes can be increased, and the expression of the pattern constituted by the predetermined shape can be more diversified.

<Fourteenth modified embodiment of sixth embodiment>

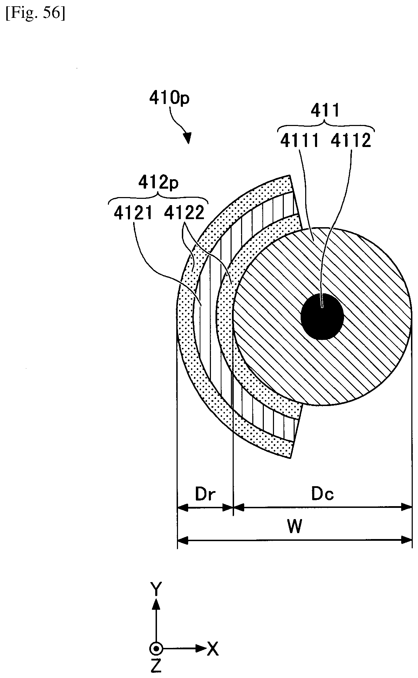

Next, Fig. 56 is a plan view illustrating a dot portion 410p for explaining an example of configuration of the dot portion 410p according to the fourteenth modified embodiment of the sixth embodiment. As illustrated in Fig. 56, the dot portion 410p includes a projecting portion 412, and the projecting portion 412p includes a projecting surface in a shape of an approximate half torus. The dot portion 410p can be formed by irradiating the substrate with a laser light of which the cross-sectional shape is shaped using a mask member in a shape of an approximate half torus and the like and by adjusting the emission angle and the emission time.

According to the configuration of the dot portion 410p, the types of predetermined shapes can be increased, and the expression of the pattern constituted by the predetermined shape can be more diversified.

<Fifteenth modified embodiment of sixth embodiment>

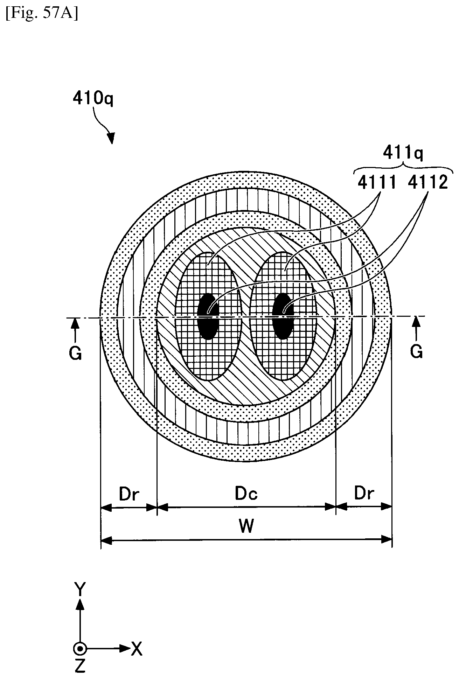

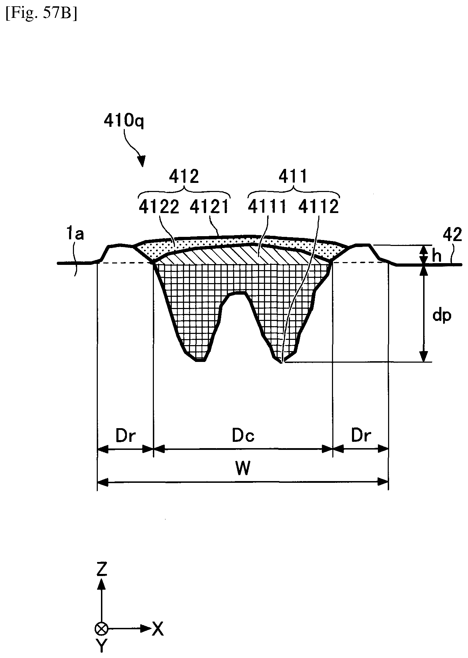

Next, Fig. 57A is a plan view illustrating a dot portion 410q for explaining an example of configuration of the dot portion 410q according to the fifteenth modified embodiment of the sixth embodiment. Fig. 57B is a cross sectional view taken along a long dashed short dashed line G-G of Fig. 57A. As illustrated in Figs. 57A and 57B, the dot portion 410q includes a recessed portion 411q, and the recessed portion 411q includes two recessed surface shapes. The dot portion 410q can be formed by irradiating the substrate with a laser light of which the cross-sectional shape is shaped by using a mask member and the like for obtaining two laser beams.

According to the configuration of the dot portion 410q, the types of predetermined shapes can be increased, and the expression of the pattern constituted by the predetermined shape can be more diversified.

<Example>

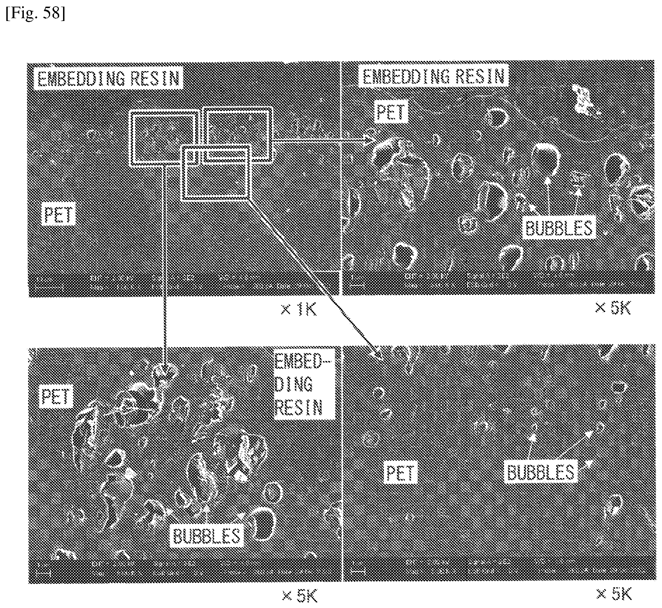

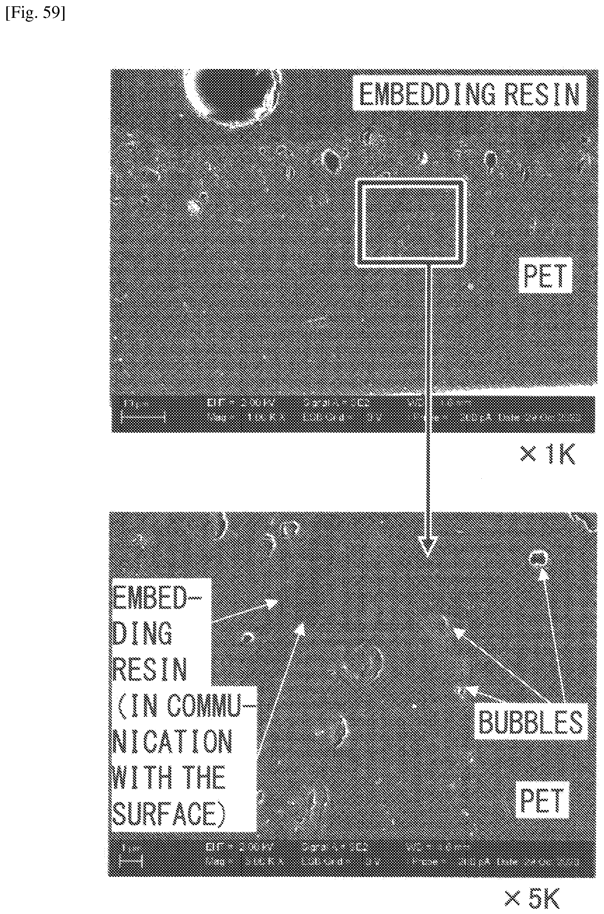

Hereinafter, an example of a substrate formed with a pattern according to the sixth embodiment is explained. In the Example, with an ultraviolet (UV) picosecond-pulsed laser with a wavelength of 355 nm, a pattern was printed on a surface of a PET bottle with a substrate thickness t of 0.45 mm (i.e., 450 $\mu$m). Fig. 58 illustrates micrographs showing a cross section of the substrate taken with a scanning electron microscope (SEM). Fig. 59 illustrates micrographs showing a cross section of a portion of the substrate formed with a recess. As illustrated in Fig. 58 and Fig. 59, in a range of a depth of about 30 $\mu$m from the surface, there were bubbles with distorted shapes with sizes of several hundred nanometers to several micrometers, and a communication hole in communication with only one of the surfaces was also observed.

In the Example, the substrate formed with the pattern according to the sixth embodiment (hereinafter referred to as a "printed sample") to be observed with the SEM was fixed with a resin (embedding resin) and was sliced to a predetermined thickness. The cross sections obtained by slicing the substrate fixed with the resin are illustrated in Fig. 58 and Fig. 59.

In Fig. 58 and Fig. 59, the areas filled with the embedding resin correspond to the air layer of the substrate of the actually used PET bottle. As illustrated in Fig. 58 and Fig. 59, the surface was irregularly formed with protrusions and recesses of about 10 $\mu$m. The protrusions and recesses were formed in a surface portion with a depth of about 20%, preferably a depth of about 10%, of the thickness t=450 $\mu$m of the substrate of the PET bottle. Note that, in the Example, the protrusions and recesses were formed in a surface portion with a depth of about 30 $\mu$m from the surface of the substrate of the PET bottle. In other words, the protrusions and recesses did not penetrate through the substrate. The shapes and the sizes of the bubbles were not uniform. For example, a relatively small bubble had a size of about several tenths of a micrometer, and a relatively large bubble had a size of about several micrometers.

The bubbles were densely formed in this manner, and accordingly, when light enters from the outside into the substrate, the light is scattered by the protrusions and recesses of the substrate, and further, the incident light is scattered by any one of the bubbles before the incident light passes through the substrate, so that the transmittance or the reflectance is changed. When the density of the bubbles is higher, the ratio of light rays to be scattered increases. From a macro perspective, this increases the degree of cloudiness, so that the visibility increases.

In the Example, the protrusions and recesses did not penetrate through the substrate, so that the PET bottle can be used as a container for containing a content. In the Example, the protrusions and recesses were formed only in an area with a depth that is less than half of the thickness of the substrate, so that the PET bottle can ensure a certain level of quality such as the rigidity of the substrate, and the PET bottle can be used as a container. When small protrusions and recesses and fine bubbles explained above are present at a predetermined quantity or more, the recessed portions and the projecting portions formed to expand the size of the surface of the substrate do not have to be formed.

<Effects of the substrate 1a>

The substrate 1a according to the sixth embodiment achieves effects similar to the effects achieved by the substrate 1a (the container 1) according to the first and other embodiments. Accordingly, the effects achieved by the substrate 1a according to the sixth embodiment similar to the effects already explained above are omitted here, and only distinctive effects achieved by the substrate 1a according to the sixth embodiment are hereinafter explained.

In a manner similar to the first embodiment, the use of a carbon dioxide laser ($CO_2$ laser) in the sixth embodiment will reduce the contrast of the pattern and reduce the visibility.

Examples of resins used for the substrate 1a according to the sixth embodiment are similar to the resins explained in the first embodiment. Accordingly, the listing of the examples is omitted here.

In the present embodiment, the light dispersion property is increased, and accordingly, the visibility of the pattern is improved, so that the present embodiment is particularly suitable for application to materials having transparency to visible light. However, the present embodiment can also be applied to a material absorbing visible light and a colored material.

The effects of the dot portions according to the first to fifteenth modified embodiments of the sixth embodiment have already been explained in the above explanation about the modified embodiments, and therefore, repeated explanation thereabout is omitted here.

The configuration of the measurement of the light transmittance and the light reflectance explained in the present embodiment can be applied to the substrates including the dot portions according to the first to fifteenth modified embodiments of the sixth embodiment.

When laser light emission or laser processing is performed using a laser light that does not have a Gaussian distribution, a beam shaper can be used for beam shaping. The beam shaper is an optical component that shapes a Gaussian beam into various beam profiles such as a top-hat beam, a donut beam, a ring beam, a rectangular beam, and the like.

There are various types of beam shapers such as a diffractive optical element (DOE), a homogenizer, and field mapping. By using the DOE, desired beam profiles can be obtained and used for laser light emission or laser processing.

The present application is based on and claims the benefit of priorities of Japanese Priority Application No. 2019-225898 filed on December 13, 2019, Japanese Priority Application No. 2020-081469 filed on May 1, 2020, Japanese Priority Application No. 2020-162355 filed on September 28, 2020, and Japanese Priority Application No. 2020-118779 filed on July 9, 2020.

[Reference Signs List]

1 container
10 cylinder axis
11 character (an example of first pattern)
112 processing image data
1121 pixel
12 straight line (an example of second pattern)
121 outer surface portion (an example of projecting portion)

122 recessed portion

2 laser emission unit (an example of emission unit)

20 processing laser beam

21 laser beam source

22 beam expander

23 scan unit

24 scan lens

25 synchronization detection unit

3 rotation mechanism (example of rotation unit)

4 moving mechanism (example of moving unit)

5 dust collection unit

6 control unit

61 first pattern data input unit

62 second pattern parameter designation unit

621 processing parameter

63 storage unit

631 correspondence table

64 processing data generating unit

641 processing data

65 laser emission control unit

651 light intensity control unit

652 pulse control unit

66 laser scan control unit

67 container rotation control unit

68 container moving control unit

69 dust collection control unit

7 product

8 seal member

9 content

100 production apparatus

101 mouth portion

102 shoulder portion

103 body portion

104 bottom portion

P spacing (an example of a regular interval)

Pd1, Pd2, Pd3, Pd4 spacing

W width

Hp processing depth

Hb non-processed portion depth

t thickness of substrate

D crystallization depth

41 pattern

42 non-pattern area

43 pattern area

410 dot portion

411 recessed portion

412 projecting portion

4111 first inclined surface

4112 bottom portion

4121 apex portion

4122 second inclined surface

200 reference light

202 aperture

203 photodetector

**Claims**

1.  A substrate having a first pattern formed on a surface or in an inside of the substrate, or on the surface and in the inside of the substrate,

    wherein the first pattern is constituted by an aggregate of second patterns,
    **characterised in that**
    the second patterns are formed in uneven shapes including outer surface portions corresponding to projecting portions, and recessed portions, and
    **in that** the difference in the depth between the outer surface portion and the recessed portion is equal to or more than 0.4 $\mu$m.

2.  The substrate according to claim 1, wherein the aggregate of the second patterns diffuses ambient light around the substrate.

3.  The substrate according to claim 1 or 2, wherein the second patterns are formed as changes in a surface geometry, a crystallization state, or a foaming state of the substrate.

4.  The substrate according to any one of claims 1 to 3, wherein the second patterns are disposed at regular intervals.

5.  The substrate according to any one of claims 1 to 4, wherein the substrate is made of biodegradable resin.

6.  The substrate according to any one of claims 1 to 5, wherein a distance between centers of adjacent ones of the second patterns is in the range 0.4 $\mu$m to 130 $\mu$m.

7.  A container formed of the substrate of any one of claims 1 to 6, comprising:

    a mouth portion;
    a shoulder portion connected to the mouth portion;
    a body portion connected to the shoulder portion; and
    a bottom portion connected to the body portion,
    wherein the first pattern is formed on the shoulder portion.

8.  The container according to claim 7, wherein the shoulder portion is inclined with respect to the body portion.

9.  The container according to claim 8, wherein the first pattern of which a width decreases away from the mouth portion is formed on the shoulder portion.

10. A container formed of the substrate of any one of claims 1 to 6, comprising:

    a mouth portion;
    a shoulder portion connected to the mouth portion;
    a body portion connected to the shoulder portion; and
    a bottom portion connected to the body portion,
    wherein the first pattern is formed on the bottom portion.

11. A product comprising:

    the container of any one of claims 7 to 10, and
    a content contained in the container.

12. A production method for producing a substrate having a first pattern formed on a surface or in an inside of the substrate, or on the surface and in the inside of the substrate, the first pattern being constituted by an aggregate of second patterns, the second patterns being formed in uneven shapes including outer surface portions corresponding to projecting portions, and recessed portions, and the difference in the depth between the outer surface portion and the recessed portion being equal to or more than 0.4 $\mu$m,
    the production method comprising:

emitting a laser beam to the substrate;
rotating the substrate around an axis, or linearly moving the substrate; and
controlling emitting of the laser beam to form the second patterns, and controlling rotating of the substrate or controlling moving of the substrate.

**13.** The production method according to claim 12, further comprising:
controlling an intensity of the laser beam.

**Patentansprüche**

**1.** Substrat, das ein erstes Muster aufweist, das auf einer Oberfläche oder in einer Innenseite des Substrats, oder auf der Oberfläche und in der Innenseite des Substrats geformt ist,

wobei das erste Muster durch eine Gesamtheit von zweiten Mustern gebildet wird,
**dadurch gekennzeichnet, dass**
die zweiten Muster in ungleichmäßigen Formen geformt sind, die Außenoberflächenabschnitte, die vorspringenden Abschnitten entsprechen, und vertiefte Abschnitte einschließen, und
dadurch, dass
der Unterschied bei der Tiefe zwischen dem Außenoberflächenabschnitt und dem vertieften Abschnitt gleich oder größer als 0,4 $\mu$m ist.

**2.** Substrat nach Anspruch 1, wobei die Gesamtheit der zweiten Muster Umgebungslicht um das Substrat streut.

**3.** Substrat nach Anspruch 1 oder 2, wobei die zweiten Muster als Veränderungen bei einer Oberflächengeometrie, einem Kristallisationszustand oder einem Aufschäumungszustand des Substrats geformt sind.

**4.** Substrat nach einem der Ansprüche 1 bis 3, wobei die zweiten Muster in regelmäßigen Abständen angeordnet sind.

**5.** Substrat nach einem der Ansprüche 1 bis 4, wobei das Substrat aus biologisch abbaubarem Harz besteht.

**6.** Substrat nach einem der Ansprüche 1 bis 5, wobei eine Entfernung zwischen Mittelpunkten von benachbarten der zweiten Muster in dem Bereich von 0,4 $\mu$m bis 130 $\mu$m liegt.

**7.** Behälter, der aus dem Substrat nach einem der Ansprüche 1 bis 6 geformt ist, wobei er Folgendes umfasst:

einen Mündungsabschnitt,
einen Schulterabschnitt, der mit dem Mündungsabschnitt verbunden ist,
einen Körperabschnitt, der mit dem Schulterabschnitt verbunden ist, und
einen Bodenabschnitt, der mit dem Körperabschnitt verbunden ist,
wobei das erste Muster auf dem Schulterabschnitt geformt ist.

**8.** Behälter nach Anspruch 7, wobei der Schulterabschnitt in Bezug auf den Körperabschnitt geneigt ist.

**9.** Behälter nach Anspruch 8, wobei das erste Muster, von dem eine Breite weg von dem Mündungsabschnitt abnimmt, auf dem Schulterabschnitt geformt ist.

**10.** Behälter, der aus dem Substrat nach einem der Ansprüche 1 bis 6 geformt ist, wobei er Folgendes umfasst:

einen Mündungsabschnitt,
einen Schulterabschnitt, der mit dem Mündungsabschnitt verbunden ist,
einen Körperabschnitt, der mit dem Schulterabschnitt verbunden ist, und
einen Bodenabschnitt, der mit dem Körperabschnitt verbunden ist,
wobei das erste Muster auf dem Bodenabschnitt geformt ist.

**11.** Erzeugnis, das Folgendes umfasst:

den Behälter nach einem der Ansprüche 7 bis 10, und

einen Inhalt, der in dem Behälter enthalten ist.

**12.** Herstellungsverfahren zum Herstellen eines Substrats, das ein erstes Muster aufweist, das auf einer Oberfläche oder in einer Innenseite des Substrats oder auf der Oberfläche und in der Innenseite des Substrats geformt ist, wobei das erste Muster durch eine Gesamtheit von zweiten Mustern gebildet wird, wobei die zweiten Muster in ungleichmäßigen Formen geformt sind, die Außenoberflächenabschnitte, die vorspringenden Abschnitten entsprechen, und vertiefte Abschnitte einschließen, und wobei der Unterschied bei der Tiefe zwischen dem Außenoberflächenabschnitt und dem vertieften Abschnitt gleich oder größer als 0,4 $\mu$m ist,
wobei das Herstellungsverfahren Folgendes umfasst:

Abstrahlen eines Laserstrahls auf das Substrat,
Drehen des Substrats um eine Achse, oder lineares Bewegen des Substrats, und
Steuern des Abstrahlens des Laserstrahls, um die zweiten Muster zu formen, und Steuern des Drehens des Substrats oder Steuern des Bewegens des Substrats.

**13.** Herstellungsverfahren nach Anspruch 12, das ferner Folgendes umfasst:
Steuern einer Intensität des Laserstrahls.

## Revendications

**1.** Substrat, comportant un premier motif formé sur une surface ou à l'intérieur du substrat, ou sur la surface et à l'intérieur du substrat ;

dans lequel le premier motif est constitué par un agrégat de deuxièmes motifs ;
**caractérisé en ce que**
les deuxièmes motifs sont formés dans des formes irrégulières incluant des parties de surface externe correspondant à des parties en saillie, et des parties en retrait, et
**en ce que**
la différence de profondeur entre la partie de surface interne et la partie en retrait est égale ou supérieure à 0,4 $\mu$m.

**2.** Substrat selon la revendication 1, dans lequel l'agrégat des deuxièmes motifs diffuse de la lumière ambiante autour du substrat.

**3.** Substrat selon la revendication 1 ou 2, dans lequel les deuxièmes motifs sont formés en tant que changements dans une géométrie de surface, un état de cristallisation, ou un état de moussage du substrat.

**4.** Substrat selon l'une quelconque des revendications 1 à 3, dans lequel les deuxièmes motifs sont disposés à des intervalles réguliers.

**5.** Substrat selon l'une quelconque des revendications 1 à 4, dans lequel le substrat est composé d'une résine biodégradable.

**6.** Substrat selon l'une quelconque des revendications 1 à 5, dans lequel une distance entre des centres de motifs adjacents des deuxièmes motifs est comprise dans la plage allant de 0,4 $\mu$m à 130 $\mu$m.

**7.** Récipient formé du substrat selon l'une quelconque des revendications 1 à 6, comprenant :

une partie d'embouchure ;
une partie d'épaulement connectée à la partie d'embouchure ;
une partie de corps connectée à la partie d'épaulement ; et
une partie de fond connectée à la partie de corps ;
dans lequel le premier motif est formé sur la partie d'épaulement.

**8.** Récipient selon la revendication, 7, dans lequel la partie d'épaulement est inclinée par rapport à la partie de corps.

**9.** Récipient selon la revendication 8, dans lequel le premier motif, dont une largeur est réduite à l'écart de la partie d'embouchure, est formé sur la partie d'épaulement

**10.** Récipient formé à partir du substrat selon l'une quelconque des revendications 1 à 6, comprenant :

une partie d'embouchure ;
une parte d'épaulement connectée à la partie d'embouchure ;
une partie de corps connectée à la partie d'épaulement ; et
une partie de fond connectée à la partie de corps ;
dans lequel le premier motif est formé sur la partie de fond.

**11.** Produit, comprenant :

le récipient selon l'une quelconque des revendications 7 à 10 ; et
un contenu qui est contenu dans le récipient.

**12.** Procédé de production pour produire un substrat comportant un premier motif formé sur une surface ou à l'intérieur du substrat, ou sur la surface et à l'intérieur du substrat, le premier motif étant constitué par un agrégat de deuxièmes motifs, les deuxièmes motifs étant formés dans des formes irrégulières incluant des parties de surface externe, correspondant à des parties en saillie, et des parties en retrait, et la différence de profondeur entre la partie de surface externe et la partie en retrait étant égale ou supérieur à 0,4 $\mu$m ;
le procédé de production comprenant :

l'émission d'un faisceau laser sur le substrat ;
la rotation du substrat autour d'un axe, ou le déplacement linéaire du substrat ; et
la commande de l'émission du faisceau laser pour former les deuxièmes motifs, et la commande de la rotation du substrat ou la commande du déplacement du substrat.

**13.** Procédé de production selon la revendication 12, comprenant en outre :
la commande d'une intensité du faisceau laser.

[Fig. 1]

[Fig. 2A]

[Fig. 2B]

20a

. . .

1

[Fig. 3]

[Fig. 4]

[Fig. 5]

START

S51 — RECEIVE PATTERN DATA

S52 — DESIGNATE PROCESSING PARAMETERS

S53 — GENERATE PROCESSING DATA

S54 — START SCANNING PROCESSING LASER BEAM

S55 — START ROTATING CONTAINER

S56 — MOVE CONTAINER IN THE Y DIRECTION

S57 — EMIT PROCESSING LASER BEAM

S58 — HAS FIRST PATTERN BEEN FORMED IN PREDETERMINED OR GIVEN AREA OF CONTAINER IN Y DIRECTION?  NO

YES

S59 — STOP ROTATING CONTAINER

S60 — STOP SCANNING OF PROCESSING LASER BEAM

END

[Fig. 6]

611

LABELLESS 612

[Fig. 7]

631

| IDENTIFICATION INFORMATION | TYPE | FILENAME |
|---|---|---|
| 1 | CHARACTERS | Para1 |
| 2 | BAR CODE | Para2 |
| 3 | QR CODE (REGISTERED TRADEMARK) | Para3 |
| 4 | FIGURE | Para4 |
| 5 | PHOTOGRAPH | Para5 |

[Fig. 8]

_621

| ITEMS | PARAMETERS |
|---|---|
| SECOND PATTERN TYPE | STRAIGHT LINE |
| REGULARITY | REGULAR |
| SPACING | 70 $\mu$m |
| THICKNESS (PROCESSING WIDTH) | 50 $\mu$m |
| PROCESSING DEPTH | 10 $\mu$m |

[Fig. 9]

_641

642

[Fig. 10A]

201

Y

[Fig. 10B]

201

Y

[Fig. 10C]

[Fig. 10D]

[Fig. 10E]

201

Y

[Fig. 10F]

201

Y

[Fig. 11A]

[Fig. 11B]

[Fig. 11C]

[Fig. 11D]

[Fig. 12]

[Fig. 13]

EP 4 072 862 B1

[Fig. 14]

EP 4 072 862 B1

[Fig. 15A]

[Fig. 15B]

[Fig. 15C]

[Fig. 15D]

[Fig. 16]

[Fig. 17]

[Fig. 18A]

[Fig. 18B]

LIGHT ◄─────────────────────────► DARK

[Fig. 18C]

LIGHT ◄─────────────────────────► DARK

[Fig. 19]

[Fig. 20]

[Fig. 21]

[Fig. 22]

100b

3

31

5

2

102

20

1b

6

CONTROL UNIT

4

10

X

Y

Z

[Fig. 23]

[Fig. 24]

[Fig. 25A]

[Fig. 25B]

Y

171

[Fig. 25C]

101

102

1c

171

Y ⊗

[Fig. 26]

[Fig. 27]

[Fig. 28]

[Fig. 29A]

[Fig. 29B]

[Fig. 30]

[Fig. 31A]

[Fig. 31B]

[Fig. 32]

[Fig. 33]

[Fig. 34]

[Fig. 35]

[Fig. 36A]

[Fig. 36B]

[Fig. 36C]

[Fig. 36D]

[Fig. 37]

EP 4 072 862 B1

[Fig. 38A]

[Fig. 38B]

[Fig. 39A]

[Fig. 39B]

[Fig. 40]

[Fig. 41A]

[Fig. 41B]

[Fig. 42A]

[Fig. 42B]

[Fig. 43]

[Fig. 44]

[Fig. 45]

[Fig. 46]

[Fig. 47]

[Fig. 48]

[Fig. 49]

[Fig. 50]

[Fig. 51]

EP 4 072 862 B1

[Fig. 52A]

93

[Fig. 52B]

[Fig. 53]

[Fig. 54A]

[Fig. 54B]

[Fig. 55]

[Fig. 56]

[Fig. 57A]

[Fig. 57B]

[Fig. 58]

[Fig. 59]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011011819 A
- WO 2013002987 A1
- US 2015352772 A1
- WO 2013045077 A1
- US 2019056322 A1
- JP 2008073894 A
- JP 2019 A
- JP 225898 A
- JP 2020081469 A
- JP 2020162355 A
- JP 2020118779 A